# EUROPEAN PATENT APPLICATION

(11) **EP 4 657 249 A1**
(43) Date of publication of application: **03.12.2025**
(21) Application number: 24838381.2
(22) Date of filing: 15.04.2024
(51) Int. Cl.: G06F 9/451

(54) **MULTI-DEVICE COLLABORATION METHOD AND SYSTEM**

(30) Priority: 12.07.2023 CN 202310854770; 12.07.2023 CN 202310863185
(71) Applicant: Honor Device Co., Ltd., Shenzhen, Guangdong 518040 (CN)
(72) Inventor: PANG, Haotian, Beijing 100102 (CN); LI, Juan, Beijing 100102 (CN); SHI, Jiaojiao, Beijing 100102 (CN)
(74) Representative: MERH-IP Matias Erny Reichl Hoffmann Patentanwälte PartG mbB
(86) International application number: PCT/CN2024/087827
(87) International publication number: WO 2025/011121

(57) **Abstract**

This application provides a multi-device collaboration method and system. A first electronic device displays a first window, a first cursor, and a first taskbar on a first desktop. When the first cursor moves out from the first screen edge to a second screen edge of a second electronic device, the first electronic device hides the first cursor and the first window and the second electronic device displays an extended window and a second cursor at the second screen edge. When the second cursor drags the extended window to move in a direction away from the second screen edge, the second electronic device displays a part of the extended window moved into the second screen edge. In response to a release operation performed by a user on the second cursor and the extended window, the second electronic device displays a second desktop in the extended window, and displays a second taskbar and a maximally displayed second window on the second desktop. Content of the second window is the same as that of the first window. In this way, the user can implement cross-device and cross-system window dragging without manual connection, thereby improving use experience of the user.

## Description

This application claims priority to Chinese Patent Application No. 201310854770.1, filed with the China National Intellectual Property Administration on July 12, 2023 and entitled "MULTI-DEVICE COLLABORATION METHOD AND SYSTEM" and Chinese Patent Application No. 202310863185.8, filed with the China National Intellectual Property Administration on July 12, 2023 and entitled "MULTI-DEVICE COLLABORATION METHOD AND SYSTEM, AND ELECTRONIC DEVICE", which are incorporated herein by reference in their entireties.

### TECHNICAL FIELD

Embodiments of this application relate to the field of terminal technologies, and in particular, to a multi-device collaboration method and system.

### BACKGROUND

Multi-device collaboration is a distribution technology applied to a plurality of electronic devices. By using the multi-device collaboration technology, cross-system and cross-device collaboration can be performed between two or more electronic devices, to implement resource sharing and collaboration operations. With continuous development of terminal technologies, a plurality of different collaboration types has emerged for multi-device collaboration.

In the different collaboration types, some collaboration types are initiated by a master device (usually an initiator of multi-device collaboration) to a slave device (usually a participant of the multi-device collaboration) in response to a user operation, and thus these collaboration types may be referred to as manual collaboration services, for example, keyboard and mouse sharing, screen mirroring, screen extension, and multi-screen collaboration.

Currently, for collaboration types such as screen mirroring, screen extension, and multi-screen collaboration, a user needs to manually connect, and cross-device and cross-system window dragging cannot be implemented. As a result, abundant use experience cannot be provided for the user.

### SUMMARY

This application provides a multi-device collaboration method and system, so that a user can implement cross-device and cross-system window dragging without manual connection, thereby improving use experience of the user.

According to a first aspect, an embodiment of this application provides a multi-device collaboration method, including: displaying, by a first electronic device, a first window, a first cursor, and a first taskbar on a first desktop, where the first electronic device is equipped with a first operating system, the first electronic device is connected to an input device, and the first window is a window matching the first operating system; in a process in which the first cursor drags the first window to move toward a first screen edge of the first electronic device, when a first window edge of the first window does not reach the first screen edge, the first window edge moves toward the first screen edge, and the first window edge is a window edge on a side of the first window close to the first screen edge; and when the first window edge moves out of the first screen edge and the first cursor does not reach the first screen edge, the first electronic device moves the first window, to move a part of the first window out of the first screen edge; hiding, by the first electronic device, the first cursor and the first window when the first cursor moves out from the first screen edge to a second screen edge of a second electronic device, and displaying, by the second electronic device, an extended window and a second cursor at the second screen edge and displaying a transient page in the extended window, where the second electronic device is equipped with a second operating system, the second electronic device is connected to the input device, and the extended window is a window matching the second operating system; displaying, by the second electronic device in a process in which the second cursor drags the extended window to move in a direction away from the second screen edge, a part of the extended window moved into the second screen edge; and displaying, by the second electronic device in response to a release operation performed by a user on the second cursor and the extended window, a second desktop in the extended window, and displaying a second taskbar and a maximally displayed second window on the second desktop, where the second desktop is obtained by projecting the first desktop, content of the second window is the same as that of the first window, and content of the second taskbar is the same as that of the first taskbar.

According to the multi-device collaboration method provided in this application, based on establishment of a keyboard and mouse sharing connection between electronic devices, a user can implement cross-device and cross-system window dragging without manual connection, thereby improving use experience of the user. In addition, a window style of a window dragged to another electronic device matches an operating system of the electronic device, thereby reducing learning costs of the user and improving operation efficiency of the user. Further, this embodiment of this application supports more device types, such as a tablet computer and a foldable screen.

In an implementation, after the hiding, by the first electronic device, the first cursor and the first window when the first cursor moves out from the first screen edge to a second screen edge of a second electronic device, and displaying, by the second electronic device, an extended window and a second cursor at the second screen edge and displaying a transient page in the extended window, the multi-device collaboration method further includes: in a process in which the second cursor drags the extended window to move toward the second screen edge, moving, by the second electronic device, the extended window when a second window edge of the extended window moves in a direction close to the second screen edge and the second cursor does not reach the second screen edge, to move a part of the extended window out of the second screen edge, where a direction of the second window edge is the same as that of the first window edge; hiding, by the second electronic device, the second cursor and the extended window when the second cursor moves out from the second screen edge to the first screen edge of the first electronic device, and displaying, by the first electronic device, the first cursor and the first window at the first screen edge; and displaying, by the first electronic device, the first window on the first desktop in response to a release operation performed by the user on the first cursor and the first window. By using this implementation, when the user drags a window for the first time, and does not lift a hand, the user may further drag the window from the second electronic device back to the first electronic device.

In an implementation, the displaying, by the second electronic device in response to a release operation performed by a user on the second cursor and the extended window, a second desktop in the extended window, and displaying a second taskbar and a maximally displayed second window on the second desktop includes: displaying, by the second electronic device in response to the release operation performed by the user on the second cursor and the extended window, a loading page in the extended window, displaying the second desktop after loading of the second desktop is completed, and displaying, on the second desktop, the second taskbar and the maximally displayed second window, where the loading page is used for indicating that the second electronic device is loading the second desktop. By using this implementation, after the user lifts a hand, window dragging between electronic devices is completed based on establishment of a screen extension connection, and the dragged extended window is a window matching an operating system of the second electronic device. In this way, this embodiment of this application has a visual effect of window dragging, reduces learning costs of the user, and improves operation efficiency of the user.

In an implementation, after the displaying, by the second electronic device in response to a release operation performed by a user on the second cursor and the extended window, a second desktop in the extended window, and displaying a second taskbar and a maximally displayed second window on the second desktop, the multi-device collaboration method further includes: moving, by the second electronic device, the second window on the second desktop in response to a drag operation performed by the user on the second window in the extended window. By using this implementation, the second electronic device actually displays, in the extended window, content that is the same as that on the first desktop of the first electronic device, instead of only displaying content in the first window. Therefore, the second window is not fixedly displayed in the extended window, but may move in the extended window.

In an implementation, a top region of the extended window includes a first floating button, and the first floating button is used for moving the extended window; and after the displaying, by the second electronic device in response to a release operation performed by a user on the second cursor and the extended window, a second desktop in the extended window, and displaying a second taskbar and a maximally displayed second window on the second desktop, the multi-device collaboration method further includes: moving, by the second electronic device, the extended window in response to a drag operation performed by the user on the first floating button. By using this implementation, the user may perform a moving operation on a window dragged to the second electronic device. Compared with a current screen extension manner in which content in the first electronic device is fixedly displayed on a display screen of the second electronic device, the implementation of this embodiment of this application can improve user experience.

In an implementation, a bottom region of the extended window includes a second floating button, and the second floating button is used for maximally displaying the extended window or minimally displaying the extended window; and after the displaying, by the second electronic device in response to a release operation performed by a user on the second cursor and the extended window, a second desktop in the extended window, and displaying a second taskbar and a maximally displayed second window on the second desktop, the multi-device collaboration method further includes: minimally displaying, by the second electronic device, the extended window in response to a slide-up operation performed by the user on the second floating button; or maximally displaying, by the second electronic device, the extended window in response to a slide-down operation performed by the user on the second floating button. By using this implementation, the user may maximally display or minimally display the extended window by performing a gesture operation. Compared with a current screen extension manner in which content in the first electronic device is fixedly displayed on a display screen of the second electronic device, the implementation of this embodiment of this application can improve user experience.

In an implementation, a top region of the extended window includes a maximization button, a minimization button, and a close button; and after the displaying, by the second electronic device in response to a release operation performed by a user on the second cursor and the extended window, a second desktop in the extended window, and displaying a second taskbar and a maximally displayed second window on the second desktop, the multi-device collaboration method further includes: maximally displaying, by the second electronic device, the extended window in response to a click operation performed by the user on the maximization button; or minimally displaying, by the second electronic device, the extended window in response to a click operation performed by the user on the minimization button; or closing, by the second electronic device, the extended window in response to a click operation performed by the user on the close button. By using this implementation, the user may maximally display the extended window, minimally display the extended window, or close the extended window. Compared with a current screen extension manner in which content in the first electronic device is fixedly displayed on a display screen of the second electronic device, the implementation of this embodiment of this application can improve user experience.

In an implementation, after the displaying, by the second electronic device in response to a release operation performed by a user on the second cursor and the extended window, a second desktop in the extended window, and displaying a second taskbar and a maximally displayed second window on the second desktop, the multi-device collaboration method further includes: extending and displaying, by the second electronic device, the extended window in response to a stretching operation performed by the user on a window edge of the extended window; or scaling and displaying, by the second electronic device, the extended window in response to a scaling operation performed by the user on a window edge of the extended window. By using this implementation, the user may adjust a size of the extended window. Compared with a current screen extension manner in which content in the first electronic device is fixedly displayed on a display screen of the second electronic device, the implementation of this embodiment of this application can improve user experience.

In an implementation, after the displaying, by the second electronic device in response to a release operation performed by a user on the second cursor and the extended window, a second desktop in the extended window, and displaying a second taskbar and a maximally displayed second window on the second desktop, the multi-device collaboration method further includes: displaying, by the first electronic device, a third window on the first desktop, where the third window is a window matching the first operating system; in a process in which the first cursor drags the third window to move toward the first screen edge of the first electronic device, when a third window edge of the third window does not reach the first screen edge, the third window edge moves toward the first screen edge, and the third window edge is a window edge on a side of the third window close to the first screen edge; and when the third window edge moves out of the first screen edge and the first cursor does not reach the first screen edge, the first electronic device moves the third window, to move a part of the third window out of the first screen edge, where content of the third window is different from that of the first window; hiding, by the first electronic device, the first cursor when the first cursor moves out from the first screen edge to a second screen edge of a second electronic device, and displaying, by the second electronic device, a second cursor at the second screen edge and displaying a fourth window in the extended window, where content of the fourth window is the same as content of a part of the third window moved out of the first screen edge; and releasing, by the second electronic device, the fourth window in the extended window in response to a release operation performed by the user on the second cursor and the fourth window. By using this implementation, the user may drag a plurality of windows and display these windows in the extended window.

In an implementation, after the hiding, by the first electronic device, the first cursor when the first cursor moves out from the first screen edge to a second screen edge of a second electronic device, and displaying, by the second electronic device, a second cursor at the second screen edge and displaying a fourth window in the extended window, the multi-device collaboration method further includes: in a process in which the second cursor drags the fourth window to move toward a fourth window edge of the extended window, moving, by the second electronic device, the fourth window when a fifth window edge of the fourth window moves in a direction close to the third window edge and the second cursor does not reach the second screen edge, to move a part of the fourth window out of the second screen edge, where a direction of the fourth window edge is opposite to that of the first window edge, and a direction of the fifth window edge is the same as that of the first window edge; and hiding, by the second electronic device, the second cursor and the extended window when the second cursor moves out from the second screen edge to the first screen edge of the first electronic device, and displaying, by the first electronic device, the first cursor and the third window at the first screen edge; and displaying, by the first electronic device, the third window on the first desktop in response to a release operation performed by the user on the first cursor and the third window. By using this implementation, when the user drags a window for the second time, and does not lift a hand, the user may further drag the window from the second electronic device back to the first electronic device.

In an implementation, after the minimally displaying, by the second electronic device, the extended window, the multi-device collaboration method further includes: displaying, by the first electronic device, a third window on the first desktop, where the third window is a window matching the first operating system; in a process in which the first cursor drags the third window to move toward the first screen edge of the first electronic device, when a third window edge of the third window does not reach the first screen edge, the third window edge moves toward the first screen edge, and the third window edge is a window edge on a side of the third window close to the first screen edge; and when the third window edge moves out of the first screen edge and the first cursor does not reach the first screen edge, the first electronic device moves the third window, to move a part of the third window out of the first screen edge, where content of the third window is different from that of the first window; hiding, by the first electronic device, the first cursor when the first cursor moves out from the first screen edge to a second screen edge of a second electronic device, and displaying, by the second electronic device, a second cursor at the second screen edge, waking the extended window from a background, and displaying a fourth window in the extended window, where content of the fourth window is the same as content of a part of the third window moved out of the first screen edge; and releasing, by the second electronic device, the fourth window in the extended window in response to a release operation performed by the user on the second cursor and the fourth window. By using this implementation, when the second electronic device displays the extended window at the background, when the user drags the window for the second time, the second electronic device may wake the extended window from the background, and display the window dragged for the second time in the extended window.

In an implementation, when the extended window is displayed in a floating window form, a window edge of the extended window includes a first toolbar button; and after the displaying, by the second electronic device in response to a release operation performed by a user on the second cursor and the extended window, a second desktop in the extended window, and displaying a second taskbar and a maximally displayed second window on the second desktop, the multi-device collaboration method further includes: displaying, by the second electronic device, a first toolbar at the window edge of the extended window in response to a click operation performed by the user on the first toolbar button. By using this implementation, when the extended window is in the floating window form, a toolbar may be displayed, to provide a plurality of shortcut tools for the user.

In an implementation, the maximally displaying, by the second electronic device, the extended window includes: displaying, by the second electronic device, a second toolbar at a window edge of the extended window. By using this implementation, when the extended window is in the full-screen form, a toolbar may be displayed, to provide a plurality of shortcut tools for the user.

In an implementation, the extended window includes a toolbar, the toolbar includes a mode switching button, and the mode switching button is used for switching from a screen extension mode to a screen mirroring mode or switching from a screen mirroring mode to a screen extension mode, where when the extended window displays the second desktop, and displays the second taskbar and the maximally displayed second window on the second desktop, the extended window is in the screen extension mode; and after the displaying, by the second electronic device in response to a release operation performed by a user on the second cursor and the extended window, a second desktop in the extended window, and displaying a second taskbar and a maximally displayed second window on the second desktop, the multi-device collaboration method further includes: changing, by the second electronic device in the extended window in response to a first click operation performed by the user on the mode switching button, from displaying the second taskbar and the maximally displayed second window to displaying a current page of a display screen of the first electronic device, to cause the extended window to be in the screen mirroring mode. By using this implementation, the mode switching button may be set in the toolbar for the extended window, to switch between the screen extension mode and the screen mirroring mode.

In an implementation, after the changing, by the second electronic device in the extended window in response to a first click operation performed by the user on the mode switching button, from displaying the second taskbar and the maximally displayed second window to displaying a current page of a display screen of the first electronic device, the multi-device collaboration method further includes: changing, by the second electronic device in the extended window in response to a second click operation performed by the user on the mode switching button, from displaying the current page of the display screen of the first electronic device to displaying the second taskbar and the maximally displayed second window, to cause the extended window to be in the screen extension mode. By using this implementation, the user may switch between the screen extension mode and the screen mirroring mode by clicking the mode switching button.

In an implementation, after the maximally displaying, by the second electronic device, the extended window, the multi-device collaboration method further includes: displaying, by the second electronic device, a third floating button in the top region of the extended window in response to an operation of moving the second cursor to the top region of the extended window by the user; displaying, by the second electronic device, a floating window option control in the top region of the extended window in response to a click operation performed by the user on the third floating button, where the floating window option control includes a first sub-button and a second sub-button, the first sub-button is used for displaying the extended window in a full-screen form, and the second sub-button is used for switching the extended window to be displayed in a floating window form; highlighting, by the second electronic device, the first sub-button in response to that the second electronic device displays the floating window option control; and changing, by the second electronic device in response to a click operation performed by the user on the second sub-button, from displaying the extended window in the full-screen form to displaying the extended window in the floating window form. By using this implementation, when the extended window is in the full-screen form, the user may switch the extended window between the full-screen form and the floating window form.

In an implementation, after the maximally displaying, by the second electronic device, the extended window, the multi-device collaboration method further includes: displaying, by the second electronic device, a third floating button in the top region of the extended window in response to an operation of moving the second cursor to the top region of the extended window by the user; changing, by the second electronic device in response to a drag operation performed by the user on the third floating button, from displaying the extended window in the full-screen form to displaying the extended window in the floating window form. By using this implementation, when the extended window is in the full-screen form, the user may switch between the full-screen form and the floating window form.

According to a second aspect, an embodiment of this application further provides a multi-device collaboration method, including: displaying, by a first device, a first window of a first application and a first cursor that is located on the first window, the first device is equipped with a first operating system, and the first window is a window matching the first operating system; in a process in which the first cursor drags the first window to move toward a first screen edge of the first device, moving, by the first device, the first window when a window edge of the first window does not reach the first screen edge; hiding, by the first device, a part of the first window located outside the first screen edge when the window edge of the first window moves out of the first screen edge and the first cursor does not reach the first screen edge; and hiding, by the first device, the first cursor and the first window when the first cursor moves out from the first screen edge to a second screen edge of a second device, and displaying, by the second device at the second screen edge, a part of a second window and a second cursor located on the part of the second window, where the second device is equipped with a second operating system, the second window is a window matching the second operating system, and an orientation of the first screen edge is opposite to that of the second screen edge; and in a process in which the second cursor drags the second window to move in a direction away from the second screen edge, displaying, by the second device when a partial window of the second window moves into the second screen edge, the partial window moved into the second screen edge; and loading, by the second device, a first user interface of the first application when the second cursor releases the second window, and displaying the first user interface in the second window. In this way, the first window in the first device may be dragged to the second device, and window traversal is visually implemented, which can improve use experience of the user.

In an implementable manner, after the hiding, by the first device, the first cursor and the first window when the first cursor moves out from the first screen edge to a second screen edge of a second device, and displaying, by the second device at the second screen edge, a part of a second window and a second cursor located on the part of the second window, the multi-device collaboration method further includes: in a process in which the second cursor drags the second window to move toward the second screen edge, hiding, by the second device, a part of the second window located outside the second screen edge when a window edge of the second window moves out of the second screen edge and the second cursor does not reach the second screen edge; hiding, by the second device, the second cursor and the second window when the second cursor moves out from the second screen edge to the first screen edge, and displaying, by the first device, the first window and the first cursor located on the first window; and displaying, by the first device, a second user interface of the first application in the first window when the first cursor releases the first window. In this way, the user may freely select whether to drag the first window into the second device, which can improve user experience.

In an implementable manner, the second window includes a first display region; when the second device displays, at the second screen edge, the part of the second window and the second cursor located on the part of the second window, the first display region includes a first icon, and the first icon is an icon of the first application; and the first icon is located outside the second screen edge.

In an implementable manner, the loading, by the second device, a first user interface of the first application when the second cursor releases the second window includes: loading, by the second device, the first user interface when the second cursor releases the second window, and replacing the first icon in the first display region with a first element, where the first element is used for indicating that the second device is loading the first user interface; and replacing, by the second device, the first element in the first display region with the first user interface after the first user interface is successfully loaded. In this way, fluency of an animation effect when the second user interface is displayed can be improved, and use experience of the user can be improved.

In an implementable manner, the first device is in a landscape display state, the first window is a full-screen display window, the first window includes a second user interface of the first application and a first floating button, content in the first user interface is the same as that in the second user interface, and the first floating button is used for moving the first window; and the moving, by the first device in a process in which the first cursor drags the first window to move toward a first screen edge of the first device, the first window when a window edge of the first window does not reach the first screen edge includes: scaling out, by the first device, the first window when the first cursor drags the first floating button, and replacing the second user interface in the first window with the first icon; and moving, by the first device, the scaled-down first window when the first cursor does not reach a first screen region and the scaled-down first window does not reach the first screen edge, where the first screen region is a partial region using the first screen edge as an edge. after the moving, by the first device, the scaled-down first window when the first cursor does not reach a first screen region and the scaled-down first window does not reach the first screen edge, the multi-device collaboration method further includes: scaling up, by the first device, the scaled-down first window when the first cursor moves to the first screen region, where a size of the first window after being scaled up is less than a size of the first window before being scaled down. In this way, the full-screen application window in the first device may be visually dragged into the second device.

In an implementable manner, before the scaling out, by the first device, the first window when the first cursor drags the first floating button, and replacing the second user interface in the first window with the first icon, the multi-device collaboration method further includes: switching, by the first device, the first floating button from a hidden state to a displayed state when the first cursor moves to a second screen region of the first device. In this way, the floating button may be woken.

In an implementable manner, the first window is a floating window, the first window includes a second user interface of the first application and a second floating button, content in the first user interface is the same as that in the second user interface, and the second floating button is used for moving the first window. In this way, the floating window in the first device may be visually dragged into the second device.

In an implementable manner, the first window and a third window are disposed in parallel in a display screen of the first device, the first window includes a second user interface of the first application and a third floating button, the first user interface is an extended interface of the second user interface, or content of the first user interface is the same as that of the second user interface, and the third floating button is used for moving the first window; and the moving, by the first device in a process in which the first cursor drags the first window to move toward a first screen edge of the first device, the first window when a window edge of the first window does not reach the first screen edge includes: scaling out, by the first device, the first window when the first cursor drags the third floating button; and moving, by the first device, the scaled-down first window when a window edge of the scaled-down first window does not reach the first screen edge. after the hiding, by the first device, the first cursor and the first window when the first cursor moves out from the first screen edge to a second screen edge of a second device, the multi-device collaboration method further includes: scaling up, by the first device, the third window into a full-screen display window. In this way, the split-screen application window in the first device may be visually dragged into the second device.

In an implementable manner, the second window further includes a first title bar and a first navigation bar, the first title bar includes a minimization button, a maximization button, and a close button, and the first navigation bar includes a back button, a home screen button, and/or a multitasking button.

In an implementable manner, the multi-device collaboration method further includes: replacing, by the second device, the first user interface in the first display region with a third user interface when the second cursor clicks the back button in the first navigation bar, where the third user interface is a previous-level interface of the first user interface. In this way, a service of the first application may be provided to the user across devices, thereby improving user experience.

In an implementable manner, the multi-device collaboration method further includes: displaying, by the second device when the second cursor clicks the back button in the first navigation bar, a first pop-up window in the first display region if the first user interface does not include the third user interface, where the first pop-up window includes at least a first control and a second control; closing, by the second device, the first pop-up window when the second cursor clicks the first control; or loading, by the second device, a first interface when the second cursor clicks the second control, and switching content in the first display region to a second element, where the first interface is the same as content currently displayed by the first device, and the second element is used for indicating that the first interface is being loaded; and replacing, by the second device, the second element in the first display region with the first interface after the first interface is successfully loaded.

In an implementable manner, the multi-device collaboration method further includes: displaying, by the second device, the first pop-up window in the first display region when the second cursor clicks the home screen button or the multitasking button in the first navigation bar; displaying, by the first device, a home screen interface or a multitasking interface when the second cursor clicks the second control, and loading, by the second device, a second interface and switching the content in the first display region to the second element, where the multitasking interface includes all background programs currently running in the first device; and content in the second interface is the same as that in the home screen interface or the multitasking interface, and the second element is used for indicating that the second interface is being loaded; and replacing, by the second device, the second element in the first display region with the second interface after the second interface is successfully loaded. In this way, content displayed in the first device may be controlled by using the second window in the second device, and content in the display screen of the first device is fully displayed in the second window, to implement screen mirroring and improve user experience.

In an implementable manner, an input device is further included, and the input device is configured to connect to the first device and the second device; the first device displays the first cursor when the input device is connected to the first device; and the second device displays the second cursor when the input device is connected to the second device.

According to a third aspect, an embodiment of this application provides an electronic device. The electronic device is equipped with a first operating system; and the electronic device includes: a display screen; one or more processors; a memory; and a communication module, where the memory stores one or more computer programs, the one or more computer programs includes instructions, and when the instructions are executed by the electronic device, the electronic device is enabled to perform the multi-device collaboration method according to the first aspect and an implementation thereof, and the second aspect and an implementation thereof.

According to a fourth aspect, an embodiment of this application provides an electronic device. The electronic device is equipped with a second operating system; and the electronic device includes: a display screen; one or more processors; a memory; and a communication module, where the memory stores one or more computer programs, the one or more computer programs includes instructions, and when the instructions are executed by the electronic device, the electronic device is enabled to perform the multi-device collaboration method according to the first aspect and an implementation thereof, and the second aspect and an implementation thereof.

According to a fifth aspect, an embodiment of this application provides a multi-device collaboration system, including a first electronic device, a second electronic device, and an input device, the first electronic device is the electronic device according to the third aspect, and the second electronic device is the electronic device according to the fourth aspect.

### BRIEF DESCRIPTION OF DRAWINGS

FIG. 1 is a schematic diagram of a scenario in which screen extension is established between electronic devices;
FIG. 2 is a schematic diagram of a multi-device collaboration system according to an embodiment of this application;
FIG. 3A is a schematic diagram of a first scenario in which a PC establishes keyboard and mouse sharing according to an embodiment of this application;
FIG. 3B is a schematic diagram of a second scenario in which a PC establishes keyboard and mouse sharing according to an embodiment of this application;
FIG. 3C is a schematic diagram of a third scenario in which a PC establishes keyboard and mouse sharing according to an embodiment of this application;
FIG. 3D is a schematic diagram of a fourth scenario in which a PC establishes keyboard and mouse sharing according to an embodiment of this application;
FIG. 3E is a schematic diagram of a scenario in which a PC establishes keyboard and mouse sharing according to some other embodiments of this application;
FIG. 4A is a schematic diagram of a first scenario in which a tablet computer establishes keyboard and mouse sharing according to an embodiment of this application;
FIG. 4B is a schematic diagram of a second scenario in which a tablet computer establishes keyboard and mouse sharing according to an embodiment of this application;
FIG. 4C is a schematic diagram of a third scenario in which a tablet computer establishes keyboard and mouse sharing according to an embodiment of this application;
FIG. 5A is a schematic diagram of a first scenario in which a foldable mobile phone establishes keyboard and mouse sharing according to an embodiment of this application;
FIG. 5B is a schematic diagram of a second scenario in which a foldable mobile phone establishes keyboard and mouse sharing according to an embodiment of this application;
FIG. 5C is a schematic diagram of a third scenario in which a foldable mobile phone establishes keyboard and mouse sharing according to an embodiment of this application;
FIG. 6A is a schematic diagram of a scenario in which a mouse cursor is moved from a PC to a tablet computer according to an embodiment of this application;
FIG. 6B is a schematic diagram of a scenario in which a mouse cursor is moved from a PC to a foldable mobile phone according to an embodiment of this application;
FIG. 7 is a schematic structural diagram of a tablet computer according to an embodiment of this application;
FIG. 8 is a block diagram of the software structure of the tablet computer in this embodiment of this application;
FIG. 9 is a first schematic diagram of a first embodiment according to this application;
FIG. 10 is a second schematic diagram of the first embodiment according to this application;
FIG. 11 is a third schematic diagram of the first embodiment according to this application;
FIG. 12 is a fourth schematic diagram of the first embodiment according to this application;
FIG. 13 is a fifth schematic diagram of the first embodiment according to this application;
FIG. 14 is a sixth schematic diagram of the first embodiment according to this application;
FIG. 15 is a seventh schematic diagram of the first embodiment according to this application;
FIG. 16 is an eighth schematic diagram of the first embodiment according to this application;
FIG. 17 is a ninth schematic diagram of the first embodiment according to this application;
FIG. 18 is a tenth schematic diagram of the first embodiment according to this application;
FIG. 19 is a first schematic diagram of a second embodiment according to this application;
FIG. 20 is a second schematic diagram of the second embodiment according to this application;
FIG. 21 is a third schematic diagram of the second embodiment according to this application;
FIG. 22 is a first schematic diagram of a third embodiment according to this application;
FIG. 23 is a schematic diagram of a first toolbar display form according to an embodiment of this application;
FIG. 24 is a schematic diagram of a mode switching scenario according to an embodiment of this application;
FIG. 25 is a schematic diagram of a second toolbar display form according to an embodiment of this application;
FIG. 26 is a schematic diagram of a first scenario of window switching according to an embodiment of this application;
FIG. 27 is a schematic diagram of a second scenario of window switching according to an embodiment of this application;
FIG. 28 is a first schematic diagram of a fourth embodiment according to this application;
FIG. 29 is a second schematic diagram of the fourth embodiment according to this application;
FIG. 30 is a first schematic diagram of a scenario in which a window is dragged abnormally according to this application;
FIG. 31 is a second schematic diagram of a scenario in which a window is dragged abnormally according to this application;
FIG. 32 is a schematic diagram of a structure of a first electronic device according to an embodiment of this application;
FIG. 33 is a schematic diagram of a structure of a second electronic device according to an embodiment of this application;
FIG. 34 is a schematic structural diagram of an electronic device according to an embodiment of the disclosure;
FIG. 35 is a schematic diagram of a mouse cursor being located in a smartphone according to an embodiment of this application;
FIG. 36 is a schematic diagram of a mouse cursor being located in a tablet computer according to an embodiment of this application;
FIG. 37A is a schematic diagram of enabling a keyboard and mouse sharing function by a smartphone according to an embodiment of this application;
FIG. 37B is a schematic diagram of enabling a keyboard and mouse sharing function by a tablet computer according to an embodiment of this application;
FIG. 37C is a schematic diagram of enabling a keyboard and mouse sharing function by a notebook computer according to an embodiment of this application;
FIG. 38A is a first schematic diagram of establishing keyboard and mouse sharing according to an embodiment of this application;
FIG. 38B is a second schematic diagram of establishing keyboard and mouse sharing according to an embodiment of this application;
FIG. 39A is a first schematic diagram of a fourth embodiment of a multi-device collaboration method according to embodiments of this application;
FIG. 39B is a second schematic diagram of the fourth embodiment of the multi-device collaboration method according to the embodiments of this application;
FIG. 39C is a third schematic diagram of the fourth embodiment of the multi-device collaboration method according to the embodiments of this application;
FIG. 39D is a fourth schematic diagram of the fourth embodiment of the multi-device collaboration method according to the embodiments of this application;
FIG. 39E is a fifth schematic diagram of the fourth embodiment of the multi-device collaboration method according to the embodiments of this application;
FIG. 39F is a sixth schematic diagram of the fourth embodiment of the multi-device collaboration method according to the embodiments of this application;
FIG. 39G is a seventh schematic diagram of the fourth embodiment of the multi-device collaboration method according to the embodiments of this application;
FIG. 39H(1), FIG. 39H(2), FIG. 39H(3), and FIG. 39H(4) are an eighth schematic diagram of the fourth embodiment of the multi-device collaboration method according to the embodiments of this application;
FIG. 40A is a first schematic diagram of a fifth embodiment of a multi-device collaboration method according to embodiments of this application;
FIG. 40B is a second schematic diagram of the fifth embodiment of the multi-device collaboration method according to the embodiments of this application;
FIG. 40C is a third schematic diagram of the fifth embodiment of the multi-device collaboration method according to the embodiments of this application;
FIG. 40D is a fourth schematic diagram of the fifth embodiment of the multi-device collaboration method according to the embodiments of this application;
FIG. 41A(1), FIG. 41A(2), FIG. 41A(3), and FIG. 41A(4) are a first schematic diagram of a sixth embodiment of a multi-device collaboration method according to embodiments of this application;
FIG. 41B is a second schematic diagram of the sixth embodiment of the multi-device collaboration method according to the embodiments of this application;
FIG. 41C is a third schematic diagram of the sixth embodiment of the multi-device collaboration method according to the embodiments of this application;
FIG. 41D is a fourth schematic diagram of the sixth embodiment of the multi-device collaboration method according to the embodiments of this application;
FIG. 42A is a first schematic diagram of a seventh embodiment of a multi-device collaboration method according to embodiments of this application;
FIG. 42B is a second schematic diagram of the seventh embodiment of the multi-device collaboration method according to the embodiments of this application;
FIG. 42C is a third schematic diagram of the seventh embodiment of the multi-device collaboration method according to the embodiments of this application;
FIG. 42D is a fourth schematic diagram of the seventh embodiment of the multi-device collaboration method according to the embodiments of this application;
FIG. 42E is a fifth schematic diagram of the seventh embodiment of the multi-device collaboration method according to the embodiments of this application;
FIG. 42F(1), FIG. 42F(2), FIG. 42F(3), and FIG. 42F(4) are a sixth schematic diagram of the seventh embodiment of the multi-device collaboration method according to the embodiments of this application;
FIG. 43A is a first schematic diagram of an eighth embodiment of a multi-device collaboration method according to embodiments of this application;
FIG. 43B is a second schematic diagram of the eighth embodiment of the multi-device collaboration method according to the embodiments of this application;
FIG. 43C is a third schematic diagram of the eighth embodiment of the multi-device collaboration method according to the embodiments of this application;
FIG. 44A is a fourth schematic diagram of the eighth embodiment of the multi-device collaboration method according to the embodiments of this application;
FIG. 44B is a fifth schematic diagram of the eighth embodiment of the multi-device collaboration method according to the embodiments of this application;
FIG. 44C is a sixth schematic diagram of the eighth embodiment of the multi-device collaboration method according to the embodiments of this application;
FIG. 45A is a seventh schematic diagram of the eighth embodiment of the multi-device collaboration method according to the embodiments of this application;
FIG. 45B is an eighth schematic diagram of the eighth embodiment of the multi-device collaboration method according to the embodiments of this application;
FIG. 45C is a ninth schematic diagram of the eighth embodiment of the multi-device collaboration method according to the embodiments of this application;
FIG. 46 is a schematic diagram of a foldable mobile phone according to an embodiment of this application;
FIG. 47 is a schematic diagram of a ninth embodiment of the multi-device collaboration method according to the embodiments of this application;
FIG. 48 is a schematic structural diagram of a first electronic device according to an embodiment of this application; and
FIG. 49 is a schematic structural diagram of a second electronic device according to an embodiment of this application.

### DESCRIPTION OF EMBODIMENTS

The following clearly describes the technical solutions in the embodiments of this application with reference to the accompanying drawings in the embodiments of this application. It is clear that the described embodiments are some but not all of the embodiments of this application. Other embodiments obtained by a person of ordinary skill in the art based on embodiments of this application without creative efforts shall fall within the protection scope of this application.

In the specification and claims of this application, the terms "first", "second", "third", and the like are intended to distinguish between different objects but do not indicate a particular order. In the description of this application, unless otherwise stated, "at least one" means one, two, or more than two.

In embodiments of this application, words such as "example" or "for example" are used for representing giving examples, illustrations, or descriptions. Any embodiment or design solution described as "example" or "for example" in the embodiments of this application should not be explained as being preferred or advantageous over other embodiments or design solutions. In particular, the words such as "example" and "for example" as used for presenting the related concepts in a specific manner.

Terms used in implementations of this application are only used for explaining the specific embodiments of this application, but are not intended to limit this application. The embodiments of this application are described in detail below with reference to the accompanying drawings.

To help technicians understand the technical solutions of the embodiments of this application, the following first explains and describes technical terms used in the embodiments of this application.

Multi-device collaboration is a distribution technology applied to a plurality of electronic devices. By using the multi-device collaboration technology, cross-system and cross-device collaboration can be performed between two or more electronic devices, to implement resource sharing and collaboration operations.

The multi-device collaboration may be applied to electronic devices of a same type or different types. The electronic devices include but are not limited to a mobile phone, a tablet computer, a notebook computer, a large-screen device (such as a smart television and a smart screen), a personal computer (personal computer, PC), a handheld computer, a netbook, a personal digital assistant (personal digital assistant, PDA), a wearable electronic device, an onboard device, a virtual reality device, etc.

The multi-device collaboration needs to be implemented based on a communication connection between devices. The communication connection may be a wired communication connection or a wireless communication connection. A solution of the wired communication connections may include, for example, a USB On-The-Go (OTG) technology. A solution of the wireless communication may include, for example, a wireless fidelity (wireless fidelity, Wi-Fi) technology, a Wi-Fi direct (Wi-Fi Direct) technology, a Bluetooth (Bluetooth, BT) technology, a near field communication (near field communication, NFC) technology, and an infrared (infrared, IR) technology.

As a terminal technology continuously grows, there are various collaboration types (also referred to as collaboration services) of multi-device collaboration, such as keyboard and mouse sharing, screen mirroring, screen extension, application continuity, call sharing, and notification sharing.

Some collaboration types are described below.

Keyboard and mouse sharing: An electronic device A and an electronic device B may share respective input devices, such as mice and keyboards. For example, an input device of the electronic device A is shared with the electronic device B, and the shared input device may perform input on the electronic device A and the electronic device B. In addition, in a keyboard and mouse sharing type, file transmission may be further performed between the electronic device A and the electronic device B. In some examples, the electronic device A may be, for example, a personal computer (personal computer, PC) such as a notebook computer, the electronic device B may be, for example, a tablet computer (portable android device, PAD), and the input device may be, for example, a mouse, a keyboard, or a touchpad. After the keyboard and mouse sharing is established, the input device of the electronic device A or the electronic device B may be used as both the input device of the electronic device A and the input device of the electronic device B. In addition, an electronic device C that does not have an input device such as a mouse or a keyboard, for example, a smartphone, may also establish keyboard and mouse sharing with the electronic device A and the electronic device B that each have an input device. In this way, the input device having a pairing relationship with the electronic device A or the electronic device B may be configured to control the electronic device A, the electronic device B, and the electronic device C, to implement keyboard and mouse coordination, thereby improving user experience.

Call sharing: When electronic device A receives an incoming call of a voice call or a video call, an incoming call interface can be synchronously displayed on electronic device B. In this way, the user can choose to answer or hang up the call on electronic device B.

Screen mirroring: All contents in the screen of electronic device A are fully displayed in the screen of electronic device B in a mirroring image. The contents of electronic device A displayed in electronic device B are the same as the contents displayed by electronic device A, and change as the contents displayed by electronic device A change.

Screen extension: A screen of an electronic device B is used as a secondary screen of an electronic device A, and the electronic device A may transfer some content that needs to be displayed by the electronic device A to the secondary screen for display. A screen of the electronic device A and the screen of the electronic device B can jointly display content, thereby extending a display capability of the electronic device A.

Multi-screen collaboration: A user interface of electronic device A is projected into the screen of electronic device B for display, and the user is allowed to operate the user interface of electronic device A in electronic device B. Moreover, by executing specific operations (such as an operation of dragging a file from a user interface of electronic device B to the user interface of electronic device A) in electronic device B, a file in electronic device B is transferred to electronic device A, such that cross-device operations and cross-device file transfer between electronic device A and electronic device B are achieved, etc. The user interface of the electronic device A may be displayed in any region of the screen of the electronic device B, or may be displayed in full screen.

In the plurality of collaboration types listed above, some collaboration types are initiated by a master device (generally an initiator of multi-device collaboration) to a slave device (generally a participant of the multi-device collaboration) in response to a user operation, and thus may be referred to as manual collaboration services or manual collaboration services, such as screen extension, screen projection, screen mirroring, a multi-screen collaboration, and keyboard and mouse sharing. Some other collaboration types are automatically triggered when a triggering rule is satisfied in a state that a user enables a function, and thus may be referred to as automatic collaboration services or automatic collaboration services, such as a super call, a super notification, and a super continuity.

For two electronic devices, a collaboration type supported by the two electronic devices is usually related to factors such as a device type, a screen size, and a device capability. Therefore, the two electronic devices may support only one collaboration type, or may support a plurality of collaboration types.

A manual collaboration service is used as an example.

If a master device is a PC and a slave device is a non-foldable mobile phone, a collaboration type supported thereby may include keyboard and mouse sharing and a multi-screen collaboration. A default collaboration type may be a multi-screen collaboration when the PC and the non-foldable mobile phone are first triggered to be connected.

If a master device is a PC and a slave device is a foldable mobile phone, a collaboration type supported thereby may include keyboard and mouse sharing and a multi-screen collaboration. A default collaboration type may be a multi-screen collaboration when the PC and the foldable mobile phone are first triggered to be connected.

If a master device is a PC and a slave device is a tablet computer, a collaboration type supported thereby may include screen mirroring, screen extension and keyboard and mouse sharing. A default collaboration type may be screen mirroring when the PC and the tablet computer are first triggered to be connected.

That is, when the master device is a PC, and the slave device is a tablet computer or a foldable mobile phone, current collaboration types such as screen mirroring and screen extension are usually manual collaboration services.

Specifically, the manual collaboration services include the following scenarios.

It should be noted herein that, because collaboration types such as screen mirroring and screen extension are supported only in a PC, a tablet computer, and a foldable mobile phone, in each of the following embodiments, an example in which the electronic device A is a PC, the electronic device B is a tablet computer, and the electronic device C is a foldable mobile phone is used for description.

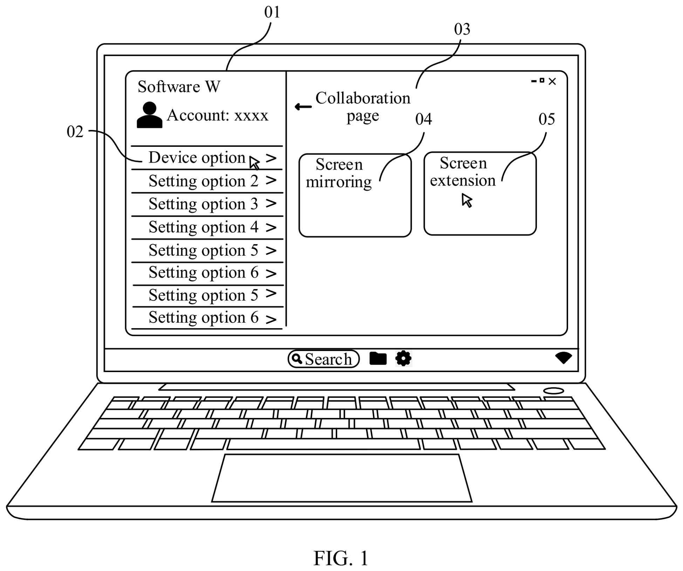

FIG. 1 is a schematic diagram of a scenario in which a screen extension connection is established between electronic devices.

As shown in FIG. 1, a screen extension connection may be established between electronic devices. Using an example in which an electronic device A and an electronic device B (not shown in the figure) are in a connected state, a user may click an icon Q (not shown in the figure) in the electronic device A, and in response to a click operation performed by the user on the icon Q, the electronic device A starts software W corresponding to the icon Q, to display an interface 01. A first side of the interface 01 is used for displaying one or more options, and the options include at least a device option 02. For example, the software W may be computer manager software.

The user may click the device option 02. In response to a click operation performed on the device option 02 by the user, the electronic device A displays a collaboration page 03 corresponding to the device option 02 on a second side of the interface 01. The collaboration page 03 may include a screen mirroring card 04 and a screen extension card 05. The screen mirroring card 04 may be used for establishing a screen mirroring connection between the electronic device A and the electronic device B. The screen extension card 05 may be used for establishing a screen extension connection between the electronic device A and the electronic device B. After the screen extension connection is established, the electronic device B does not display a desktop icon, a taskbar shortcut icon, and the like in the electronic device A.

The user may click the screen mirroring card 04. In response to a click operation performed by the user on the screen mirroring card 04, the electronic device A and the electronic device B may establish a screen mirroring connection. The electronic device B completely performs mirroring display, in a display screen of the electronic device B, on all content displayed in a display screen of the electronic device A. Content of the electronic device A that is displayed in the electronic device B is the same as the content displayed in the electronic device A, and changes as the content displayed in the electronic device A changes.

The user may click the screen extension card 05. In response to a click operation performed by the user on the screen extension card 05, the electronic device A and the electronic device B may establish a screen extension connection. The electronic device B may display a part of content that the electronic device A needs to display, to extend a display capability of the electronic device A. A window style displayed by the electronic device B is the same as that displayed by the electronic device A.

In the foregoing process of establishing a connection for manual collaboration services such as screen mirroring and screen extension, the user needs to manually connect the electronic device A to the electronic device B in the software W. In this way, use experience of the user is degraded. In addition, after a connection is established for these manual collaboration services, a window style displayed by the electronic device B is the same as that displayed by the electronic device A but is not the same as a window style of an operating system of the electronic device B. In this way, when the user operates, in the electronic device B, a window displayed by the electronic device A based on an extended screen, because an operation habit for a PC is different from an operation habit for a tablet computer, some learning costs are generated, and operation efficiency is reduced. Further, currently, manual collaboration services such as screen mirroring and screen extension are only supported between electronic devices such as a PC and a tablet computer, and there are fewer device types of electronic devices supporting such manual collaboration services.

It can be seen that the foregoing collaboration types such as keyboard and mouse sharing, screen mirroring, and screen extension may provide undiversified and limited services for the user, bring smaller benefits in aspects such as improving operation efficiency, and cannot provide rich use experience for the user.

To solve the above problems, an embodiment of this application provides a multi-device collaboration method.

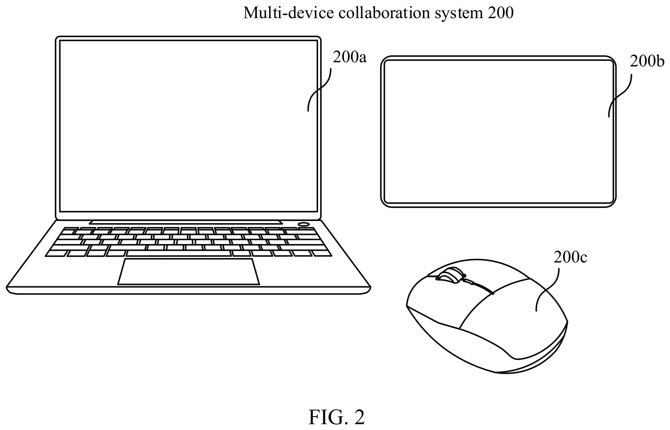

FIG. 2 is a schematic diagram of a multi-device collaboration system according to an embodiment of this application.

As shown in FIG. 2, the multi-device collaboration method in this embodiment provided in this application may be applied to a multi-device collaboration system 200. The multi-device collaboration system 200 may include a first electronic device 200a, a second electronic device 200b, and an input device 200c.

The first electronic device 200a may be specifically an electronic device that may be equipped with a first operating system, such as a notebook computer, a PC, or a handheld computer. The second electronic device 200b may be specifically an electronic device that may be equipped with a second operating system, such as a tablet computer or a foldable mobile phone. The first operating system is different from the second operating system. For example, the first operating system may be any one of a Windows operating system, a Mac OS, a Linux operating system, a Unix operating system, a DOS operating system, a Honor operating system (Magic OS), an Android (Android) operating system, iOS, or a Harmony operating system (Harmony OS), and the second operating system may be any one of a Windows operating system, a Mac OS, a Linux operating system, a Unix operating system, a DOS operating system, a Honor operating system, an Android operating system, iOS, or a Harmony operating system that is different from the first operating system. The input device 200c may be specifically a mouse, a keyboard, a touchpad, or the like.

The multi-device collaboration method in the embodiment of this application can be applied to various types of electronic devices that support keyboard and mouse sharing, screen mirroring, and screen extension. Specific types of electronic devices such as the first electronic device 200a and the second electronic device 200b are not limited in this embodiment of this application, and specific types of operating systems such as the first operating system and the second operating system are not limited in this embodiment of this application.

The user may drag the content in the first window displayed by the first electronic device 200a into the display screen of the second electronic device 200b, so that the second electronic device 200b displays the extended window. The content in the extended window is the same as the content in the first window. In this way, the user can implement cross-device and cross-system window dragging without manual connection.

It should be noted herein that, before dragging the window, the user needs to first establish a keyboard and mouse sharing connection between the first electronic device 200a and the second electronic device 200b.

Currently, a keyboard and mouse sharing connection is usually implemented based on a Bluetooth function.

This embodiment of this application shows a manner for establishing a keyboard and mouse sharing connection different from a Bluetooth connection manner.

In this establishment manner, an electronic device may actively identify a near-field electronic device located near the electronic device, and construct an interconnection relationship with the near-field device of the electronic device. In this way, electronic devices in a same interconnection relationship may provide the user with a plurality of services that includes, but is not limited to, call sharing, notification sharing, and keyboard and mouse sharing. Further, based on an identity authentication system and a networking function, a plurality of electronic devices joins the interconnection relationship, thereby implementing multi-device self-discovery, self-networking, and self-connection. The electronic devices may include a notebook computer, a smart screen, a tablet computer, a smartphone, and the like. In this embodiment of this application, after an interconnection relationship is established, a keyboard and mouse sharing connection may be established between electronic devices in the same interconnection relationship.

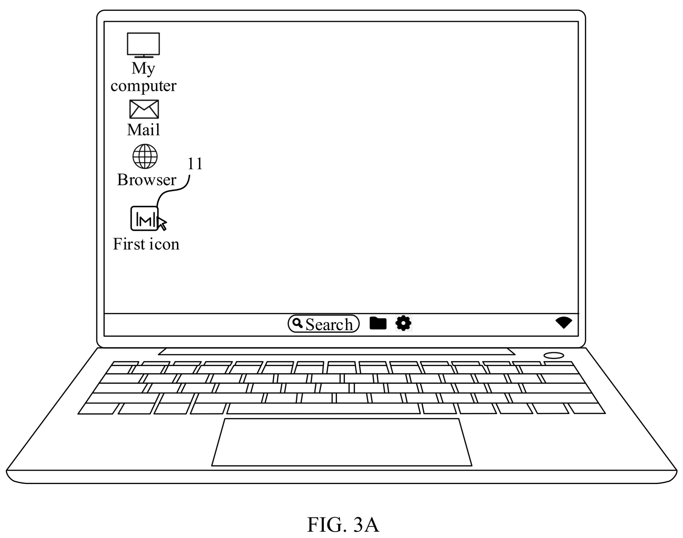

FIG. 3A is a schematic diagram of a first scenario in which a PC establishes a keyboard and mouse sharing connection according to an embodiment of this application.

As shown in FIG. 3A, in some embodiments, the PC displays a first icon 11 on a home screen page of the PC. For example, the first icon 11 is a computer manager icon.

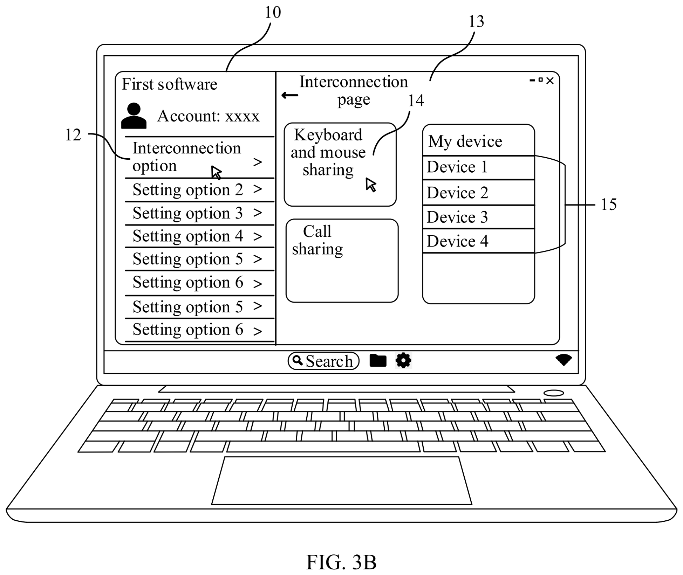

FIG. 3B is a schematic diagram of a second scenario in which a PC establishes a keyboard and mouse sharing connection according to an embodiment of this application.

As shown in FIG. 3B, a user performs a click operation on a first icon 11 by using an input device. In response to the click operation performed by the user on the first icon 11, the PC starts first software, and displays a first software interface 10. For example, the first software is computer manager software, a first side of the first software interface 10 is used for displaying a first option or a plurality of options, and these options include at least a first interconnection option 12. A second side of the first software interface 10 is configured to display a user page corresponding to each option.

In an initial state, the PC may select the first interconnecting option 12 by default on the first side of the first software interface 10, and display a first interconnection page 13 corresponding to the first interconnecting option 12 by default on the second side of the first software interface 10.

The first interconnection page 13 may include a plurality of function cards. These function cards are used for describing a first collaboration service that the PC may provide to the user. The first collaboration service may be, for example, keyboard and mouse sharing or call sharing. The function cards may include a keyboard and mouse sharing card 14, and the keyboard and mouse sharing card 14 may be used for enabling the PC to provide a keyboard and mouse sharing service. The first interconnection page 13 may further include a first device list 15. The first device list 15 may be used for displaying a device name of a near-field device that has established a connection to the PC. Specifically, when enabling a Bluetooth function, the PC can automatically discover a near-field device that is located around the PC, that also enables the Bluetooth function, and that is logged into with the same identity authentication account. In this way, the PC may automatically establish a Bluetooth connection to the near-field device, to complete self-networking, form an interconnection relationship, and display, in the first device list 15, a device name of the near-field device that has established a connection.

It should be noted herein that, when the PC does not select the first interconnecting option 12 by default on the first side of the first software interface 10, the user may click the first interconnecting option 12 by using the input device. In response to a click operation performed by the user on the first interconnecting option 12, the PC may select the first interconnecting option 12, and display the first interconnection page 13 on the second side of the first software interface 10. A display manner of the first interconnection page 13 is not limited in this embodiment of this application.

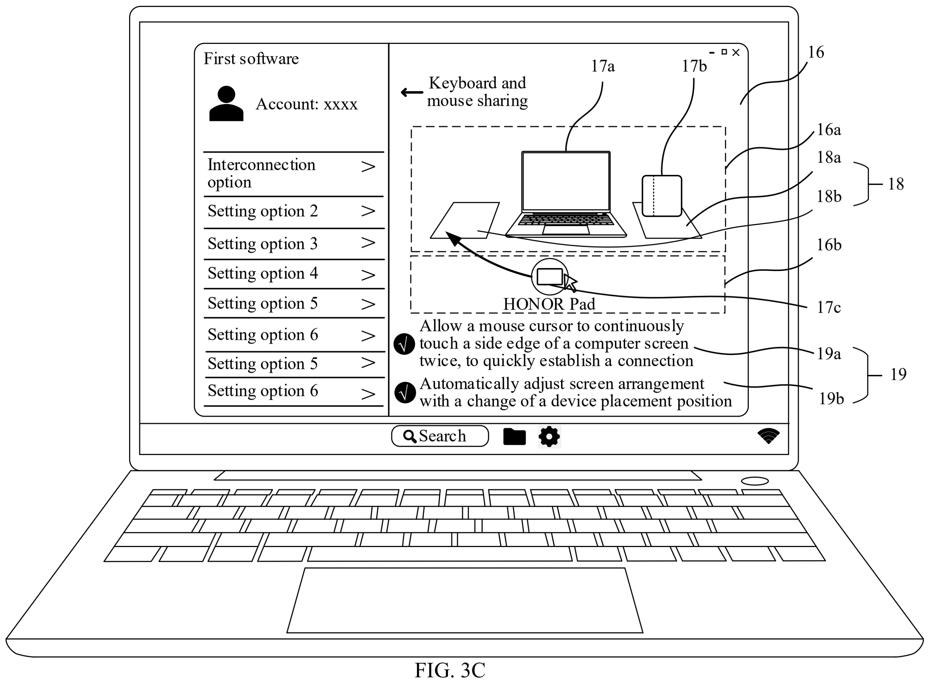

FIG. 3C is a schematic diagram of a third scenario in which a PC establishes a keyboard and mouse sharing connection according to an embodiment of this application.

As shown in FIG. 3C, a user performs a click operation on a keyboard and mouse sharing card 14 by using an input device. In response to the click operation on the keyboard and mouse sharing card 14 by the user, the PC displays a first keyboard and mouse sharing page 16 on a second side of a first software interface 10. The first keyboard and mouse sharing page 16 includes a first device display region 16a and a second device display region 16b. The PC may display the second device display region 16b below the first device display region 16a. The first device display region 16a includes a first device identifier 17a at a middle position of the region, and the first device identifier 17a may be used for presenting to the user that a current device is the PC. The first device display region 16a further includes a presentation platform 18 located near the first device identifier 17a. A plurality of presentation platforms 18 may be set, to present a near-field device that has established keyboard and mouse sharing with the PC. For example, the presentation platform 18 may include a first presentation platform 18a disposed on a right side of the first device identifier 17a, and a second presentation platform 18b disposed on a left side of the first device identifier 17a.

When the PC establishes a keyboard and mouse sharing connection to a mobile phone, the PC may display a second device identifier 17b on the first presentation platform 18a in a hover box, and the second device identifier 17b may be used for presenting to the user that the mobile phone has established a keyboard and mouse sharing connection to the PC. When the PC does not establish a keyboard and mouse sharing connection to the tablet computer, the PC displays the second presentation platform 18b as a blank presentation platform. In this case, the PC may display, in the second device display region 16b, a third device identifier 17c wrapped by a first bubble element, and the third device identifier 17c may be used for presenting, to the user, the tablet computer that is in an interconnection relationship but has not established a keyboard and mouse sharing connection to the PC. The PC may further display a device name of the tablet computer corresponding to the third device identifier 17c below the first bubble element. For example, the device name is "HONOR Pad".

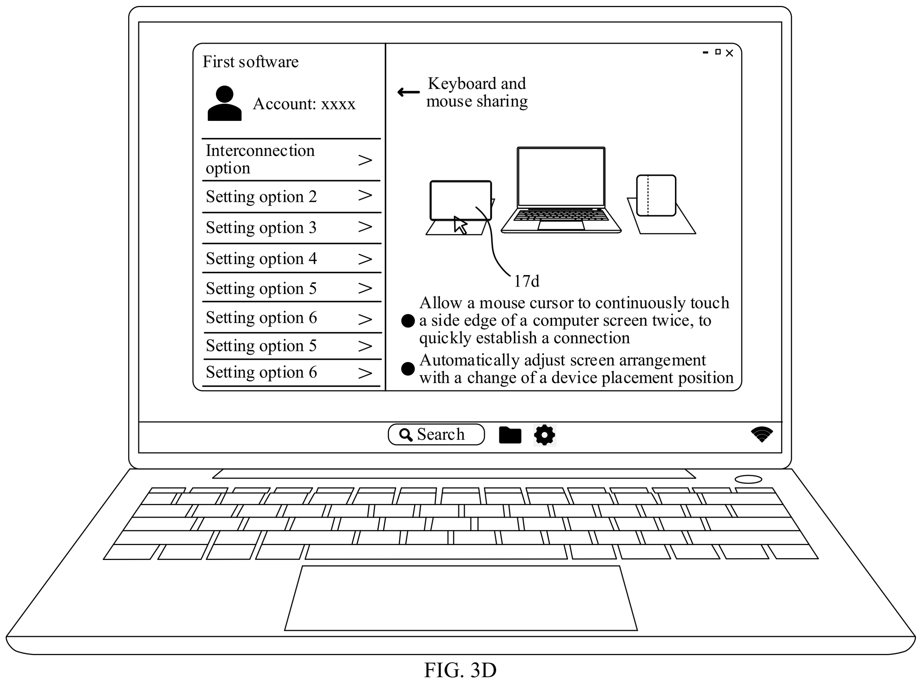

FIG. 3D is a schematic diagram of a fourth scenario in which a PC establishes a keyboard and mouse sharing connection according to an embodiment of this application.

As shown in FIG. 3D, if a keyboard and mouse sharing connection needs to be established between the PC and a tablet computer, a user may click a first bubble element. In response to an operation of dragging the first bubble element to a second presentation platform 18b by the user, the PC may display, on the second presentation platform 18b, a fourth device identifier 17d in a hover box. The fourth device identifier 17d may be used for presenting to the user that a keyboard and mouse sharing connection has been established between the tablet computer and the PC. In this way, the PC may establish a keyboard and mouse sharing connection to a mobile phone and the tablet computer that are in a same interconnection relationship.

This embodiment of this application includes, but is not limited to, a manner of establishing a keyboard and mouse sharing connection between the PC, the tablet computer, and the mobile phone in the foregoing embodiments.

As shown in FIG. 3C, in some other embodiments, the first keyboard and mouse sharing page 16 further includes at least two optional items 19, and a first optional item 19a may be used for enabling a shortcut operation manner of establishing a keyboard and mouse sharing connection. Specifically, the user may click the first optional item 19a, and in response to a click operation performed by the user on the first optional item 19a, the PC may enable or disable a function of "allowing a mouse cursor to continuously touch a side edge of a computer screen twice, to quickly establish a connection". A second optional option 19b may be used for enabling an auxiliary operation manner of keyboard and mouse sharing. Specifically, the user may click the second optional item 19b, and in response to a click operation performed by the user on the second optional item 19b, the PC may enable or disable a function of "automatically adjusting screen arrangement with a change of a device placement position". It should be noted herein that, when the function of "automatically adjusting screen arrangement with a change of a device placement position" is enabled, the PC may automatically identify a physical position of the tablet computer and/or the mobile phone located around the PC.

For example, after a keyboard and mouse sharing connection is established between electronic devices, in an initial state, the tablet computer is on the left side of the PC, the mobile phone is on the right side of the PC, and the mouse cursor is located on the display screen of the PC. In this case, in response to a moving operation performed by the user on the mouse cursor to the right border of the display screen of the PC, the mouse cursor may traverse to the display screen of the mobile phone. If the device placement position is changed, the tablet computer is placed between the PC and the mobile phone. In this case, the mouse cursor is located on the display screen of the mobile phone. In response to a moving operation performed by the user on the mouse cursor to the left border of the display screen of the mobile phone, the mouse cursor may traverse to the display screen of the tablet computer instead of traversing back to the display screen of the PC.

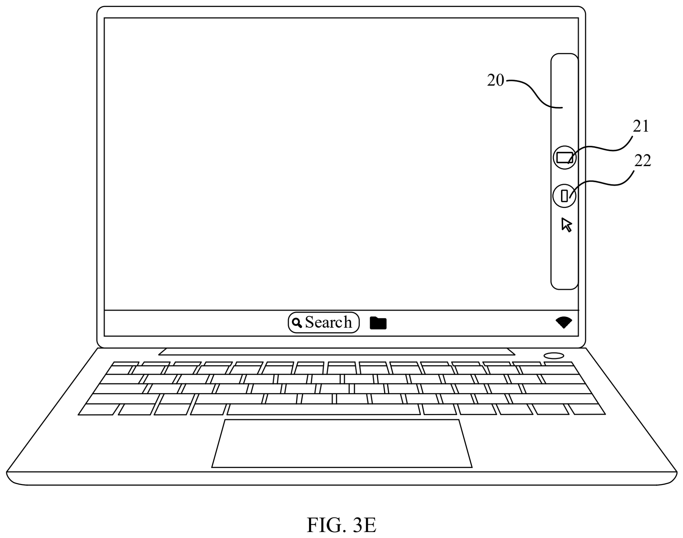

FIG. 3E is a schematic diagram of a scenario in which a PC establishes a keyboard and mouse sharing connection according to some other embodiments of this application.

As shown in FIG. 3E, in some other embodiments, the PC may enable a keyboard and mouse sharing connection by using an input device having a pairing relationship with the PC. The input device may be, for example, a wired mouse, a wireless mouse, a wired keyboard, and/or a wireless keyboard. After the PC enables a function of "allowing a mouse cursor to continuously touch a side edge of a computer screen twice, to quickly establish a connection", in response to an event that the mouse cursor continuously touches a border of a display screen of the PC twice, the PC displays a keyboard and mouse shortcut sharing page 20 at the border of the display screen of the PC, where the keyboard and mouse shortcut sharing page 20 includes a second bubble element 21 and a third bubble element 22. The second bubble element 21 may be used for presenting, to the user, a tablet computer that is in an interconnection relationship but has not established a keyboard and mouse sharing connection to the PC. The third bubble element 22 may be used for presenting, to the user, a mobile phone that is in an interconnection relationship but has not established a keyboard and mouse sharing connection to the PC. The user may perform a click operation on the second bubble element 21 and/or the third bubble element 22 by using the input device. In response to the click operation performed by the user on the second bubble element 21 and/or the third bubble element 22, the PC may establish a keyboard and mouse sharing connection to the tablet computer and/or the mobile phone. In this way, the PC may establish a keyboard and mouse sharing connection to the tablet computer and the mobile phone that are in a same interconnection relationship.

It should be noted herein that, when the PC establishes a keyboard and mouse sharing connection to another electronic device, the another electronic device first needs to enable a keyboard and mouse sharing service.

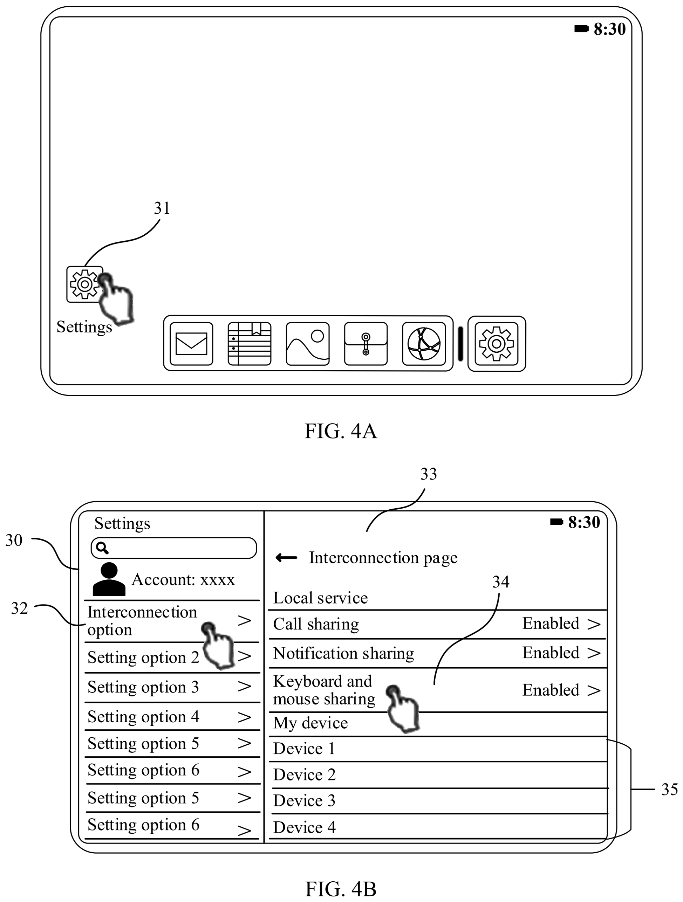

FIG. 4A is a schematic diagram of a first scenario in which a tablet computer establishes a keyboard and mouse sharing connection according to an embodiment of this application.

As shown in FIG. 4A, the tablet computer displays a second icon 31 on a home screen page of the tablet computer. For example, the second icon 31 is a setting icon.

FIG. 4B is a schematic diagram of a second scenario in which a tablet computer establishes a keyboard and mouse sharing connection according to an embodiment of this application.

As shown in FIG. 4B, a user performs a click operation on a second icon 31. In response to the click operation performed by the user on the second icon 31, the tablet computer starts second software, and displays a second software interface 30. For example, the second software may be setting software in system software, a first side of the second software interface 30 is used for displaying a first option or a plurality of options, and these options include at least a second interconnection option 32. A second side of the second software interface 30 is configured to display a user page corresponding to each option.

In an initial state, the tablet computer may select the second interconnecting option 32 by default on the first side of the second software interface 30, and display a second interconnection page 33 corresponding to the second interconnecting option 32 by default on the second side of the second software interface 30.

The second interconnection page 33 may include a plurality of first collaboration service options. The first collaboration service option is used for enabling the tablet computer to provide a second collaboration service. For example, the second collaboration service may be keyboard and mouse sharing or call sharing. The first collaboration service options may include a first keyboard and mouse sharing option 34, used for enabling the tablet computer to provide a keyboard and mouse sharing service. The second interconnection page 33 may further include a second device list 35. The second device list 35 may be used for displaying a device name of a near-field device that has established a connection to the tablet computer. Specifically, when a Bluetooth function is enabled, the tablet computer may automatically discover a near-field device that is located around the tablet computer, in which the Bluetooth function is also enabled, and to which a same identity authentication account is logged in. In this way, the tablet computer may automatically establish a Bluetooth connection to the near-field device, to complete self-networking, form an interconnection relationship, and display, in the second device list 35, a device name of the near-field device that has established a connection. The tablet computer may further display the second interconnection page 33 in another manner. For details, refer to the display manner of the first interconnection page 13. Details are not described in this embodiment of this application.

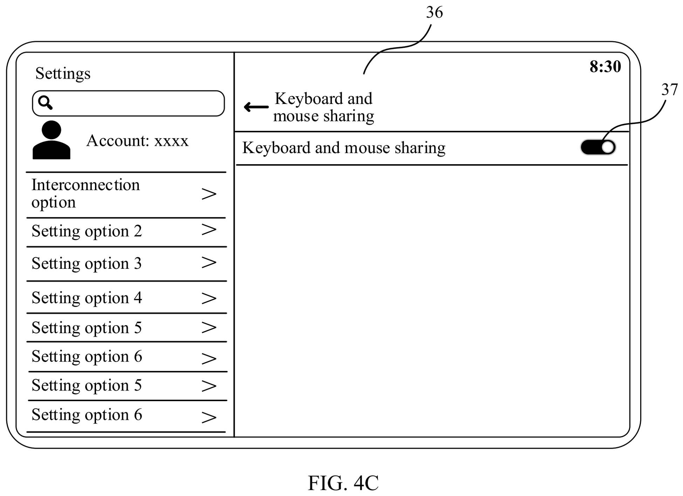

FIG. 4C is a schematic diagram of a third scenario in which a tablet computer establishes a keyboard and mouse sharing connection according to an embodiment of this application.

As shown in FIG. 4C, a user performs a click operation on a first keyboard and mouse sharing option 34. In response to the click operation on the first keyboard and mouse sharing option 34 by the user, the tablet computer displays a second keyboard and mouse sharing page 36 on a second side of a second software interface 30. The second keyboard and mouse sharing page 36 includes a first keyboard and mouse sharing switch 37. The user performs a click operation on the first keyboard and mouse sharing switch 37, and in response to the click operation performed by the user on the first keyboard and mouse sharing switch 37, the tablet computer may enable or disable a keyboard and mouse sharing service. When the first keyboard and mouse sharing switch 37 is in an enabled state, the tablet computer enables the keyboard and mouse sharing service. In this way, the tablet computer supports establishing a keyboard and mouse sharing connection to another electronic device in an interconnection relationship.

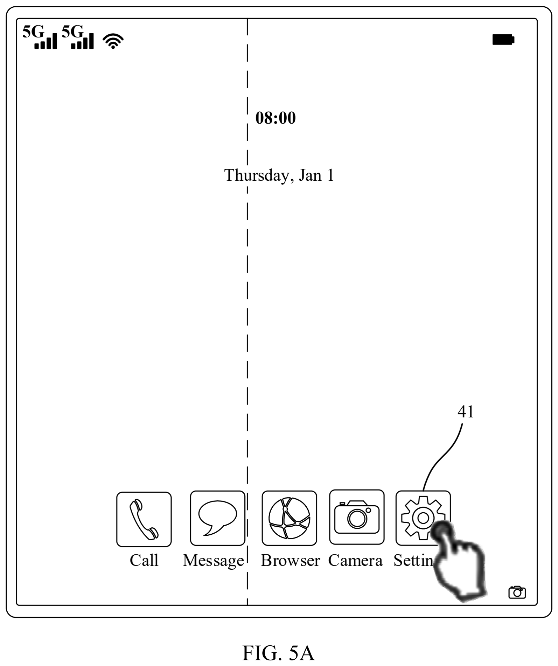

FIG. 5A is a schematic diagram of a first scenario in which a foldable mobile phone establishes a keyboard and mouse sharing connection according to an embodiment of this application.

As shown in FIG. 5A, the foldable mobile phone displays a third icon 41 on a home screen page of the foldable mobile phone. For example, the third icon 41 is a setting icon.

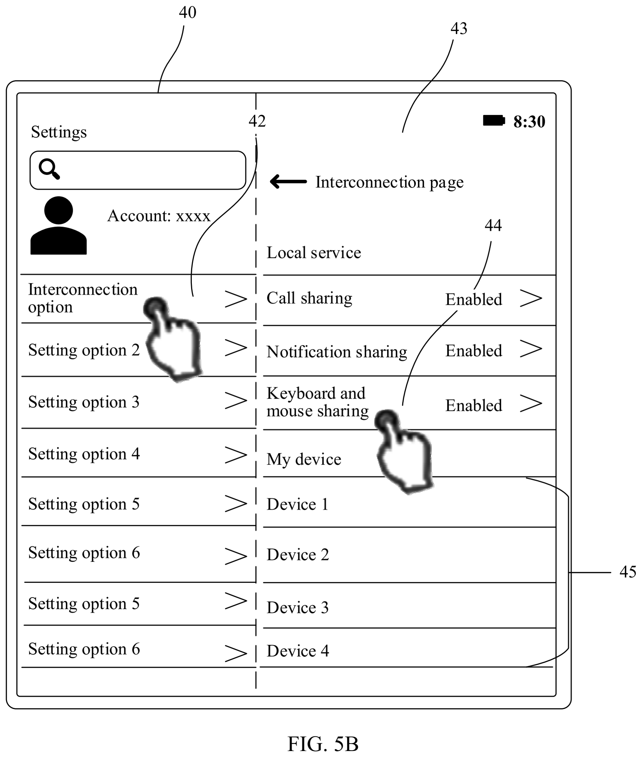

FIG. 5B is a schematic diagram of a second scenario in which a foldable mobile phone establishes a keyboard and mouse sharing connection according to an embodiment of this application.

As shown in FIG. 5B, a user performs a click operation on a third icon 41. In response to the click operation performed by the user on the third icon 41, the foldable mobile phone starts third software, and displays a third software interface 40. For example, the third software may be setting software in system software, a first side of the third software interface 40 is used for displaying a first option or a plurality of options, and these options include at least a third interconnection option 42. A second side of the third software interface 40 is configured to display a user page corresponding to each option.

In an initial state, the foldable mobile phone may select the third interconnecting option 42 by default on the first side of the third software interface 40, and display a third interconnection page 43 corresponding to the third interconnecting option 42 by default on the second side of the third software interface 40.

The third interconnection page 43 may include a plurality of second collaboration service options. The second collaboration service option is used for enabling the foldable mobile phone to provide a third collaboration service. For example, the third collaboration service may be keyboard and mouse sharing or call sharing. The second collaboration service options may include a second keyboard and mouse sharing option 44, used for enabling the foldable mobile phone to provide a keyboard and mouse sharing service. The third interconnection page 43 may further include a third device list 45. The third device list 45 may be used for displaying a device name of a near-field device that has established a connection to the foldable mobile phone. Specifically, when a Bluetooth function is enabled, the foldable mobile phone may automatically discover a near-field device that is located around the foldable mobile phone, in which the Bluetooth function is also enabled, and to which a same identity authentication account is logged in. In this way, the foldable mobile phone may automatically establish a Bluetooth connection to the near-field device, to complete self-networking, form an interconnection relationship, and display, in the third device list 45, a device name of the near-field device that has established a connection. The foldable mobile phone may further display the third interconnection page 43 in another manner. For details, refer to the display manner of the first interconnection page 13. Details are not described in this embodiment of this application.

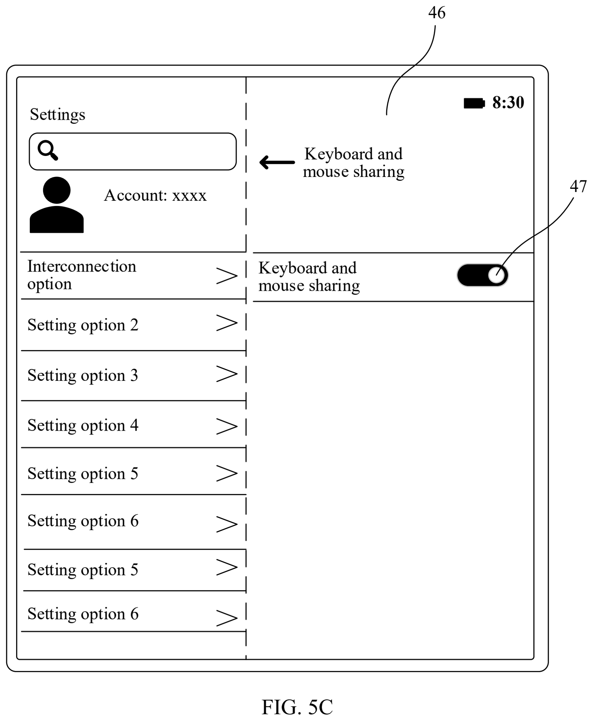

FIG. 5C is a schematic diagram of a third scenario in which a foldable mobile phone establishes a keyboard and mouse sharing connection according to an embodiment of this application. As shown in FIG. 5C, a user performs a click operation on a second keyboard and mouse sharing option 44. In response to the click operation on the second keyboard and mouse sharing option 4 by the user, the electronic device C may display a third keyboard and mouse sharing page 46. The third keyboard and mouse sharing page 46 includes a second keyboard and mouse sharing switch 47. The user performs a click operation on the second keyboard and mouse sharing switch 47, and in response to the click operation performed by the user on the second keyboard and mouse sharing switch 47, the foldable mobile phone may enable or disable a keyboard and mouse sharing service. When the second keyboard and mouse sharing switch 47 is in an enabled state, the foldable mobile phone enables the keyboard and mouse sharing service. In this way, the foldable mobile phone supports establishing a keyboard and mouse sharing connection to another electronic device in an interconnection relationship.

In this way, a keyboard and mouse sharing connection may be established between different electronic devices located in a same interconnection relationship.

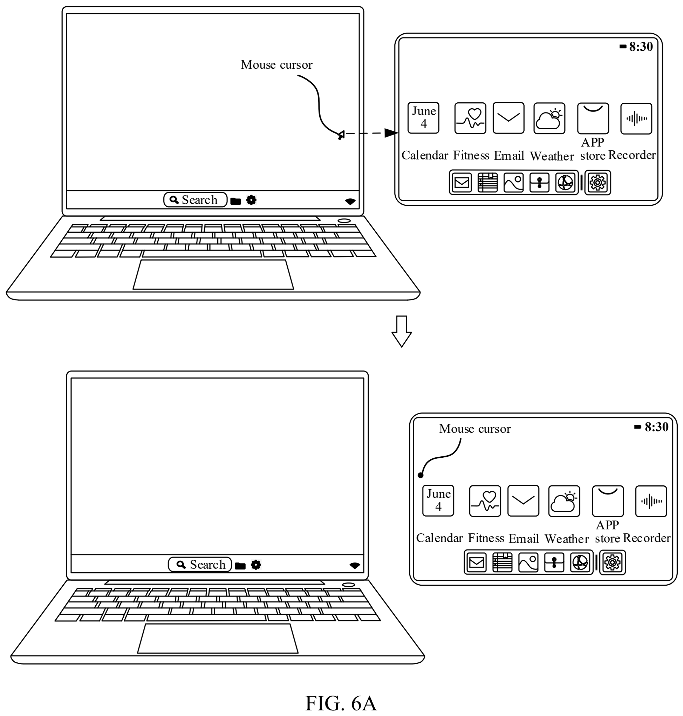

FIG. 6A is a schematic diagram of a scenario in which a mouse cursor is moved from a PC to a tablet computer according to an embodiment of this application.

As shown in FIG. 6A, after a keyboard and mouse sharing connection is established between different electronic devices, a mouse of the PC may be used for controlling the tablet computer and/or a foldable mobile phone. For example, the tablet computer is located on the right side of the PC. When the mouse cursor is located in the display screen of the PC, the user may perform a moving operation on the mouse cursor toward a right border of the display screen of the PC. In response to the moving operation performed by the user, the PC hides the mouse cursor on the right border of the PC, and the tablet computer displays the mouse cursor on a left border of the display screen of the tablet computer. In this case, the mouse cursor may be used for controlling the tablet computer.

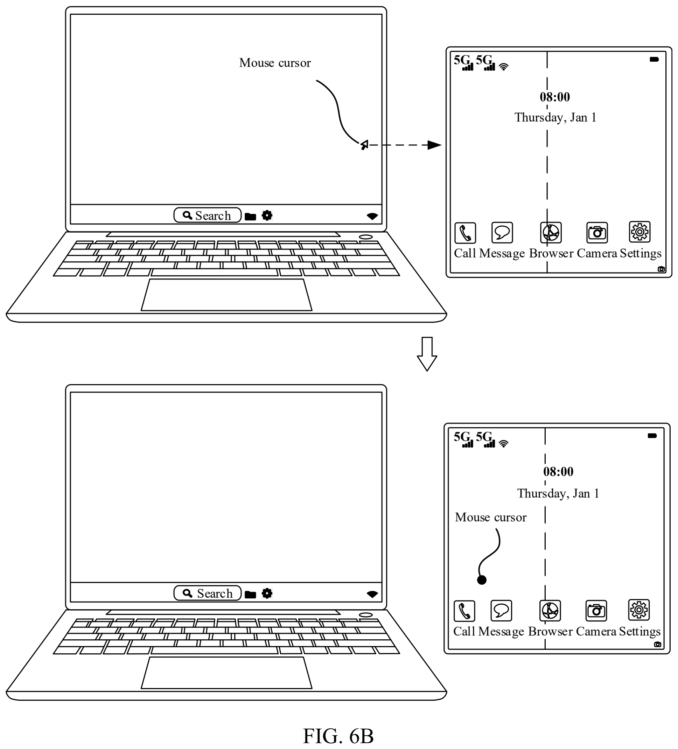

FIG. 6B is a schematic diagram of a scenario in which a mouse cursor is moved from a PC to a foldable mobile phone according to an embodiment of this application.

As shown in FIG. 6B, for example, the foldable mobile phone is disposed on the left side of the PC. When the mouse cursor is located in the display screen of the PC, the user may perform a moving operation on the mouse cursor toward a right border of the display screen of the PC. In response to the moving operation performed by the user, the PC hides the mouse cursor on the right border of the PC, and the foldable mobile phone displays the mouse cursor on a left border of the display screen of the foldable mobile phone. In this case, the mouse cursor may be used for controlling the foldable mobile phone.

In this way, a keyboard and mouse sharing connection may be performed between different electronic devices located in a same interconnection relationship. The keyboard and mouse sharing connection may be initiated by an input device of the PC, or may be initiated by an input device of a tablet computer. A device initiating the keyboard and mouse sharing connection is not limited in this embodiment of this application.

Based on establishment of a keyboard and mouse sharing connection, this application provides a first embodiment.

The first embodiment of this application is described by using that the first electronic device 200a is a PC, the second electronic device 200b is a tablet computer, and the input device 200c is a mouse. The first electronic device 200a is used as a sending-party device, and the second electronic device 200b is used as a receiving-party device. The input device 200c may be an external device of the first electronic device 200a, or may be an external device of the second electronic device 200b. After the first electronic device 200a and the second electronic device 200b establish keyboard and mouse sharing, the input device 200c may be configured to control both the first electronic device 200a and the second electronic device 200b.

The first electronic device 200a and the second electronic device 200b may be located in a same interconnection relationship, and establish a keyboard and mouse sharing connection based on the interconnection relationship. The first electronic device 200a and the second electronic device 200b may also establish a keyboard and mouse sharing connection in a manner other than establishing an interconnection relationship. This is not specifically limited in this embodiment of this application.

In this way, based on integration of capabilities such as keyboard and mouse sharing, screen extension, and screen mirroring, the user can drag, by using the mouse, the first window displayed on the PC into the extended window displayed on the tablet computer without manual connection, so as to implement cross-device and cross-system window dragging, thereby improving use experience of the user.

In the first embodiment of this application, a window may be dragged from the PC to the tablet computer.

Specifically, a window is a display form of an application user interface, and is equivalent to a container of the application user interface. The user may click a user interface of an application in a window by using the input device 200c, to perform human computer interaction with the application.

In electronic devices having different operating systems, there may have different window display specifications for a same application. In a same electronic device, a same type of application window may have a same window display specification for different applications, and different types of application windows may have different window display specifications for a same application.

For example, for an electronic device configured with a Windows operating system, types of windows include at least a maximized window, a minimized window, a normal window, and the like. Window display specifications are, for example, display positions of maximization, minimization, and close buttons. For an electronic device configured with an Android operating system, types of windows include at least a full-screen-form application window, a floating window, a split-screen-form application window, an intra-application split-screen window, and the like. The window display specifications are, for example, a style of a virtual button, a display position of the virtual button, and a user control instruction of the virtual button.

It should be noted herein that, in this embodiment of this application, only exemplary types of windows are described, and the windows may further have another type division manner. For example, in a Windows operating system, types of windows may further include a standard window, a dialog box window, and a desktop window. The standard window may be, for example, a folder window, an application window, or the like. This type of window may have a window size changed, and has a menu, a toolbar, a title bar, a status bar, a frame, a client region, and the like. The dialog box window may have various controls, for example, a command button, an edit box, a combo box, a radio button, and a check box. The desktop window may have only a client region. Types of windows are not specifically limited in this embodiment of this application.

The first embodiment of this application is described by using that a first window displayed on the PC matches a window display specification of a Windows operating system and an extended window displayed on the tablet computer matches a window display specification of an Android operating system.

In this application, the structure of the second electronic device 200b is described by using a tablet computer as an example.

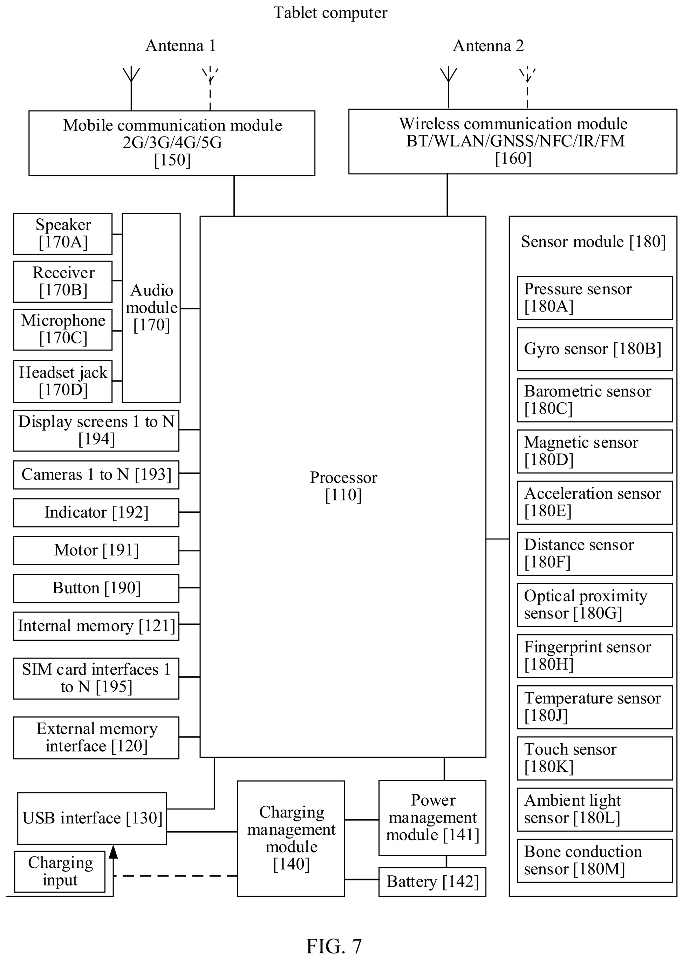

FIG. 7 is a schematic structural diagram of a tablet computer according to an embodiment of this application.

As shown in FIG. 7, the tablet computer may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the tablet computer. In some other embodiments of this application, the tablet computer may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal according to instruction operation code and a timing signal, and control obtaining and executing of instructions.

A storage may be further disposed in the processor 110 to store instructions and data. In some embodiments, the memory in the processor 110 is a cache. The storage may store instructions or data recently used or cyclically used by the processor 110. If the processor 110 needs to use the instructions or the data again, the processor 110 may directly invoke the instructions or the data from the memory.

The USB interface 130 is an interface compliant with a USB standard specification, and may specifically be a Mini USB interface, a Micro USB interface, a USB Type C interface, or the like. The USB interface 130 may be configured to be connected to a charger to charge the tablet computer, or may be configured to transmit data between the tablet computer and a peripheral device, or may be configured to connect to a headset to play audio by using the headset. The interface may be further configured to be connected to another electronic device such as an AR device.

The charging management module 140 is configured to receive charging input from a charger. The charger may be a wireless charger or a wired charger. In some embodiments of wired charging, the charging management module 140 may receive charging input from a wired charger through the USB interface 130. In some embodiments of wireless charging, the charging management module 140 may receive a wireless charging input by using a wireless charging coil of the tablet computer. When charging the battery 142, the charging management module 140 may further supply power to the electronic device through the power management module 141.

The power management module 141 is configured to connect to the battery 142, the charging management module 140 and the processor 110. The power management module 141 receives an input from the battery 142 and/or an input from the charging management module 140, and supplies power to the processor 110, the internal storage 121, the display screen 194, the camera 193, the wireless communication module 160, and the like. The power management module 141 may be further configured to monitor parameters such as a battery capacity, a quantity of battery cycles, and a battery health state (power leakage and impedance). In some other embodiments, the power management module 141 may be alternatively disposed in the processor 110. In some other embodiments, the power management module 141 and the charging management module 140 may be alternatively disposed in a same device.

A wireless communication function of the tablet computer may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the tablet computer may be configured to cover one or more communication bands. Different antennas may be further reused to improve utilization of the antennas. For example, the antenna 1 may be reused as a diversity antenna of a wireless local region network. In some other embodiments, the antenna may be used in combination with a tuning switch.

The mobile communication module 150 may provide wireless communication solutions for use on the tablet computer, including 2G, 3G, 4G, 5G, and the like. The mobile communication module 150 may include at least one filter, a switch, a power amplifier, a low noise amplifier (low noise amplifier, LNA), or the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal through an audio device (which is not limited to the speaker 170A, the receiver 170B, or the like), or displays an image or a video through the display screen 194. In some embodiments, the modem processor may be a separate device. In some other embodiments, the modem processor may be independent of the processor 110 and may be disposed in a same device as the mobile communication module 150 or another functional module.

The wireless communication module 160 can provide solutions for wireless communication such as wireless local region networks (wireless local region networks, WLAN) (such as Wi-Fi networks) and Bluetooth applied to the tablet computer. The wireless communication module 160 may be one or more devices into that integrate at least one communication processing module.

The tablet computer implements a display function by using the GPU, the display screen 194, the application processor, and the like. The GPU is a microprocessor for image processing and connects the display screen 194 and the application processor. The GPU is configured to perform mathematical and geometric computing for graphics rendering. The processor 110 may include one or more GPUs that perform program instructions to generate or change display information.

The tablet computer may implement a photographing function by using the ISP, the camera 193, the video codec, the GPU, the display screen 194, the application processor, and the like.

The external memory interface 120 may be configured to be connected to an external memory card, for example, a Micro SD card, to extend a storage capability of the tablet computer. The external memory card communicates with the processor 110 through the external memory interface 120 to implement a data storage function, for example, files such as music and videos are stored in the external memory card.

The internal storage 121 may be configured to store computer-executable program code, and the executable program code includes instructions. The internal storage 121 may include a program storage region and a data storage region. The program storage region can store an operating system, an application required for at least one function (such as a file transfer function and an album function), and the like. The data storage region may store data (for example, files, photos, and videos) and the like created during use of the tablet computer.

The tablet computer may implement an audio function, for example, music playing or recording, by using the audio module 170, the speaker 170A, the receiver 170B, the microphone 170C, the headset jack 170D, the application processor, and the like.

The button 190 includes a power button, a volume button, or the like. The button 190 may be a mechanical button, or may be a touch button. The tablet computer may receive a button-based input, and generate a button signal input related to a user setting and function control of the tablet computer.

The motor 191 may generate a vibrating prompt. The motor 191 may be used for an incoming call vibration prompt or for a touch vibration feedback. For example, touch operations performed on different applications (for example, photographing and audio playing) may correspond to different vibration feedback effects. For touch operations performed in different regions of the display screen 194, the motor 191 may also correspond to different vibration feedback effects.

The indicator 192 may be an indicator light, and may be configured to indicate a charging status or a battery level change, or may be configured to indicate a message, a missed call, a notification, and the like.

The SIM card interface 195 is configured to connect to an SIM card. The SIM card may be inserted into the SIM card interface 195 or detached from the SIM card interface 195, to implement contact with or separation from the tablet computer. The tablet computer may support one or N SIM card interfaces, where N is a positive integer greater than 1. The SIM card interface 195 can support a nano SIM card, a micro SIM card, a SIM card, and the like. A plurality of cards may be inserted into the same SIM card interface 195 together. Types of the plurality of cards may be the same or different. The SIM card interface 195 may be further compatible with SIM cards of different types. The SIM card interface 195 may be further compatible with an external storage card. The tablet computer interacts with a network by using the SIM card, to implement functions such as a call and data communication.

It may be understood that the structure illustrated in this embodiment of this application does not constitute a specific limitation on the tablet computer. In some other embodiments of this application, the electronic device may include more or fewer components than those shown in the figure, or combine some components, or split some components, or have different component arrangements. The components in the figure may be implemented by hardware, software, or a combination of software and hardware.

The software system of the tablet computer may use a layered architecture, an event-driven architecture, a microkernel architecture, a microservice architecture, or a cloud architecture. In this embodiment of the present invention, an Android system of a layered architecture is used as an example to describe the software structure of the tablet computer.

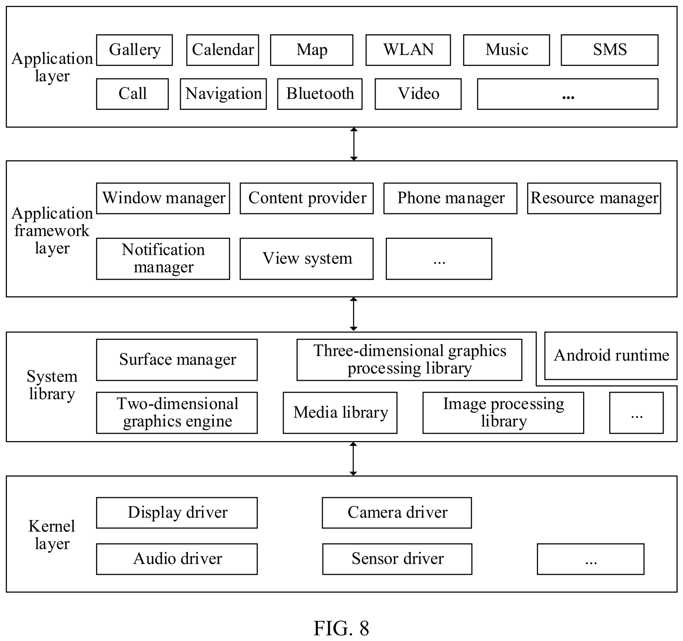

FIG. 8 is a block diagram of the software structure of the tablet computer in this embodiment of this application.

In the layered architecture, software is divided into several layers, and each layer has a clear role and task. Layers communicate with each other through a software interface. In some embodiments, the Android system is divided into four layers that are respectively an application layer, an application framework layer, an Android runtime (Android runtime) and system library, and a kernel layer from top to bottom.

The application layer may include a series of application packages.

As shown in FIG. 8, the application packages may include applications such as camera, gallery, calendar, phone, maps, navigation, WLAN, Bluetooth, music, videos, and SMS messages.

The application framework layer provides an application programming interface (application programming interface, API) and a programming framework for an application at the application layer. The application framework layer includes some predefined functions.

As shown in FIG. 8, the application framework layer may include a window manager, a content provider, a view system, a phone manager, a resource manager, a notification manager, and the like.

The window manager is configured to manage a window application. The window manager may obtain a size of a display screen, determine whether a status bar exists, lock a screen, take a screenshot, and so on.

The content provider is configured to store and obtain data, and enable the data to be accessible to an application. The data may include a video, an image, an audio, phone calls made and answered, a browsing history, favorites, a phone book, and the like.

The view system includes visual controls such as a text display control and a picture display control. The view system may be configured to construct an application. A display interface may be composed of one or more views. For example, a display interface including an SMS message notification icon may include a view for displaying text and a view for displaying a picture.

The phone manager is configured to provide a communication function of the tablet computer, for example, call status management (including connecting, hanging-up, and the like).

The resource manager provides various resources for an application, such as a localized string, an icon, a picture, a layout file, and a video file.

The notification manager enables an application to display notification information in a status bar, may be configured to convey a notification-type message, and may automatically disappear after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information appears in the state bar for prompt, a prompt tone is made, the electronic device vibrates, or an indicator light flashes.

The Android Runtime includes a kernel library and a virtual machine. The Android runtime is responsible for scheduling and managing the Android system.

The core library includes two parts: One part is a functional function that needs to be invoked by a java language, and the other part is a core library of Android.

The application layer and the application framework layer run in the virtual machine. The virtual machine executes java files at the application layer and the application framework layer as binary files. The virtual machine is configured to execute functions such as object lifecycle management, stack management, thread management, security and exception management, and garbage collection.

The system library may include a plurality of functional modules such as a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The two-dimensional graphics engine is a drawing engine for two-dimensional drawings.

The kernel layer is a layer between hardware and software. The kernel layer includes at least a display drive, a camera drive, an audio drive, and a sensor drive.

In this way, based on a hardware structure and a software structure of the tablet computer, the tablet computer can display the extended window.

The first embodiment of this application is described below with reference to the accompanying drawings.

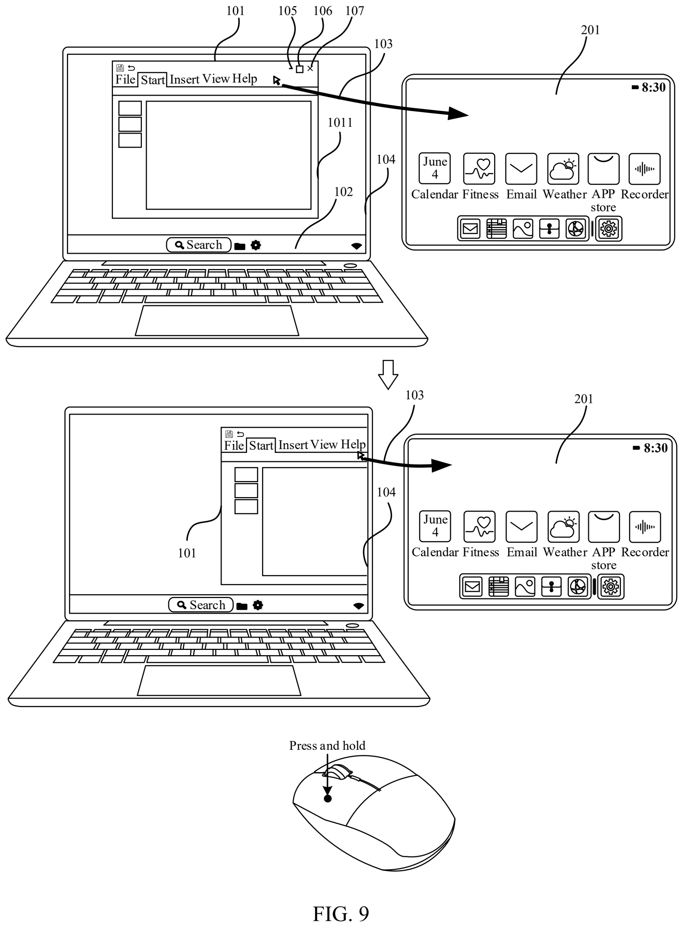

FIG. 9 is a first schematic diagram of a first embodiment according to embodiments of this application.

As shown in FIG. 9, in some embodiments, a user may place a tablet computer to a right side of a PC, and place the tablet computer in a landscape state.

It should be noted herein that, in this embodiment of this application, only an exemplary description is provided by using that the tablet computer is placed in the landscape state to the right side of the PC. During specific implementation, the tablet computer may be placed in a portrait state, and the tablet computer may be placed to a left side of the PC. A placement state and a placement position of the tablet computer are not limited in this embodiment of this application, and refer to each other for implementations corresponding to various placement states and placement positions of the tablet computer.

The PC displays a first window 101 and a first taskbar 102 on a first desktop, and displays a first user page of a first application in the first window 101. The first window 101 is a window matching a first operating system, and may be specifically an application window of the first application. The first application may be any application in the PC. For example, the first application is a presentation application.

It should be noted herein that, in this embodiment of this application, only an example in which the PC displays the first window 101 on the first desktop is used for description. The first window 101 may also be displayed on another page, for example, a browser page. This is not limited in this embodiment of this application.

When the PC is connected to a mouse, a first cursor is displayed on the first desktop.

The user may move the first cursor to the first window 101 by using the mouse, press and hold a mouse button, and drag the first window 101 along a first path 103. The first cursor is a cursor associated with the mouse in the PC, and the first path 103 is a path pointing to a direction in which a side of the PC adjacent to the tablet computer is located. For example, a right edge of a screen of the PC is adjacent to a left edge of a screen of the tablet computer, and therefore the first path 103 points to a direction in which the right edge of the screen of the PC is located.

The PC has a first screen edge 104, and the first screen edge 104 may be a screen edge on a side of the display screen of the PC close to the tablet computer.

In a process in which the first cursor drags the first window 101 to move toward a first screen edge 104 of the PC, when a first window edge 1011 of the first window 101 does not reach the first screen edge 104, the first window edge 1011 moves toward the first screen edge 104, and the first window edge 1011 is a window edge on a side of the first window 101 close to the first screen edge 104.

When the first window edge 1011 moves out of the first screen edge 104 and the first cursor does not reach the first screen edge 104, the PC moves the first window 101, to move a part of the first window 101 out of the first screen edge 104. When the user presses and holds the mouse button and does not lift the hand, and the first cursor does not reach the first screen edge 104, content on the display screen of the tablet computer does not change. For example, in an initial state, the tablet computer displays a third desktop 201, and the third desktop 201 may be a home screen interface of the tablet computer. When the user presses and holds the mouse button, drags the first window 101, and does not lift the hand, and the first cursor does not reach the first screen edge 104, the tablet computer displays the third desktop 201.

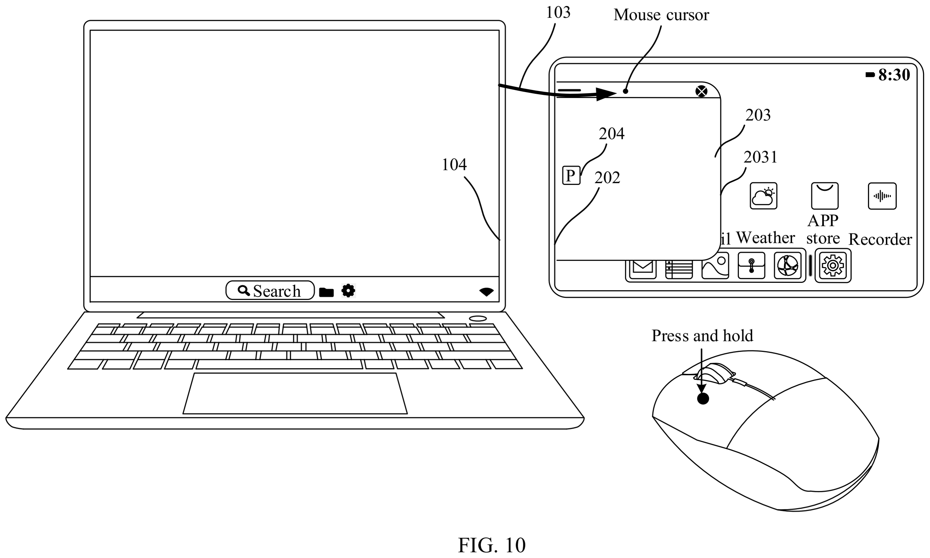

FIG. 10 is a second schematic diagram of a first embodiment according to embodiments of this application.

As shown in FIG. 10, a tablet computer has a second screen edge 202. The second screen edge 202 may be a screen edge on a side of a display screen of the tablet computer close to a PC, and is directionally opposite to a first screen edge 104.

When a user presses and holds a mouse button to drag a first window 101 along a first path 103, and does not lift the hand, the user may drag a first cursor from the first screen edge 104 to a second screen edge 202 along the first path 103.

When the first cursor moves out from the first screen edge 104 to the second screen edge 202 of the tablet computer, the PC hides the first cursor and the first window 101, and the tablet computer displays an extended window 203 and a second cursor at the second screen edge 202 and displays a transient page in the extended window 203, where the extended window 203 is a window matching the second operating system.

The transient page is a page on which content is not loaded. The transient page may display a transient identifier 204, and the transient identifier 204 may be an application identifier of a first application. For example, the transient identifier 204 is a presentation application identifier, used for indicating that a presentation application is to be loaded in the extended window 204.

The second cursor is an associated cursor of the mouse in the tablet computer. Display forms of the first cursor associated with the same mouse on the PC and the second cursor associated with the same mouse on the tablet computer may be different. For example, the first cursor on the PC is displayed in a form of an arrow, and the second cursor on the tablet computer is displayed in a gray circle. A display form of a mouse cursor is not limited in this embodiment of this application.

Because the user does not lift the hand, the extended window 203 is in a dragged state in this case.

When the second cursor reaches the second screen edge 202, the extended window 203 usually displays only a partial region.

The user may continue to drag the extended window 203 toward a central region of the display screen of the tablet computer after the second cursor reaches the second screen edge 202, so that the extended window 203 is at a position convenient for the user to operate. It should be noted herein that, the user may drag the extended window 203 to any region on the display screen of the tablet computer. In this embodiment of this application, only an example in which the extended window is dragged to the central region is used for description, and a position to which the extended window 203 is dragged is not limited in this embodiment of this application.

In a process in which the second cursor drags the extended window 203 to move in a direction away from the second screen edge 202, the tablet computer displays a part of the extended window 203 moved into the second screen edge 202.

In this way, as the area of the part of the extended window 203 moved into the second screen edge 202 gradually increases, the user may drag the extended window 203 to a position convenient for operation.

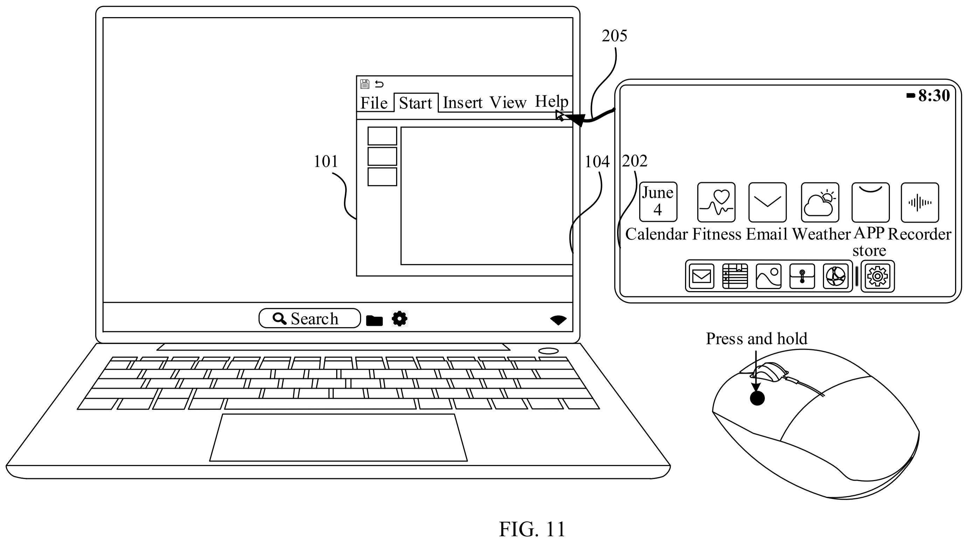

FIG. 11 is a third schematic diagram of the first embodiment according to this application.

As shown in FIG. 10 and FIG. 11, when the user presses and holds the mouse button and does not lift the hand, and after the second cursor reaches the second screen edge 202, the mouse cursor may be further dragged from the second screen edge 202 back to the first screen edge 104 along a second path 205.

In a process in which the second cursor drags the extended window 203 to move toward the second screen edge, when a second window edge 2031 of the extended window 203 moves in a direction close to the second screen edge 202 and the second cursor does not reach the second screen edge 202, the tablet computer moves the extended window 203, to move a part of the extended window 203 out of the second screen edge 202, where a direction of the second window edge 2031 is the same as that of the first window edge 1011.

When the second cursor moves out from the second screen edge 202 to the first screen edge 104 of the PC, the tablet computer hides the second cursor and the extended window 203, and the PC displays the first cursor and the first window 101 at the first screen edge 104. The user may perform a hand-lifting operation on the mouse when the PC displays the first cursor and the first window 101 at the first screen edge 104.

The PC displays the first window 101 on the first desktop in response to a release operation performed by the user on the first cursor and the first window 101.

That is, in a process in which the user drags the first window 101 from the PC to the tablet computer, when the user presses and holds the mouse button and does not lift the hand, the first window 101 can still be dragged back to the PC even if the first window 101 is completely dragged out of the first screen edge 104 of the PC.

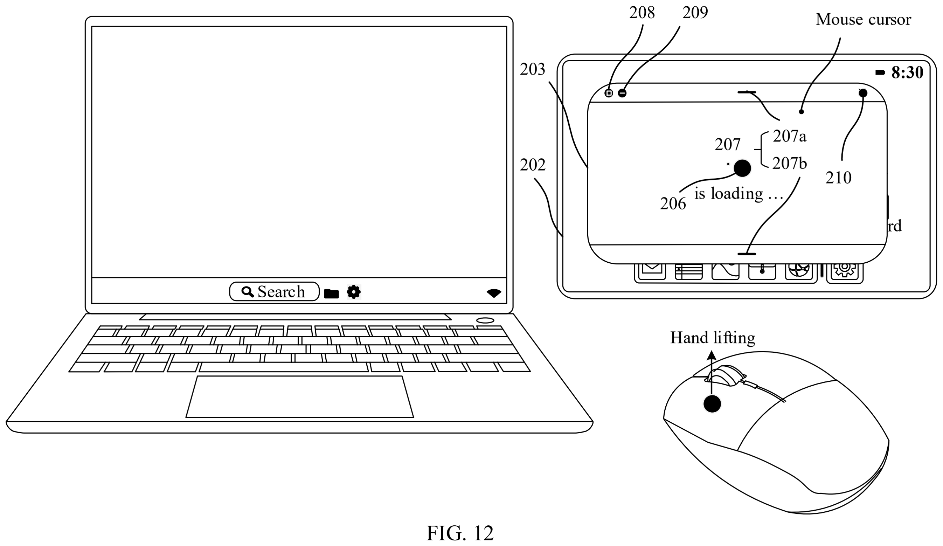

FIG. 12 is a fourth schematic diagram of the first embodiment according to this application.

As shown in FIG. 12, after the user continues to drag the extended window 203 toward the central region of the tablet computer after the second cursor reaches the second screen edge 202, to drag the extended window 203 to a position convenient for the user to operate, a hand-lifting operation may be performed on the mouse. For example, the extended window 203 may display all regions of the extended window at a position convenient for the user to operate.

In response to a release operation performed by the user on the second cursor and the extended window 203, the tablet computer displays a loading page in the extended window 203. The loading page is used for indicating that the tablet computer is loading the second desktop.

In a process in which the tablet computer loads the second desktop, the tablet computer displays a first element 206 on the loading page, and the first element 206 may be used for indicating that the tablet computer is in a state of loading the second desktop. For example, the first element 206 may be two water-beaded elements that are continuously separated and fused.

It should be noted herein that, after the second cursor reaches the second screen edge 202 and the user performs a hand-lifting operation on the mouse, the user cannot drag the extended window 203 back to the PC.

When displaying all regions of the extended window 203, the extended window further displays a series of buttons that facilitate user operations. Functions of the buttons are described in detail in the following embodiments.

It should be further noted that, after the extended window 203 is released to the tablet computer, the user not only may operate the tablet computer by using the mouse, but also may operate the tablet computer by using a touchscreen. A specific operation manner may be set according to a habit of the user. This is not limited in this embodiment of this application.

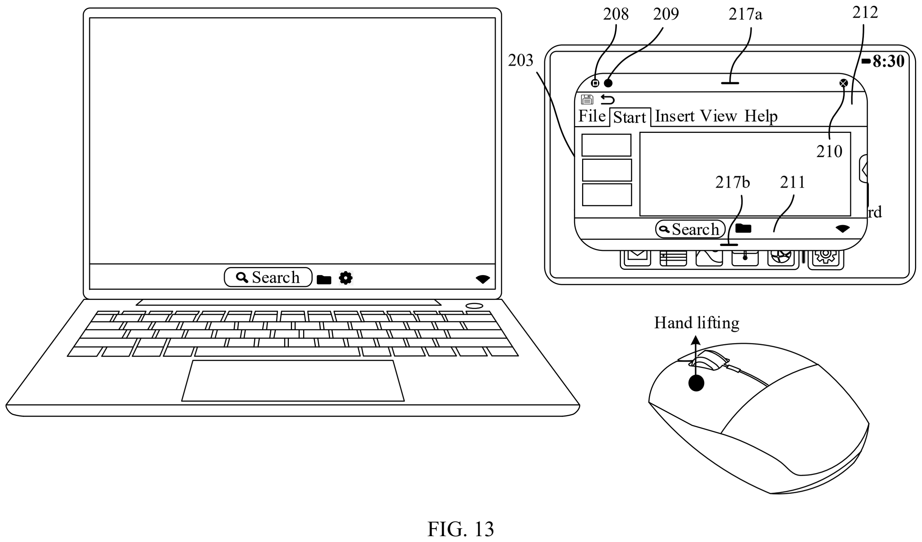

In each of the following accompanying drawings of this application, an example in which a user performs a manual operation on a tablet computer by using a touchscreen is used for description. FIG. 13 is a fifth schematic diagram of the first embodiment according to this application.

As shown in FIG. 12 and FIG. 13, in response to a release operation performed by the user on the second cursor and the extended window 203, the tablet computer displays a loading page in the extended window 203, displays the second desktop after loading of the second desktop is completed, and displays, on the second desktop, the second taskbar 211 and the maximally displayed second window 212. The second desktop may be obtained by projecting the first desktop based on establishment of an extended screen. Content of the second window 212 is the same as content of the first window 101, and content of the second taskbar 211 is the same as content of the first taskbar 102.

In this way, because content of the second window 212 is the same as that of the first window 101, the user may interact with the first application in the second window 212, thereby improving user experience. In addition, content displayed in the extended window 203 enables the user to have a visual effect of dragging the first window 101 from the PC to the tablet computer.

Further, the tablet computer may display the extended window 203 in a floating window form in a landscape state by default. The floating window form in the landscape state is set based on a scenario in which a window is dragged from the PC to the tablet computer. In this way, the floating window form facilitates displaying content in the PC. In this embodiment of this application, only an example in which the extended window 203 is in a floating window form in a landscape state is used for description. Actually, the extended window 203 may also have another form such as a full-screen form or a split-screen form. For example, a display form of the extended window 203 may be determined according to a position at which the second cursor is after the user drags the extended window 203 and performs a hand-lifting operation on the mouse. For example, after the user drags the extended window 203 and performs a hand-lifting operation on the mouse, the second cursor is located in a middle region of the display screen of the tablet computer, and the tablet computer may display the extended window 203 in a floating window form. After the user drags the extended window 203 and performs a hand-lifting operation on the mouse, the second cursor is located at a top border of the display screen of the tablet computer, and the tablet computer may display the extended window 203 in a full-screen form. After the user drags the extended window 203 and performs a hand-lifting operation on the mouse, the second cursor is located at a side border of the display screen of the tablet computer, and the tablet computer may display the extended window 203 in a split-screen form. In this embodiment of this application, a display form of the extended window 203 is not limited.

Further, the extended window 203 may be displayed by using a window display specification of an Android operating system. The extended window 203 may be provided with a title bar, and a floating button (bar) 207 may be disposed in the title bar. The title bar may include a top title bar disposed in a top region of the extended window 203 and a bottom title bar disposed in a bottom region of the extended window 203. The floating button 207 may include a first floating button 217a disposed in a middle region of the top title bar and a second floating button 217b disposed in a middle region of the bottom title bar.

It should be noted herein that, shapes of the first floating button 217a and the second floating button 217b may include at least one of a strip, a circle, and an annulus. This is not limited in this embodiment of this application.

The first floating button 217a may be used for moving the extended window 203.

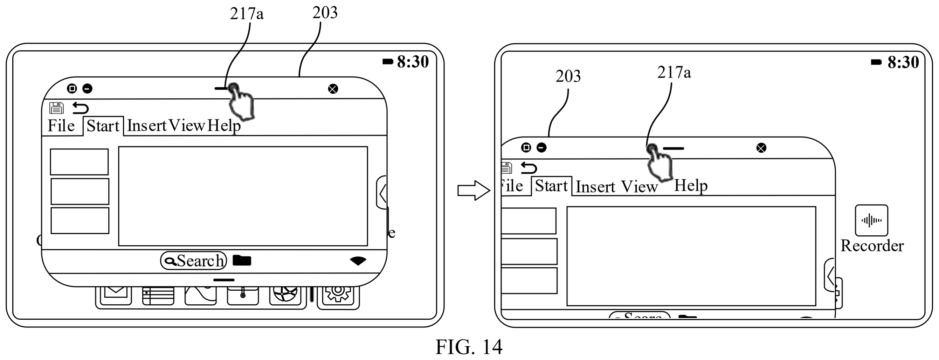

FIG. 14 is a sixth schematic diagram of the first embodiment according to this application.

As shown in FIG. 14, the user may perform a drag operation on a first floating button 217a, and the user may manually press and hold the first floating button 217a, to drag an extended window 203. Alternatively, the user moves a second cursor to the first floating button 217a by using a mouse, presses and holds a mouse button, and drags the first floating button 217a, to drag the extended window 203.

In response to a drag operation performed by the user on the first floating button 217a, the tablet computer moves the extended window 203.

A second floating button 217b may be used for maximally displaying the extended window 203 or minimally displaying the extended window 203.

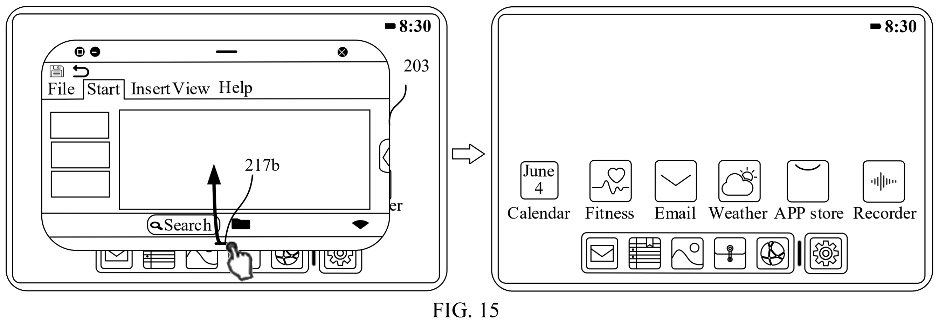

FIG. 15 is a seventh schematic diagram of the first embodiment according to this application.

As shown in FIG. 15, the user may perform a slide-up operation on a second floating button 217b, to minimally display an extended window 203.

In response to the slide-up operation performed by the user on the second floating button 217b, the tablet computer minimally displays the extended window 203. The minimally displaying the extended window 203 has a plurality of scenarios. For example, the tablet computer may minimally display the extended window 203 to the background, or may minimally display the extended window 203 to a floating ball, or may minimally display the extended window 203 to a floating window. A manner for minimally displaying the extended window 203 may be set according to an actual situation. This is not limited in this embodiment of this application.

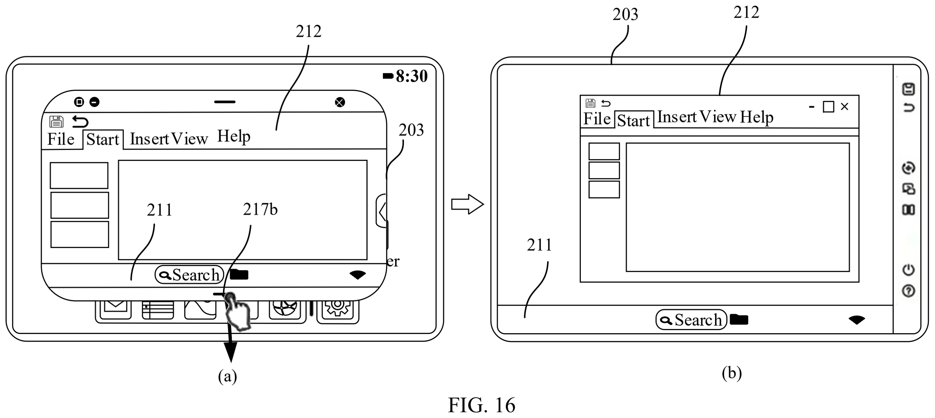

FIG. 16 is an eighth schematic diagram of the first embodiment according to this application.

As shown in FIG. 16, the user may perform a slide-down operation on a second floating button 217b, to maximally display an extended window 203.

In response to the slide-down operation performed by the user on the second floating button 217b, the tablet computer maximally displays the extended window 203.

As shown in (a) of FIG. 16, when the extended window 203 is in a floating window form, the tablet computer maximally displays the second window 212 in the extended window 203. As shown in (b) of FIG. 16, when the extended window 203 is in a full-screen form, the tablet computer displays the second desktop in the extended window 203 and displays the second window on the second desktop. The second window 212 is a window whose window display specification is not set. It can be learned that content displayed when the extended window 203 is in the floating window form is different from content displayed when the extended window is in the full-screen form. A reason why the difference occurs is further described below.

The extended window 203 displays content in the PC based on establishment of screen extension. Specifically, the PC displays a first desktop on a display screen, and displays a first window 101 on the first desktop. In a process in which the user drags the first window 101 on the display screen of the PC, the user actually cannot perform dragging only the first user interface in the first window 101 and sending only the first user interface to the tablet computer, but sends all content of the display screen of the PC to the tablet computer. After the second cursor reaches the second screen boundary 202, in response to a release operation performed by the user on the second cursor and the extended window 203, the tablet computer displays the extended window 203 in a floating window form, and establishes a screen extension connection in the extended window 203. The process of establishing the screen extension connection includes a process in which the tablet computer receives all content in the display screen of the PC. After receiving all content in the display screen of the PC that is sent by the PC, the tablet computer displays the second desktop in the extended window 203 and displays the second taskbar 211 and the maximally displayed second window 212 on the second desktop. That is, the second window 212 covers all regions on the second desktop except the second taskbar 211. In this way, this embodiment of this application has a visual effect of dragging the first user page of the first window 101 on the PC to the extended window 203 of the tablet computer, so that the tablet computer displays, in the extended window 203, the same content as that in the first window 101.

In response to a slide-down operation performed by the user on the second floating button 217b, the tablet computer maximally displays the extended window 203, displays the second desktop in the extended window 203, and displays the second window 212 in a middle region of the second desktop.

It should be noted herein that, when the extended window 203 is maximally displayed, no title bar is set, and the second desktop is displayed in full screen on the display screen of the tablet computer.

The second window 212 is not fixedly displayed in the extended window 203. Therefore, when the extended window 203 is in a floating window form or a full-screen form, the user can perform a drag operation on the second window 212 to regulate the position of the second window 212.

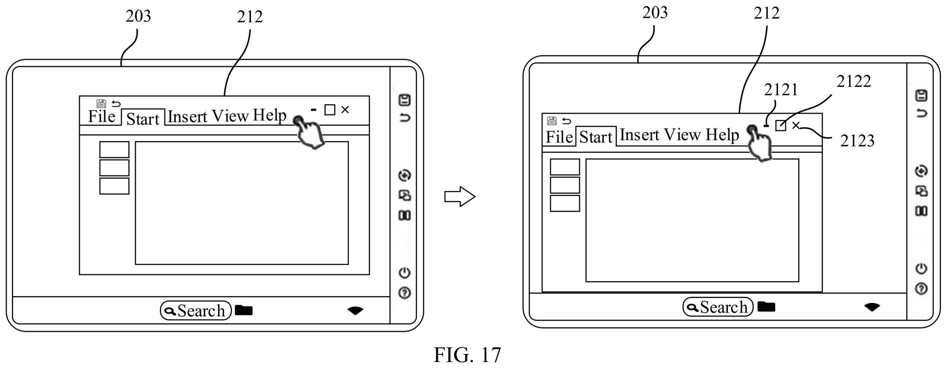

FIG. 17 is a ninth schematic diagram of the first embodiment according to this application.

As shown in FIG. 17, an example in which the extended window 203 is in a full-screen form is used for description. The user may perform a drag operation on the second window 212. The user may perform the drag operation by manually long-pressing the second window 212. Alternatively, the user may move the second cursor to the second window 212 by using a mouse, and press and hold a mouse button, to perform the drag operation on the second window 212.

In response to the drag operation performed by the user on the second window 212, the tablet computer moves the second window 212.

When the extended window 203 is displayed in the full-screen form, the second window 212 may include a first minimization button 2121, a first maximization button 2122, and a first close button 2123.

The user may perform a click operation on the first minimization button 2121, so that the second window 212 is minimally displayed in the extended window 203 (this process is not shown in the accompanying drawing).

In response to a click operation performed by the user on the first minimization button 2121, the tablet computer minimally displays the second window 212 in the extended window 203. For example, the tablet computer minimally displays the second window 212 to the background in the extended window 203. Because the second window 212 may be used for operating the first application, when the tablet computer minimally displays the second window 212 to the background, an application icon of the first application may be displayed in the second taskbar 211. In this way, the user may perform a click operation on the application icon of the first application in the second taskbar 211, and in response to the click operation performed by the user on the application icon of the first application in the second taskbar 211, the tablet computer may restore displaying the second window 212 from the background.

The user may perform a click operation on the first maximization button 2122, so that the second window 212 is maximally displayed in the extended window 203 (this process is not shown in the accompanying drawing).

In response to a click operation performed by the user on the first maximization button 2122, the tablet computer maximally displays the second window 212 in the extended window 203. In this way, the tablet computer may cover, in the extended window 203, the second window 212 on all regions of the second desktop except the second taskbar 211.

The user may perform a click operation on the first close button 2123, so that the second window 212 is closed in the extended window 203 (this process is not shown in the accompanying drawing).

In response to a click operation performed by the user on the first close button 2123, the tablet computer closes the second window 212 in the extended window 203.

It should be noted herein that, when the extended window 203 is displayed in a floating window form, because the extended window 203 already displays the second maximization button 208, the second minimization button 209, and the second close button 210 shown in FIG. 13, the second window 212 may display none of the first minimization button 2121, the first maximization button 2122, and the first close button 2123. In this way, in a process in which the user drags a window from the PC to the tablet computer, displaying the extended window 203 and the second window 212 in the extended window 203 can have a visual effect of displaying only one window, which can improve user experience.

In this embodiment of this application, when the extended window 203 is displayed in a floating window form or displayed in a full-screen form, whether to set the first minimization button 2121, the first maximization button 2122, and the first close button 2123 in the second window 212 may be selected according to a habit of the user. This is not limited in this embodiment of this application.

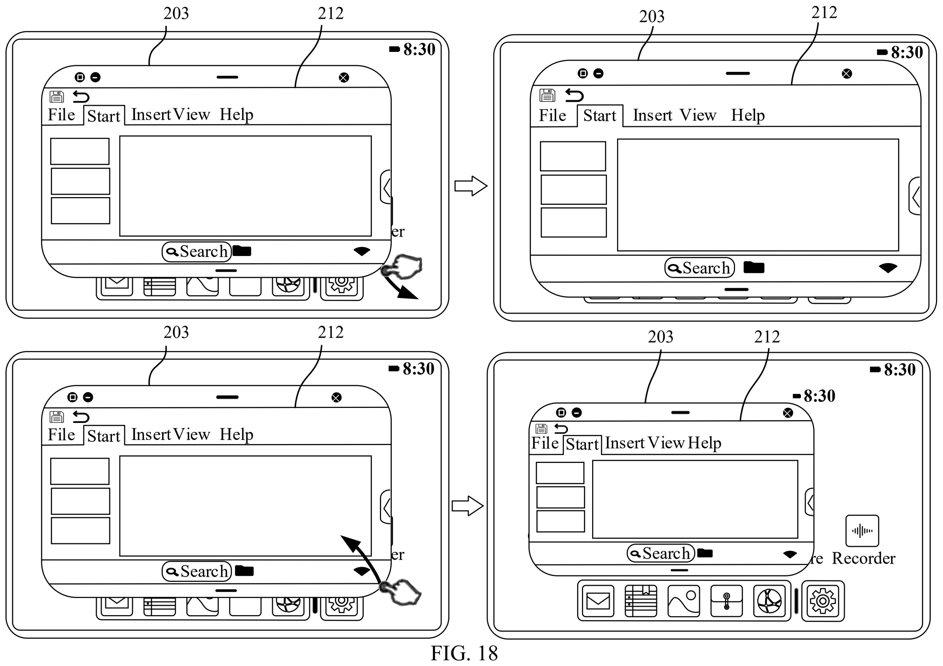

FIG. 18 is a tenth schematic diagram of the first embodiment according to this application.

As shown in FIG. 18, the user may perform a stretching operation or a scaling operation on a boundary of the extended window 203, to regulate a window size of the extended window 203. The user may manually press and hold the boundary of the extended window 203, to regulate the size of the extended window 203. Alternatively, the user may move a mouse cursor to the boundary of the extended window 203, to regulate the size of the extended window 203.

In response to the stretching operation performed by the user on the boundary of the extended window 203, the tablet computer extends and displays the extended window 203.

In response to the scaling operation performed by the user on the boundary of the extended window 203, the tablet computer scales and displays the extended window 203.

When the tablet computer extends and displays the extended window 203 or scales and displays the extended window 203, the second window 212 may change with a change of a window size of the extended window 203, or may remain unchanged when the window size of the extended window 203 changes, so that only the second desktop changes with a change of the size of the extended window 203. Specific forms of extending and displaying or scaling and displaying in the extended window 203 are not limited in this embodiment of this application.

Further, as shown in FIG. 13, because the second maximization button 208, the second minimization button 209, and the second close button 210 are set in the title bar for the extended window 203, the user may perform a click operation on the second maximization button 208, so that the extended window 203 is maximally displayed.

In response to a click operation performed by the user on the second maximization button 208, the tablet computer maximally displays the extended window 203. For a manner in which the tablet computer maximally displays the extended window 203, refer to FIG. 16. Details are not described again in this embodiment of this application.

The user may perform a click operation on the second minimization button 209, to minimally display the extended window 203.

In response to a click operation performed by the user on the second minimization button 209, the tablet computer minimally displays the extended window 203. For a manner in which the tablet computer minimally displays the extended window 203, refer to FIG. 15. Details are not described again in this embodiment of this application.

The user may perform a click operation on the second close button 209, to close the extended window 203.

In response to a click operation performed by the user on the second close button 209, the tablet computer closes the extended window 203. It should be noted herein that, after the second cursor reaches the second screen edge 202 and performs a hand-lifting operation on the mouse, the user cannot drag the extended window 203 back to the PC. Therefore, the tablet computer can close the extended window 203 only in response to a click operation performed by the user on the second close button 209, but cannot drag the extended window 203 out of the tablet computer in a dragging manner.

It should be noted herein that, because the second maximization button 208, the second minimization button 209, and the second close button 210 in the extended window 203 are displayed by using a window display specification of an Android operating system, and the third minimization button 105, the third maximization button 106, and the third close button 107 in the first window 101 shown in FIG. 9 are displayed by using a window display specification of a Windows operating system, different window display specifications make display styles, display positions, and user operation manners of the buttons all have a particular difference. The extended window 203 provided by the tablet computer is a window whose window style and window operation manner are both matched with those of the Android operating system, rather than a window whose window style and window operation manner are both matched with those of the Windows operating system. In this way, learning costs of the user can be reduced, and a problem of low operation efficiency caused by inconsistent operations of a window and an electronic device is resolved.

In this way, based on establishment of a keyboard and mouse sharing connection, the user can drag a window from the PC to the tablet computer without manual connection.

In a second embodiment of this application, based on the first embodiment of this application, more windows may be dragged to the tablet computer.

The second embodiment of this application is described by using a scenario in which the tablet computer displays the extended window 203 after the user performs a first time of window dragging.

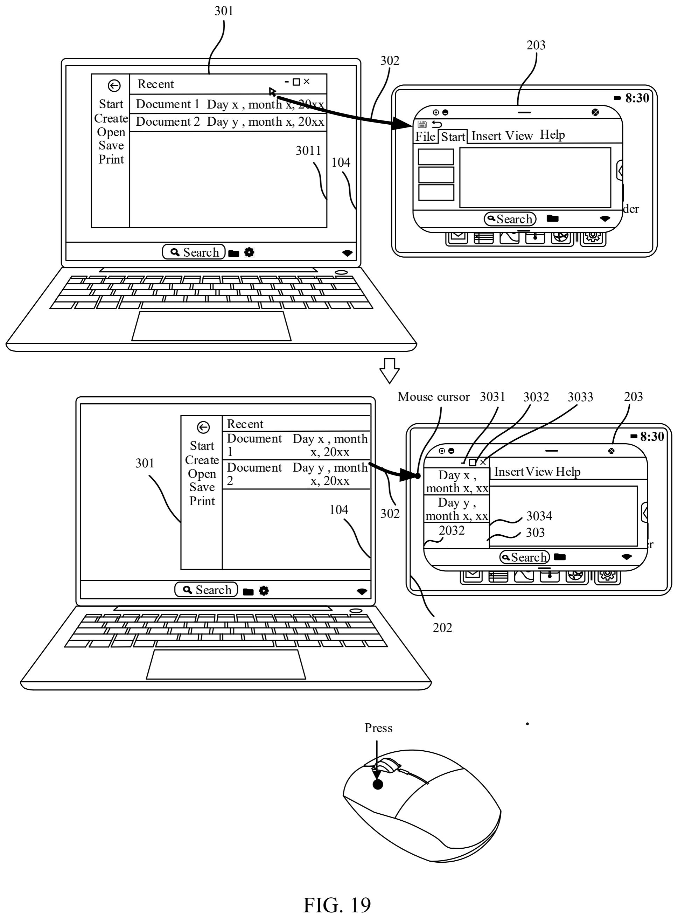

FIG. 19 is a first schematic diagram of a second embodiment according to this application.

As shown in FIG. 19, after performing a first time of window dragging, the user may further perform a second time of window dragging.

The PC displays a third window 301 on a first desktop, and displays a third user page in the third window 301. The third window 301 is a window matching the first operating system, and may be specifically an application window of the first application, or may be an application window of another application. This is not limited in this embodiment of this application. For example, the third window 301 is an application window of a presentation application. The third user page may be a user page that is in the presentation application and that has content different from that of the first user page.

It should be noted herein that, in this embodiment of this application, only an example in which the PC displays the third window 301 on the first desktop is used for description. The third window 301 may also be displayed on another page, for example, a browser page. This is not limited in this embodiment of this application.

The user may move the first cursor to the third window 301 by using the mouse, press and hold a mouse button, and drag the third window 301 along a third path 302. The third path 302 is a path pointing to a direction in which a side of the PC adjacent to the tablet computer is located. For example, a right edge of a screen of the PC is adjacent to a left edge of a screen of the tablet computer, and therefore the third path 302 points to a direction in which the right edge of the screen of the PC is located.

In a process in which the first cursor drags the third window 301 to move toward a first screen edge 104 of the PC, when a third window edge 3011 of the third window 301 does not reach the first screen edge 104, the third window edge 3011 moves toward the first screen edge 104, and the third window edge 3011 is a window edge on a side of the third window 301 close to the first screen edge 104.

When the third window edge 3011 moves out of the first screen edge 104 and the first cursor does not reach the first screen edge 104, the PC moves the third window 301, to move a part of the third window 301 out of the first screen edge 104, where content of the third window 301 is different from that of the first window 101. Because the user does not lift the hand, the fourth window 303 is in a dragged state in this case.

When the second cursor reaches the second screen edge 202, the fourth window 303 does not pass through a region that is of the third desktop on the tablet computer and that is not covered by the extended window 203, but is directly displayed in the extended window 203. In this case, the fourth window 303 usually displays only a partial region in the extended window 203.

After the second cursor reaches the second screen edge 202, the user may move the second cursor to the fourth window 303, and drag the fourth window 303 toward the central region of the extended window 203, so that the fourth window 303 is at a position convenient for the user to operate. It should be noted herein that, the user may drag the fourth window 303 to any region in the extended window 203 of the tablet computer. In this embodiment of this application, only an example in which the extended window is dragged to the central region of the extended window 203 is used for description, and a position to which the fourth window 303 is dragged is not limited in this embodiment of this application.

When the first cursor moves out from the first screen edge 104 to a second screen edge 202 of the tablet computer, the PC hides the first cursor, and the tablet computer displays a second cursor at the second screen edge 202 and displays a fourth window 303 in the extended window 203, where content of the fourth window 303 is the same as content of a part of the third window 301 moved out of the first screen edge 104.

In a process in which the second cursor drags the fourth window 303 to move in a direction away from the fourth window edge 2032 of the extended window 203, the tablet computer displays a part of the fourth window 303 that is moved into the extended window 203.

In this way, as the area of the part of the fourth window 303 moved into the edge of the extended window 203 gradually increases, the user may drag the fourth window 303 to a position in the extended window 203 convenient for operation.

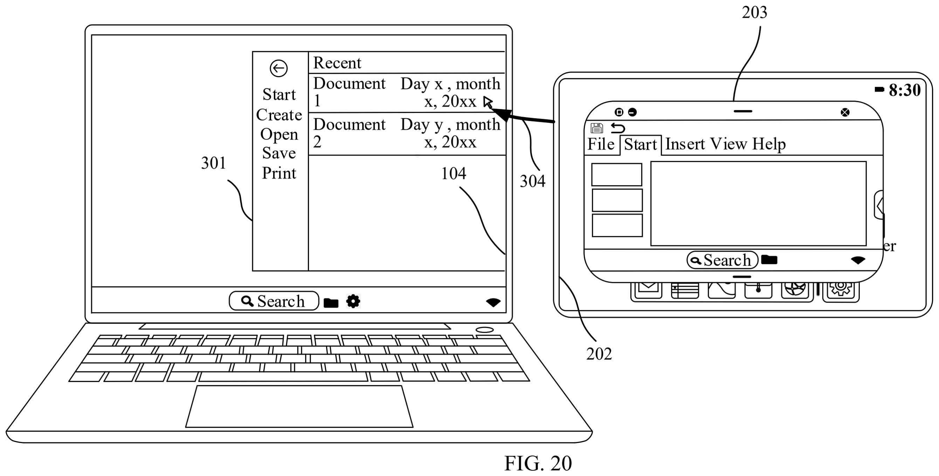

FIG. 20 is a second schematic diagram of the second embodiment according to this application.

As shown in FIG. 9, FIG. 19, and FIG. 20, when the user presses and holds the mouse button and does not lift the hand, and after the second cursor reaches the second screen edge 202, the mouse cursor may be further dragged from the second screen edge 202 back to the first screen edge 104 along a fourth path 304.

In a process in which the second cursor drags the fourth window 303 to move toward a fourth window edge 2032 of the extended window 203, when a fifth window edge 3034 of the fourth window 303 moves in a direction close to the fourth window edge 2032 and the second cursor does not reach the second screen edge 202, the tablet computer moves the fourth window 303, to move a part of the fourth window 303 out of the second screen edge 202, where a direction of the fourth window edge 2032 is opposite to that of the first window edge 1011, and a direction of the fifth window edge 3034 is the same as that of the first window edge 1011.

When the second cursor moves out from the second screen edge 202 to the first screen edge 104 of the PC, the tablet computer hides the second cursor and the extended window 203, and the PC displays the first cursor and the third window 301 at the first screen edge 104.

The user may perform a hand-lifting operation on the mouse when the PC displays the first cursor and the third window 301 at the first screen edge 104.

The PC displays the first window 101 on the first desktop in response to a release operation performed by the user on the first cursor and the first window 101.

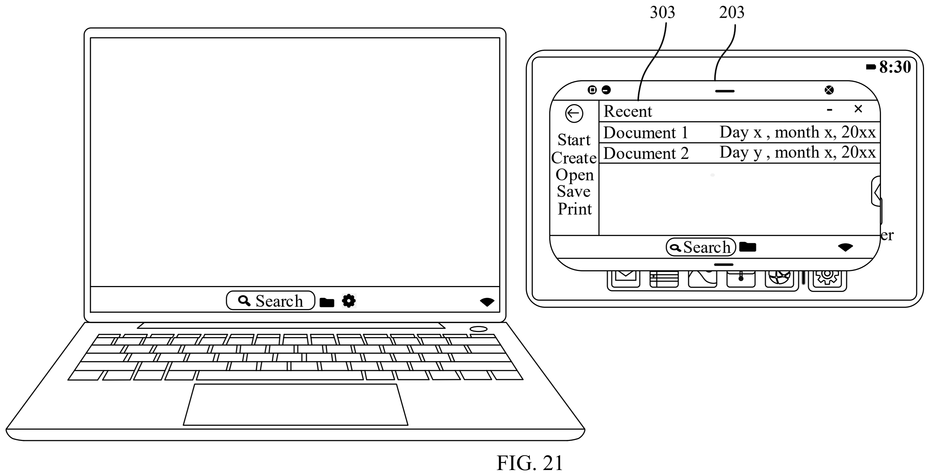

That is, in a process in which the user drags the third window 301 from the PC to the tablet computer, when the user presses and holds the mouse button and does not lift the hand, the first window 101 can still be dragged back to the PC even if the third window 301 is completely dragged out of the first screen edge 104 of the PC. FIG. 21 is a third schematic diagram of the second embodiment according to this application. As shown in FIG. 21, after the user continues to drag the fourth window 303 toward the central region of the tablet computer after the second cursor reaches the second screen edge 202, to drag the fourth window 303 to a position convenient for the user to operate, a hand-lifting operation may be performed on the mouse. For example, the fourth window 303 may display all regions of the extended window at a position convenient for the user to operate.

In response to a release operation performed by the user on the second cursor and the fourth window 303, the tablet computer releases the fourth window 303 in the extended window 203.

It should be noted herein that, because the extended window 203 completes establishment of a screen extension connection, content displayed in the fourth window 303 does not need a loading process, and can be directly displayed in the extended window 203.

A fourth minimization button 3031, a fourth maximization button 3032, and a fourth close button 3033 may be set in the fourth window 303.

Because only one extended window 203 matched with the Android operating system can be established in the tablet computer, it cannot be ensured that each window is a window matched with the Android operating system when the PC drags more windows to the tablet computer. Therefore, the fourth window 303 may be displayed in the extended window 203 in a form matching the Windows operating system. In this way, when the user drags the second window, the fourth window 303 may completely cover the second window 212. In this way, to facilitate adjustment such as switching or scaling on the second window 212 and the fourth window 303, the tablet computer may display the fourth minimization button 3031, the fourth maximization button 3032, and the fourth close button 3033 in the fourth window 303, to perform corresponding operations.

In the second embodiment of this application, for each process of performing more times of window dragging by the user based on the second time of window dragging, refer to the process of the second time of window dragging. Details are not described in this embodiment of this application again.

In a third embodiment of this application, based on the first embodiment of this application, more windows may be dragged to the tablet computer.

The third embodiment of this application is described by using a scenario in which the tablet computer minimally displays the extended window 203 to the background after the user performs a first time of window dragging.

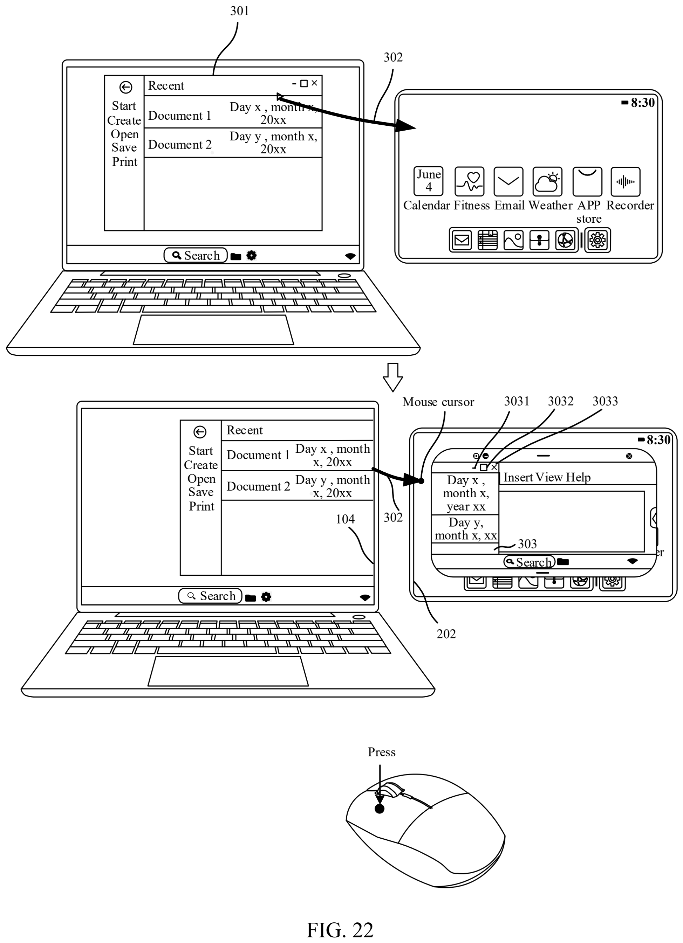

FIG. 22 is a first schematic diagram of a third embodiment according to this application.

As shown in FIG. 22, after performing a first time of window dragging, the user may further perform a second time of window dragging.

The PC displays a third window 301 on a first desktop, and displays a third user page in the third window 301. The third window 301 is a window matching the first operating system, and may be specifically an application window of the first application, or may be an application window of another application. This is not limited in this embodiment of this application. For example, the third window 301 is an application window of a presentation application. The third user page may be a user page that is in the presentation application and that has content different from that of the first user page.

It should be noted herein that, in this embodiment of this application, only an example in which the PC displays the third window 301 on the first desktop is used for description. The third window 301 may also be displayed on another page, for example, a browser page. This is not limited in this embodiment of this application.

The user may move the first cursor to the third window 301 by using the mouse, press and hold a mouse button, and drag the third window 301 along a third path 302. The third path 302 is a path pointing to a direction in which a side of the PC adjacent to the tablet computer is located. For example, a right edge of a screen of the PC is adjacent to a left edge of a screen of the tablet computer, and therefore the third path 302 points to a direction in which the right edge of the screen of the PC is located. In a process in which the first cursor drags the third window 301 to move toward a first screen edge 104 of the PC, when a third window edge 3011 of the third window 301 does not reach the first screen edge 104, the third window edge 3011 moves toward the first screen edge 104, and the third window edge 3011 is a window edge on a side of the third window 301 close to the first screen edge 104.

When the third window edge 3011 moves out of the first screen edge 104 and the first cursor does not reach the first screen edge 104, the PC moves the third window 301, to move a part of the third window 301 out of the first screen edge 104, where content of the third window 301 is different from that of the first window 101.

Because the user does not lift the hand, the fourth window 303 is in a dragged state in this case.

When the second cursor reaches the second screen edge 202, the fourth window 303 does not pass through a region that is of the third desktop on the tablet computer and that is not covered by the extended window 203, but is directly displayed in the extended window 203. In this case, the fourth window 303 usually displays only a partial region in the extended window 203.

After the second cursor reaches the second screen edge 202, the user may move the second cursor to the fourth window 303, and drag the fourth window 303 toward the central region of the extended window 203, so that the fourth window 303 is at a position convenient for the user to operate. It should be noted herein that, the user may drag the fourth window 303 to any region in the extended window 203 of the tablet computer. In this embodiment of this application, only an example in which the extended window is dragged to the central region of the extended window 203 is used for description, and a position to which the fourth window 303 is dragged is not limited in this embodiment of this application. When the first cursor moves out from the first screen edge 104 to a second screen edge 202 of the tablet computer, the PC hides the first cursor, and the tablet computer displays a second cursor at the second screen edge 202, wakes the extended window 203 from a background, and displays a fourth window 303 in the extended window 203, where content of the fourth window 303 is the same as content of a part of the third window 301 moved out of the first screen edge 104.

In a process in which the second cursor drags the fourth window 303 to move in a direction away from the fourth window edge 2032 of the extended window 203, the tablet computer displays a part of the fourth window 303 that is moved into the extended window 203.

In this way, as the area of the part of the fourth window 303 moved into the edge of the extended window 203 gradually increases, the user may drag the fourth window 303 to a position in the extended window 203 convenient for operation.

As shown in FIG. 20, when the user presses and holds the mouse button and does not lift the hand, and after the second cursor reaches the second screen edge 202, the mouse cursor may be further dragged from the second screen edge 202 back to the first screen edge 104 along a fourth path 304.

In response to a drag operation performed by the user on the fourth window 303 by using the mouse and that the second cursor reaches the second screen edge 202, the tablet computer moves the fourth window 303 in the extended window 203, so that a part of the fourth window 303 is moved out of the second screen edge 202.

In response to that the second cursor reaches the second screen edge 202, the tablet computer hides the second cursor.

In response to that the tablet computer hides the second cursor, the PC displays the first cursor and the third window 301 at the first screen edge 104. The third user interface in the third window 301 displays content, on a fourth user interface, corresponding to the part of the fourth window 303 that is moved out of the second screen edge 202.

The user may perform a hand-lifting operation on the mouse when the PC displays the first cursor and the third window 301 at the first screen edge 104.

In response to a release operation performed by the user on the third window 301 by using the input device, the PC displays the third user interface in the third window 301.

That is, in a process in which the user drags the third window 301 from the PC to the tablet computer, when the user presses and holds the mouse button and does not lift the hand, the third window 301 can still be dragged back to the PC even if the third window 301 is completely dragged out of the first screen edge 104 of the PC.

It should be noted herein that, because the tablet computer already wakes the extended window 203 from the background, when the user drags the third window 301 back to the PC, the tablet computer does not minimize the extended window 203 to the background, and still keeps displaying the extended window 203 on the current page.

As shown in FIG. 21, after the user continues to drag the fourth window 303 toward the central region of the tablet computer after the second cursor reaches the second screen edge 202, to drag the fourth window 303 to a position convenient for the user to operate, a hand-lifting operation may be performed on the mouse. For example, the fourth window 303 may display all regions of the extended window at a position convenient for the user to operate.

In response to a release operation performed by the user on the fourth window 303 by using the input device, the tablet computer may release the fourth window 303 in the extended window 203.

It should be noted herein that, because the extended window 203 completes establishment of screen extension, content in the fourth window 303 does not need a loading process, and can be directly displayed in the extended window 203.

It should be further noted that, if the extended window 203 is displayed on the display screen of the tablet computer in a full-screen form before being minimally displayed to the background, the extended window 203 is displayed in the full-screen form after being woken by the tablet computer from the background. If the extended window 203 is displayed on the display screen of the tablet computer in a floating window form before being minimally displayed to the background, the extended window 203 is displayed in the floating window form after being woken by the tablet computer from the background.

In the third embodiment of this application, for each process of performing more times of window dragging by the user based on the second time of window dragging, refer to the process of the second time of window dragging in the second embodiment of this application. Details are not described in this embodiment of this application again.

In the foregoing embodiments of this application, the extended window 203 may be displayed in a floating window form or a full-screen form. Based on the two display forms of the extended window 203, in this embodiment of this application, a toolbar may be further set in the extended window 203, so that the extended window 203 can implement more functions.

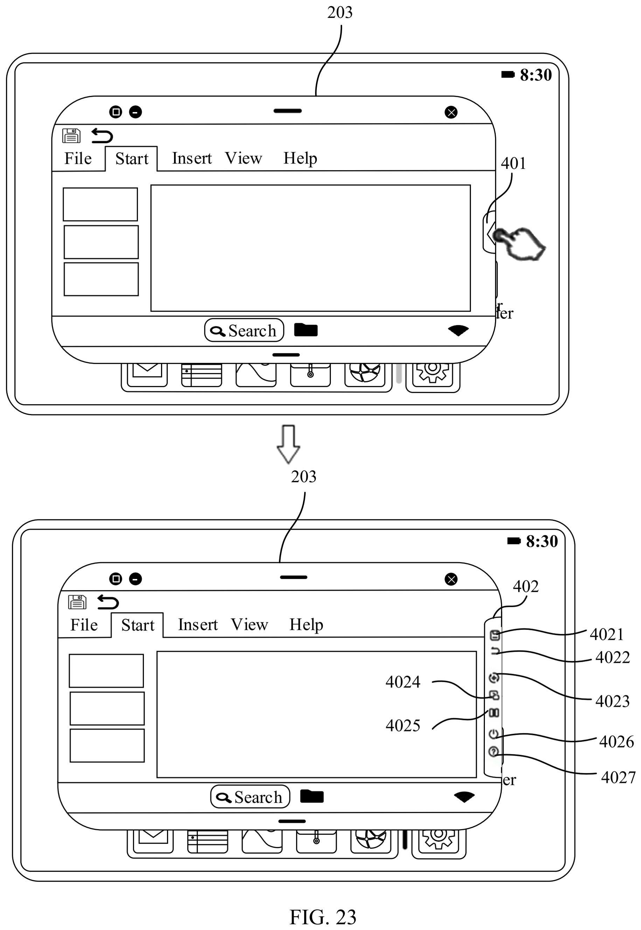

FIG. 23 is a schematic diagram of a first toolbar display form according to an embodiment of this application.

As shown in FIG. 23, when an extended window 203 is displayed in a floating window form, a first toolbar button 401 may be disposed at a window edge of the extended window 203.

The first toolbar button 401 may be disposed at a left window edge of the extended window 203, or may be disposed at a right window edge of the extended window 203, and may be specifically disposed according to a usage habit of a user. This is not limited in this embodiment of this application. A display form of the first toolbar button 401 is not limited in this embodiment of this application.

The user may perform a click operation on the first toolbar button 401, to wake a first toolbar 402.

In response to a click operation performed by the user on the first toolbar button 401, the tablet computer may display the first toolbar 402 at a window edge.

The first toolbar 402 may be provided with a first save button 4021, a first cancel button 4022, a first audio switching button 4023, a first window moving-back button 4024, a first mode switching button 4025, a first disconnection button 4026, and a first help button 4027. It should be noted herein that, the first toolbar 402 may be further equipped with more buttons to implement corresponding functions. This is not limited in this embodiment of this application.

The user may perform a click operation on the first save button 4021, to save a current operation.

In response to a click operation performed by the user on the first save button 4021, the tablet computer may save the last operation performed by the user.

The user may perform a click operation on the first cancel button 4022, to cancel a current operation.

In response to a click operation performed by the user on the first cancel button 4022, the tablet computer may cancel the last operation performed by the user.

The user may perform a click operation on the first audio switching button 4023, to switch a current audio output device from a PC to a tablet computer or from a tablet computer to a PC.

In response to a click operation performed by the user on the first audio switching button 4023, the tablet computer may switch a current audio output device from a PC to a tablet computer, or switch a current audio output device from a tablet computer to a PC.

The user may perform a click operation on the first window moving-back button 4024, and the tablet computer may move the extended window 203 from the tablet computer back to the PC.

Using an example in which the user performs a first time of window dragging, after the user drags the first window 101 in the PC to the tablet computer, to cause the tablet computer to display the extended window 203, the tablet computer hides the extended window 203 in response to a click operation performed by the user on the first window moving-back button 4024. In response to that the tablet computer hides the extended window 203, the PC displays the first window 101.

The user may perform a click operation on the first mode switching button 4025, so that the tablet computer switches the extended window 203 from the screen extension mode to the screen mirroring mode or from the screen mirroring mode to the screen extension mode.

It should be noted herein that, when the user performs the first time of window dragging, the extended window 203 is usually established in a screen extension mode by default.

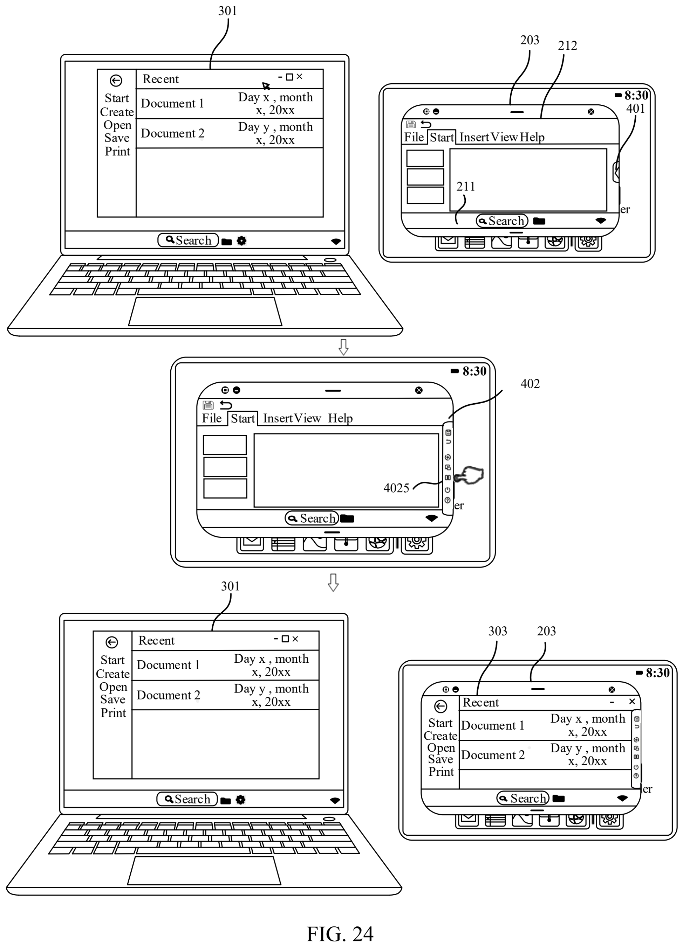

FIG. 24 is a schematic diagram of a mode switching scenario according to an embodiment of this application.

As shown in FIG. 24, after the user performs the first time of window dragging, the tablet computer displays a second window 212 and a second taskbar 211 in the extended window 203. In this case, the PC end may display the first desktop shown in FIG. 13. In this way, the user may separately perform operations on the PC end and the tablet computer end.

The user may open the third window 301 on the PC. In response to an operation of opening the third window 301 by the user, the PC displays the third window 301 on the first desktop. In this case, because the user does not operate the tablet computer, the tablet computer displays the second window 212 and the second taskbar 211 in the extended window 203. The tablet computer is in a screen extension mode.

The user may click a first toolbar button 401. In response to a click operation performed by the user on the first toolbar button 401, the tablet computer displays a first toolbar 402, and displays a first mode switching button 4025 in the first toolbar 402.

The user may click the first mode switching button 4025. In response to a click operation performed by the user on the first mode switching button 4025, the tablet computer may change from displaying the second window 211 to displaying the fourth window 303 in the extended window 203. In this way, content displayed in the extended window 203 of the tablet computer is the same as a current page of the PC, and the tablet computer is in a screen mirroring mode.

The user may perform a click operation on the first disconnection button 4026, to interrupt the connection between the tablet computer and the PC.

In response to a click operation performed by the user on the first disconnection button 4026, the tablet computer may interrupt the connection between the tablet computer and the PC.

The user may perform a click operation on the first help button 4027, so that the tablet computer provides help information for the user.

In response to a click operation performed by the user on the first help button 4027, the tablet computer may display the help information.

The user may further use, based on another button in the first toolbar 402, another function provided by the first toolbar 402. This is not limited in this embodiment of this application.

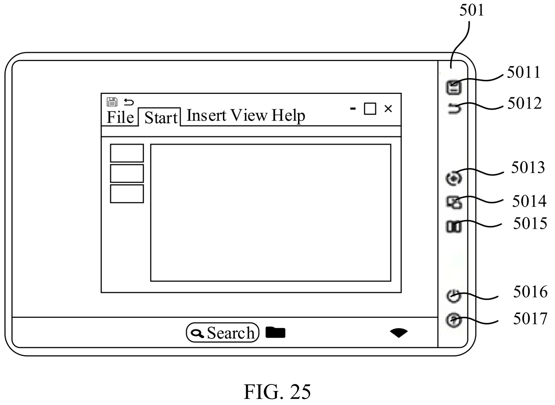

FIG. 25 is a schematic diagram of a second toolbar display form according to an embodiment of this application.

As shown in FIG. 25, when an extended window 203 is displayed in a full-screen form, a second toolbar 501 may be set at a side edge of the extended window 203.

It should be noted herein that, when the extended window 203 is displayed in a full-screen form, the second toolbar 501 may not need to be hidden, and is normally displayed at a window edge of the extended window 203. The second toolbar 501 may be disposed at a left window edge of the extended window 203, or may be disposed at a right window edge of the extended window 203, and may be specifically disposed according to a usage habit of a user. This is not limited in this embodiment of this application. A display form of the second toolbar 501 is not limited in this embodiment of this application.

The second toolbar 501 may be provided with a second save button 5011, a second cancel button 5012, a second audio switching button 5013, a second window moving-back button 5014, a second mode switching button 5015, a second disconnection button 5016, and a second help button 5017. It should be noted herein that, the second toolbar 501 may be further equipped with more buttons to implement corresponding functions. This is not limited in this embodiment of this application.

For a function corresponding to each button in the second toolbar 501 in this embodiment of this application, refer to a function of each button in the first toolbar 402. Details are not described again in this embodiment of this application.

When the extended window 203 is displayed in a full-screen form, in this embodiment of this application, a window display form may be further switched.

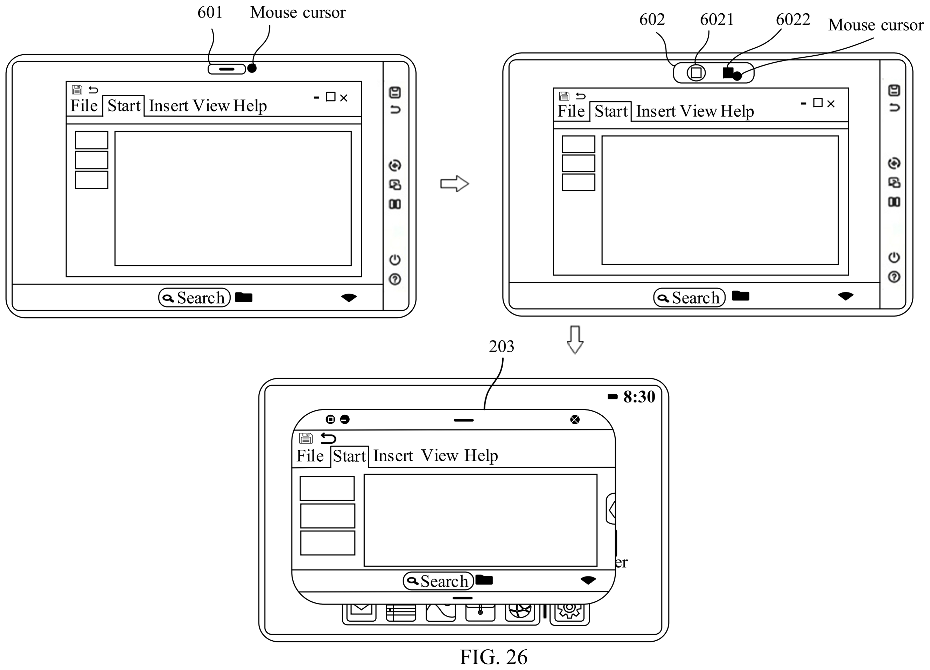

FIG. 26 is a schematic diagram of a first scenario of window switching according to an embodiment of this application.

As shown in FIG. 26, a user may move a mouse cursor to a top region of an extended window 203 to wake a third floating button 601.

In response to an operation of moving a second cursor to the top region of the extended window 203 by the user, a tablet computer displays the third floating button 601.

The user may click the third floating button 601 to wake a floating window option control 602.

In response to a click operation performed by the user on the third floating button 601, the tablet computer may display a floating window option control 602 in the top region of the extended window 203, where the floating window option control 602 includes a first sub-button 6021 and a second sub-button 6022, the first sub-button 6021 is used for indicating that the extended window 203 is displayed in a full-screen form, and the second sub-button 6022 is used for switching the extended window 203 to be displayed in a floating window form.

In response to that the tablet computer displays the floating window option control 602, the tablet computer may highlight the first sub-button 6021. In this way, the first sub-button 6021 may indicate that the tablet computer currently displays the extended window 203 in a full-screen form.

The user may click the second sub-button 6022, to switch the extended window 203 to be displayed in a floating window form.

In response to a click operation performed by the user on the second sub-button 6022, the tablet computer changes from displaying the extended window 203 in the full-screen form to displaying the extended window in the floating window form.

When the extended window 203 is displayed in a full-screen form, in this embodiment of this application, a window display form may be further switched in another operation manner.

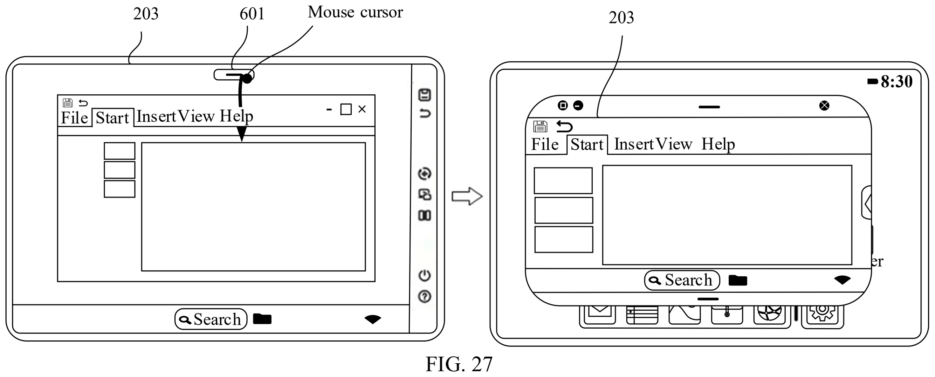

FIG. 27 is a schematic diagram of a second scenario of window switching according to an embodiment of this application.

As shown in FIG. 27, a user may move a mouse cursor to a top region of an extended window 203 to wake a third floating button 601.

In response to an operation of moving a second cursor to the top region of the extended window 203 by the user, a tablet computer displays the third floating button 601.

The user may drag the third floating button 601, so that the extended window 203 is changed from being displayed in a full-screen form to being displayed in a floating window form.

In response to a drag operation performed by the user on the third floating button 601, the tablet computer changes from displaying the extended window 203 in the full-screen form to displaying the extended window in the floating window form.

In the foregoing embodiments, description is made by using that the first electronic device 200a is a PC, the second electronic device 200b is a tablet computer, and the input device 200c is a mouse. In this embodiment of this application, more than one second electronic device 200b may be set, and the second electronic device 200b may also be set to another device type.

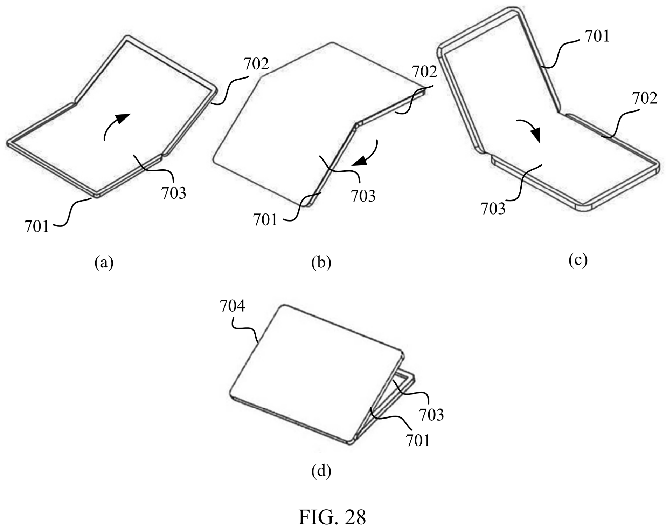

FIG. 28 is a first schematic diagram of a fourth embodiment according to this application.

As shown in FIG. 28, the fourth embodiment of this application is described by using that the first electronic device 200a is a PC, the second electronic device 200b is a foldable mobile phone, and the input device 200c is a mouse.

The foldable mobile phone is an electronic device whose display screen can be bent 360 degrees. The foldable mobile phone usually includes: a first body 701, a second body 702 connected to the first body 701 through rotation of a rotating shaft, and a first display screen 703 disposed on a side of the first body 701 and the second body 702. Based on the foregoing structure, the foldable mobile phone may be set to a folded-in foldable mobile phone shown in (a) in FIG. 28, a folded-out foldable mobile phone shown in (b) in FIG. 28, and a folded-up foldable mobile phone shown in (c) in FIG. 28. The folded-out foldable mobile phone may enable, through relative rotation between the first body 701 and the second body 702, the folded first display screen 703 to face a user side. The folded-in foldable mobile phone and the folded-up foldable mobile phone may enable, through relative rotation between the first body 701 and the second body 702, the folded first display screen 703 to face away from a user side.

As shown in (d) of FIG. 28, the folded-in foldable mobile phone further includes a second display screen 704, the second display screen 704 is located at a back surface of the first display screen 703, and the second display screen 704 is fixed to the first body 701. After the first body 701 and the second body 702 are relatively rotated and folded, the second display screen 704 faces a user side.

It should be noted herein that, the first display screen 703 in the folded-in foldable mobile phone shown in (a) in FIG. 28 and the first display screen 703 in the folded-out foldable mobile phone shown in (b) in FIG. 28 have a relatively large screen size, and therefore can be used for dragging a window.

However, the first display screen 703 in the folded-up foldable mobile phone shown in (c) in FIG. 28 and the second display screen 704 in the folded-in foldable screen shown in (d) in FIG. 28 have a relatively small screen size, and therefore cannot be used for dragging a window.

In addition, a foldable mobile phone supporting window dragging can drag a window only in an unfolded state.

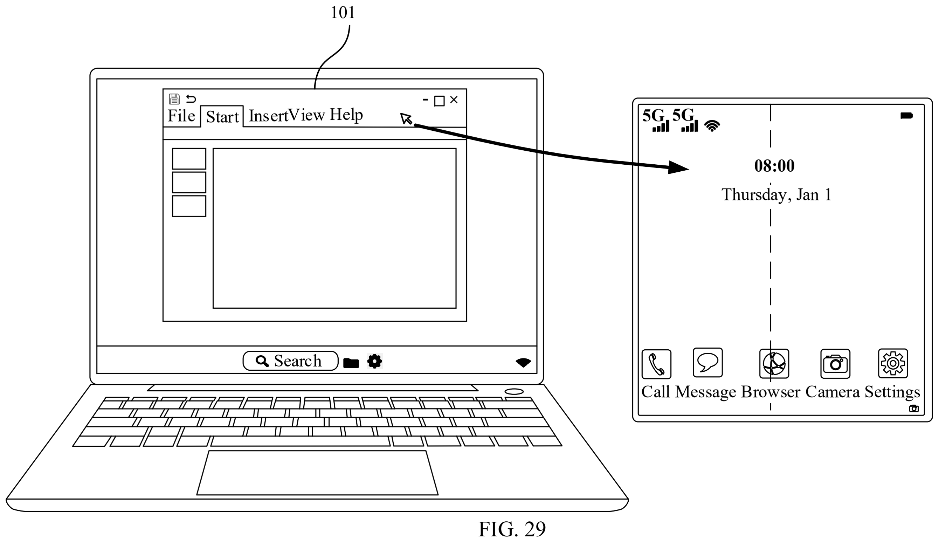

FIG. 29 is a second schematic diagram of the fourth embodiment according to this application.

As shown in FIG. 29, when being a foldable mobile phone and being in an unfolded state, a second electronic device 200b can drag a window. For a process of dragging a window by the user, refer to a dragging process when the second electronic device 200b is a tablet computer. Details are not described again in this embodiment of this application.

This application may further provide more embodiments based on different quantities of second electronic devices 200b. For example, a window is dragged between devices in an interconnection relationship formed by a first electronic device 200a being a PC, a 1st second electronic device 200b being a tablet computer, and a 2nd second electronic device 200b being a foldable mobile phone. This is not limited in this embodiment of this application.

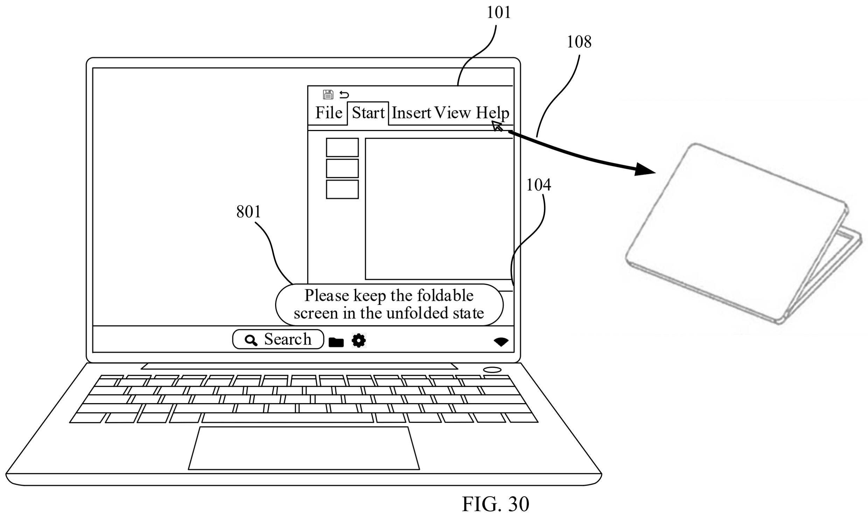

FIG. 30 is a first schematic diagram of a scenario in which a window is dragged abnormally according to an embodiment of this application.

As shown in FIG. 30, when the second electronic device 200b is a foldable mobile phone, and the foldable mobile phone is not in an unfolded state, a window cannot be dragged between the PC and the foldable mobile phone.

The PC displays a first window 101 and a first taskbar 102 on a first desktop, and displays a first user page in the first window 101.

The user may move the first cursor to the first window 101 by using the mouse, press and hold a mouse button, and drag the first window 101 along a fifth path 108. The fifth path 108 is a path pointing to a direction in which a side of the PC adjacent to the foldable mobile phone is located.

In a process in which the first cursor drags the first window 101 to move toward a first screen edge 104 of the PC, when a first window edge 1011 of the first window 101 does not reach the first screen edge 104, the first window edge 1011 moves toward the first screen edge 104, and the first window edge 1011 is a window edge on a side of the first window 101 close to the first screen edge 104.

When the first window edge 1011 moves out of the first screen edge 104 and the first cursor does not reach the first screen edge 104, the PC moves the first window 101, to move a part of the first window 101 out of the first screen edge 104.

When the first cursor reaches the first screen edge 104, the PC displays first prompt information 801. The first prompt information 801 is used for prompting the user to keep the foldable mobile phone in the unfolded state. For example, content of the first prompt information may be "Please keep the foldable screen in the unfolded state. "

It should be noted herein that, the PC obtains a folded state of the foldable mobile phone based on establishment of a keyboard and mouse sharing connection.

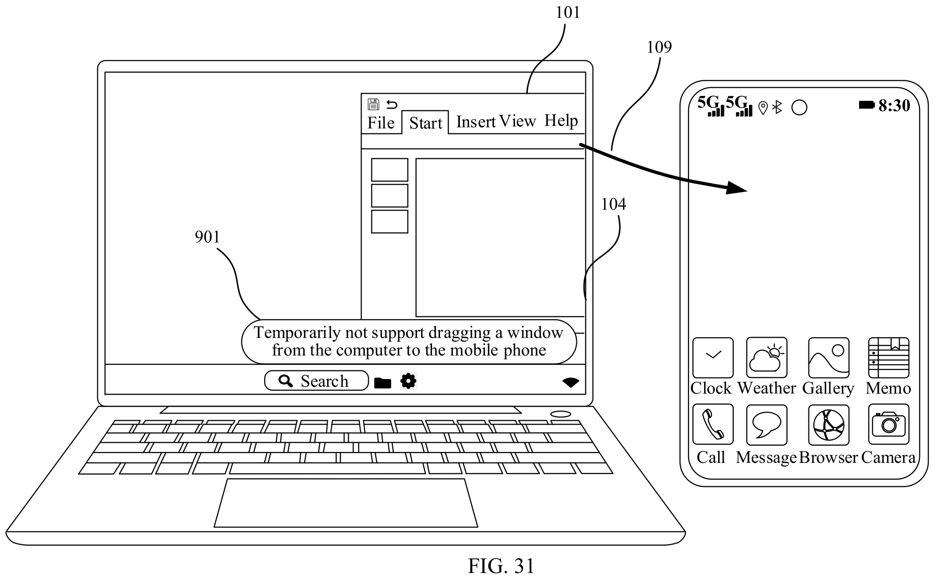

FIG. 31 is a second schematic diagram of a scenario in which a window is dragged abnormally according to an embodiment of this application.

As shown in FIG. 31, when the second electronic device 200b is a non-foldable mobile phone, a window cannot be dragged between the PC and the non-foldable mobile phone.

The PC displays a first window 101 and a first taskbar 102 on a first desktop, and displays a first user page in the first window 101.

The user may move the first cursor to the first window 101 by using the mouse, press and hold a mouse button, and drag the first window 101 along a sixth path 109. The sixth path 109 is a path pointing to a direction in which a side of the PC adjacent to the non-foldable mobile phone is located.

In a process in which the first cursor drags the first window 101 to move toward a first screen edge 104 of the PC, when a first window edge 1011 of the first window 101 does not reach the first screen edge 104, the first window edge 1011 moves toward the first screen edge 104, and the first window edge 1011 is a window edge on a side of the first window 101 close to the first screen edge 104.

When the first window edge 1011 moves out of the first screen edge 104 and the first cursor does not reach the first screen edge 104, the PC moves the first window 101, to move a part of the first window 101 out of the first screen edge 104.

When the first cursor reaches the first screen edge 104, the PC displays second prompt information 901. The second prompt information 901 is used for prompting the user that dragging a window from the PC to the mobile phone is not supported. For example, content of the second prompt information may be "temporarily not support dragging a window from the computer to the mobile phone."

It should be noted herein that, the PC determines, based on establishment of a keyboard and mouse sharing connection, that a current interconnecting device is a non-foldable mobile phone.

In this way, according to the multi-device collaboration method provided in this application, based on establishment of keyboard and mouse sharing between electronic devices, a user can implement cross-device and cross-system window dragging without manual connection, thereby improving use experience of the user. In addition, a window style of a window dragged to another electronic device matches an operating system of the electronic device, thereby reducing learning costs of the user and improving operation efficiency of the user. Further, this embodiment of this application supports more device types, such as a tablet computer and a foldable screen.

The solutions provided in embodiments of this application are mainly described above from a perspective of the electronic device. It can be understood that to implement the above functions, the electronic device includes corresponding hardware structures and/or software modules for executing the functions. A person skilled in the art should readily recognize that, with reference to the examples described in the embodiments disclosed in this application, the steps of the multi-device collaboration method may be implemented in a form of hardware or a combination of hardware and computer software in this application. Whether a function is performed by hardware or an electronic device driving hardware depends on particular applications and design constraints of the technical solutions. A person skilled in the art may use different methods to implement the described functions for each particular application, but it shall not be considered that the implementation goes beyond the scope of this application.

In the embodiments of this application, the foregoing electronic device may be divided into functional modules or functional units based on the foregoing method examples. For example, each functional module or functional unit may be obtained through division for a corresponding function, or two or more functions may be integrated into one processing module. The integrated module may be implemented in a form of hardware, or may be implemented in a form of a software functional module or functional unit. In embodiments of this application, module or unit division is exemplary, and is merely logical function division. In actual implementation, there may be another division manner.

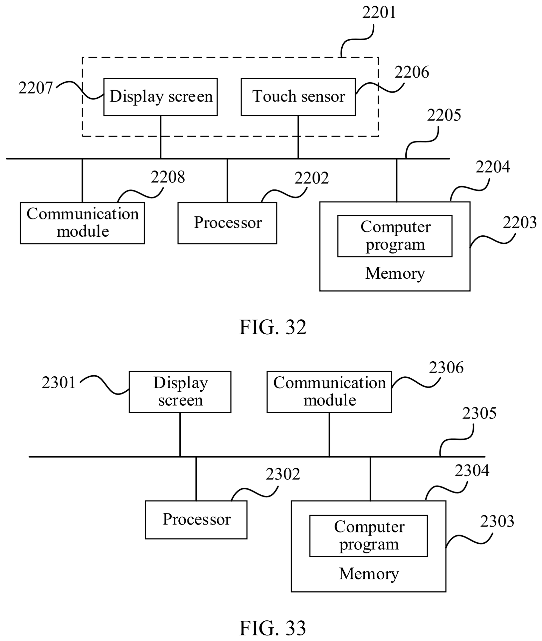

FIG. 32 is a schematic structural diagram of a first electronic device according to an embodiment of this application.

As shown in FIG. 32, an embodiment of this application discloses an electronic device. The electronic device is equipped with a first operating system, and is, for example, the foregoing tablet computer, a smartphone, a large-screen device (such as a smart screen or a smart television), or a wearable device (such as a smart band or a smart watch). The electronic device may specifically include: a touchscreen 2201, where the touchscreen 2201 includes a touch sensor 2206 and a display screen 2207; one or more processors 2202; a memory 2203; a communication module 2208; one or more applications (not shown); and one or more computer programs 2204. The foregoing devices may be connected by using one or more communication buses 2205. The one or more computer programs 2204 are stored in the memory 2203 and configured to be executed by the one or more processors 2202. The one or more computer programs 2204 include instructions, and the instructions may be used to execute related steps executed by the first electronic device 200a in the foregoing embodiment.

FIG. 33 is a schematic structural diagram of a second electronic device according to an embodiment of this application.

As shown in FIG. 33, an embodiment of this application discloses an electronic device. The electronic device is equipped with a second operating system, and is, for example, the foregoing personal computer PC. The electronic device may specifically include: a display screen 2301; one or more processors 2302; a memory 2303; a communication module 2306; one or more applications (not shown); and one or more computer programs 2304. The foregoing devices may be connected by using one or more communication buses 2305. The one or more computer programs 2304 are stored in the memory 2303 and configured to be executed by the one or more processors 2302. The one or more computer programs 2304 include instructions, and the instructions may be used to execute related steps executed by the second electronic device 200b in the foregoing embodiment.

An embodiment of this application further provides a multi-device collaboration system. The multi-device collaboration system includes the first electronic device, the second electronic device, and the input device in the foregoing embodiments.

An embodiment of this application further provides a chip system. The chip system includes at least one processor and at least one interface circuit. The processor and the interface circuit may be interconnected through a line. For example, the interface circuit may be configured to receive a signal from another apparatus (such as a memory of an electronic device). For another example, the interface circuit may be configured to send a signal to another apparatus. For example, the interface circuit may read instructions stored in the memory and send the instructions to the processor. When the instruction is executed by the processor, the electronic device is enabled to perform the steps in the foregoing embodiments. Certainly, the chip system may further include other discrete components. This is not specifically limited in this embodiment of this application.

An embodiment of this application further provides a computer-readable storage medium. The computer-readable storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product is run on a computer, the computer is enabled to perform the functions or steps performed by the mobile phone in the foregoing method embodiments.

According to the descriptions of the foregoing implementations, a person skilled in the art may clearly understand that, for the purpose of convenient and brief description, the division into the foregoing functional modules is only used as an example for description. In actual application, the foregoing functions may be allocated to and completed by different functional modules based on needs. That is, an inner structure of an apparatus is divided into different functional modules to complete all or some of the functions described above.

In the several embodiments provided in this application, it should be understood that the disclosed apparatus and method may be implemented in another manner. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separated, and parts displayed as units may or may not be one or a plurality of physical units, that is, may be located at one position, or may be distributed to a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The above storage medium includes: any medium that may store a program code, such as a USB flash drive, a removable hard disk, a read only memory (read only memory, ROM), a random access memory (random access memory, RAM), a magnetic disk, or a compact disc.

The multi-device collaboration system provided in this embodiment of this application may implement crossing of a window between electronic devices of different operating systems based on such a collaboration manner as keyboard and mouse sharing, and a user may control a window that traverses successfully. It can be learned that the multi-device collaboration system provided in the embodiments of this application can provide a plurality of services for a user, can improve operation efficiency during multi-device operation, and can provide rich use experience for the user.

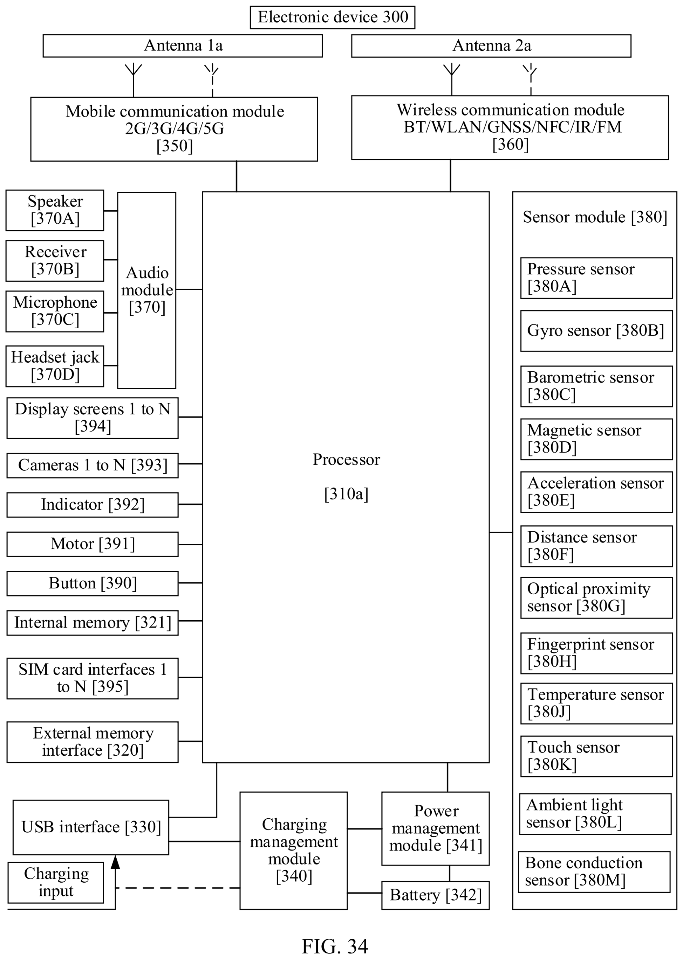

FIG. 34 is a schematic structural diagram of an electronic device according to an embodiment of the disclosure.

As shown in FIG. 34, the electronic device 300 may include: a processor 310a, an external memory interface 320, an internal memory 321, a universal serial bus (universal serial bus, USB) interface 330, a charging management module 340, a power management unit 341, a battery 342, an antenna 1a, an antenna 2a, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display screen 394, a subscriber identity module (subscriber identification module, SIM) card interface 395, and the like.

The sensor module 380 may include a pressure sensor 380A, a gyro sensor 380B, a barometric sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, and a bone conduction sensor 380M.

It may be understood that, the structure shown in this embodiment of the present invention does not constitute a specific limitation on the electronic device 300. In some other embodiments of this application, the electronic device 300 may include more or fewer components than those shown in the figure, or some components may be combined, or some components may be split, or a different component deployment may be used. The components in the figure may be implemented by hardware, software, or a combination of software and hardware.

The processor 310a may include one or more processing units. For example, the processor 310a may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal according to instruction operation code and a timing signal, and control obtaining and executing of instructions.

A memory may be further disposed in the processor 310a to store instructions and data. In some embodiments, the memory in the processor 310a is a cache. The storage may store instructions or data recently used or cyclically used by the processor 310a. If the processor 310a needs to use the instructions or the data again, the processor may directly invoke the instructions or the data from the memory.

The USB interface 330 is an interface compliant with a USB standard specification, and may specifically be a Mini USB interface, a Micro USB interface, a USB Type C interface, or the like. The USB interface 330 may be configured to connect to the charger to charge the electronic device 300, or may be configured to transmit data between the electronic device 300 and a peripheral device, or may be configured to connect to a headset to play audio by using the headset. The interface may be further configured to be connected to another electronic device such as an AR device.

The charging management module 340 is configured to receive charging input from a charger. The charger may be a wireless charger or a wired charger. In some embodiments of wired charging, the charging management module 340 may receive charging input from a wired charger through the USB interface 330. In some embodiments of wireless charging, the charging management module 340 may receive wireless charge input through a wireless charging coil of the electronic device 300. When charging the battery 342, the charging management module 340 may further supply power to the electronic device through the power management module 341.

The power management module 341 is configured to connect to the battery 342, the charging management module 340 and the processor 310a. The power management module 341 receives an input from the battery 342 and/or the charging management module 340, and supplies power to the processor 310a, the internal memory 321, the display screen 394, the camera 393, the wireless communication module 360, and the like. The power management module 341 may be further configured to monitor parameters such as a battery capacity, a quantity of battery cycles, and a battery health state (power leakage and impedance). In some other embodiments, the power management module 341 may be alternatively disposed in the processor 310a. In some other embodiments, the power management module 341 and the charging management module 340 may be alternatively disposed in a same device.

A wireless communication function of the electronic device 300 may be implemented by the antenna 1a, the antenna 2a, the mobile communication module 350, the wireless communication module 360, the modem processor, the baseband processor, and the like.

The antenna 1a and the antenna 2a are configured to transmit and receive electromagnetic wave signals. Each antenna of the electronic device 300 may be configured to cover one or more communication frequency bands. Different antennas may be further reused to improve utilization of the antennas. For example, the antenna 1a may be multiplexed as a diversity antenna of a wireless local region network. In some other embodiments, the antenna may be used in combination with a tuning switch.

The mobile communication module 350 may provide a solution, applied to the electronic device 300, for wireless communication including 2G/3G/4G/5G, or the like. The mobile communication module 350 may include at least one filter, a switch, a power amplifier, a low noise amplifier (low noise amplifier, LNA), or the like. The mobile communication module 350 may receive an electromagnetic wave via the antenna 1a, perform processing such as filtering and amplification on the received electromagnetic wave, and transmit the electromagnetic wave to the modem processor for demodulation. The mobile communication module 350 may further amplify a signal obtained after modulation by the modem processor, and convert the signal into an electromagnetic wave for radiation via the antenna 1a. In some embodiments, at least some functional modules of the mobile communication module 350 may be disposed in the processor 310a. In some embodiments, at least some functional modules of the mobile communication module 350 and at least some modules of the processor 310a may be disposed in the same device.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal through an audio device (not limited to the speaker 370A, the receiver 370B, or the like), or displays an image or a video through the display screen 394. In some embodiments, the modem processor may be an independent device. In some other embodiments, the modem processor may be independent of the processor 310a and may be disposed in a same device as the mobile communication module 350 or another functional module.

The wireless communication module 360 can provide solutions for wireless communication such as wireless local region networks (wireless local region networks, WLAN) (such as Wi-Fi networks) and Bluetooth applied to the electronic device 300. The wireless communication module 360 may be one or more devices into which at least one communication processing module is integrated.

The electronic device 300 implements a display function through the GPU, the display screen 394, the application processor, and the like. The GPU is a microprocessor for image processing and connects the display screen 394 and the application processor. The GPU is configured to perform mathematical and geometric computing for graphics rendering. The processor 310a may include one or more GPUs that perform program instructions to generate or change display information.

The electronic device 300 may implement a shooting function through the camera lens 393, the ISP, the video codec, the GPU, the display screen 394, the application processor, and the like.

The external memory interface 320 may be configured to connect to an external storage card, for example, a Micro SD card, to extend a storage capacity of the electronic device 300. The external storage card communicates with the processor 310a through the external storage interface 320, to implement a data storage function. For example, files such as music and videos are stored in the external memory card.

The internal storage 321 may be configured to store computer-executable program code, and the executable program code includes instructions. The internal storage 321 may include a program storage region and a data storage region. The program storage region can store an operating system, an application required for at least one function (such as a file transfer function and an album function), and the like. The data storage region may store data (for example, files, photos, and videos) and the like created during use of the electronic device 300.

The electronic device 300 may implement an audio function, for example, music play and recording through the audio module 370, the speaker 370A, the receiver 370B, the microphone 370C, the headset jack 370D, the application processor, and the like.

The button 390 includes a power button, a volume button, or the like. The button 390 may be a mechanical button, or may be a touch button. The electronic device 300 may receive button input, and generate button signal input related to user setting and function control of the electronic device 300.

The motor 391 may generate a vibrating prompt. The motor 391 may be used for an incoming call vibration prompt or for a touch vibration feedback. For example, touch operations performed on different applications (for example, photographing and audio playing) may correspond to different vibration feedback effects. For touch operations performed in different regions of the display screen 394, the motor 391 may also correspond to different vibration feedback effects.

The indicator 392 may be an indicator light, and may be configured to indicate a charging status or a battery level change, or may be configured to indicate a message, a missed call, a notification, and the like.

The SIM card interface 395 is configured to connect to an SIM card. The SIM card may be inserted into the SIM card interface 395 or removed from the SIM card interface 395, so that the SIM card is in contact with or separated from the electronic device 300. The electronic device 300 may support 1 or N SIM card interfaces, N being a positive integer greater than 1. The SIM card interface 395 can support a nano SIM card, a micro SIM card, a SIM card, and the like. A plurality of cards may be inserted into the same SIM card interface 395 together. Types of the plurality of cards may be the same or different. The SIM card interface 395 may be further compatible with SIM cards of different types. The SIM card interface 395 may be further compatible with an external storage card. The electronic device 300 interacts with a network through the SIM card, to implement functions such as calling and data communication.

It is apparent to a person skilled in the art that, some of specific details presented above with respect to the electronic device 300 may not be required to practice specific described implementation solutions or equivalents thereof. Similarly, another electronic device may include a larger quantity of modules, components, and the like. Some modules may be implemented as software or hardware in appropriate circumstances. Therefore, it should be understood that the above description is not intended to be exhaustive or to limit this application to the accurate form described herein. On the contrary, it is apparent to a person of ordinary skill in the art that, many modifications and variations are possible according to the foregoing teachings.

Before the cross-device window dragging system provided in this embodiment of this application is described, a manner of establishing keyboard and mouse sharing is first described.

In this establishment manner, after enabling a Bluetooth function, the electronic device may construct a trusted relationship with a near-field device of the electronic device. The near-field device may be a device that is located around the electronic device, enables a Bluetooth (or Wi-Fi) function, and is logged into with the same identity authentication account as that of the electronic device. In this way, the electronic devices between which the trusted relationship is established may provide the user with a plurality of services that includes, but is not limited to, call sharing, notification sharing, and keyboard and mouse sharing. Further, based on an identity authentication system and a networking function, a plurality of electronic devices can join the trusted relationship, that is, establish a trusted connection. The electronic devices may include a notebook computer, a smart screen, a tablet computer, a smartphone, and the like. In this embodiment of this application, based on establishment of the trusted connection, keyboard and mouse sharing may be established between the electronic devices.

For example, keyboard and mouse sharing may be established between a notebook computer, a tablet computer, and a smartphone that are located in a same trusted relationship. After the keyboard and mouse sharing is established, a mouse of the notebook computer may be used for controlling the tablet computer and the smartphone. In actual application, the user may move a mouse cursor of the notebook computer toward a side, and the mouse cursor may disappear at a side edge of the notebook computer and be displayed on the smartphone. In this case, the mouse cursor may be used for controlling the smartphone.

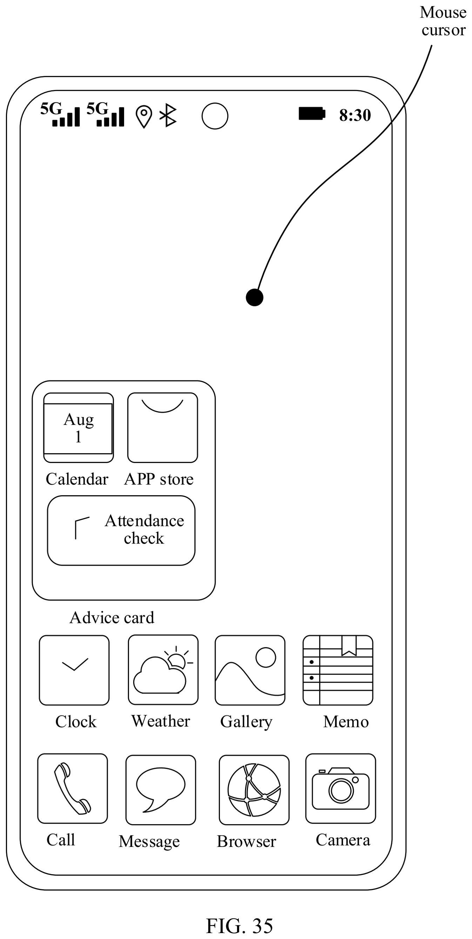

FIG. 35 is a schematic diagram of a mouse cursor being located in a smartphone.

The user may further move the mouse cursor toward another side, and the mouse cursor may be displayed on the notebook computer again. Further, the user may control the mouse cursor to continue to move toward the another side, and the mouse cursor may disappear at another side border of the notebook computer, and be displayed on the tablet computer. In this case, the mouse cursor may be used for controlling the tablet computer.

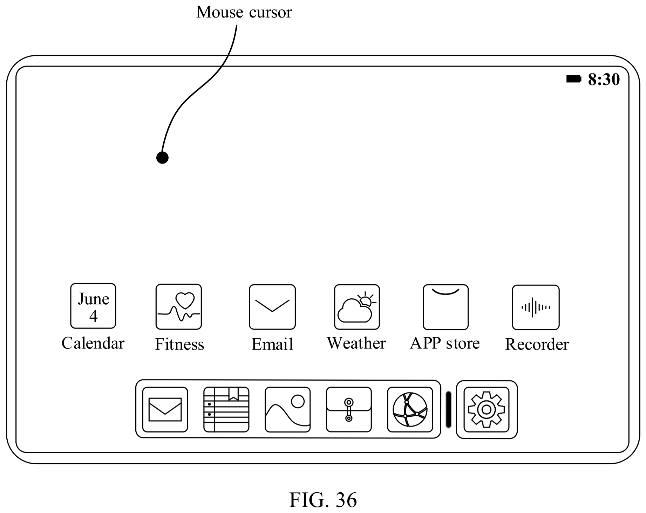

FIG. 36 is a schematic diagram of a mouse cursor being located in a tablet computer.

How to establish keyboard and mouse sharing between a notebook computer, a tablet computer, and a smartphone is described below with reference to the accompanying drawings.

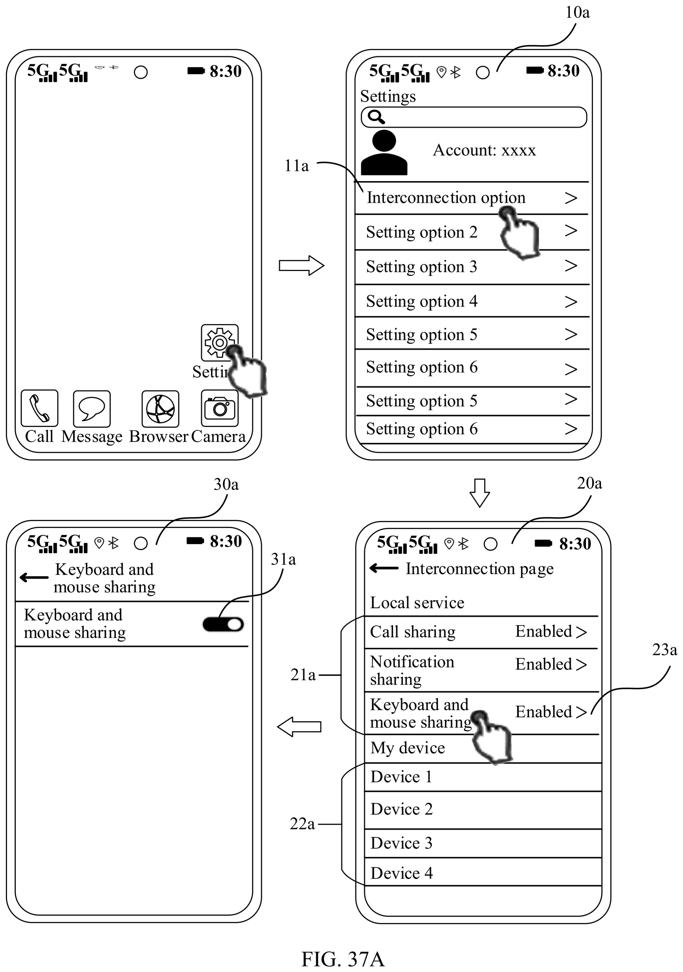

FIG. 37A is a schematic diagram of enabling a keyboard and mouse sharing function by a smartphone according to an embodiment of this application.

In this embodiment of this application, an electronic device may actively identify a near-field electronic device located near the electronic device, to implement multi-device self-discovery, self-networking, and self-connection.

As shown in FIG. 37A, in response to a click operation performed by the user on a first application icon on a screen interface of a smartphone, the smartphone displays a first setting page 10a. The first application icon is, for example, an icon of a setting application. The first setting page 10a includes one or more options, including at least a first interconnecting option 11a. The smartphone may enter a first interconnection page 20a in response to a click operation performed by the user on the first interconnecting option 11a. The first interconnection page 20a includes a plurality of first collaboration service options 21a. First collaboration services are, for example, call sharing, notification sharing, and keyboard and mouse sharing. Further, the first interconnection page 20a may further include a first device list 22a. When enabling a Bluetooth function, the smartphone can automatically discover a near-field device that is located around the smartphone, that also enables the Bluetooth function, and that is logged into with the same identity authentication account, and then automatically establish a Bluetooth connection to the near-field device, to complete self-networking and form a trusted relationship. The smartphone may display, in the first device list 22a, a device name of the near-field device that has established the connection.

In response to a click operation performed by the user on a first keyboard and mouse sharing option 23a, the smartphone displays a first keyboard and mouse sharing page 30a. The first keyboard and mouse sharing page 30a includes a first keyboard and mouse sharing switch 31a. In response to a click operation performed by the user on the first keyboard and mouse sharing switch 31a, the smartphone may enable or disable a keyboard and mouse sharing service. When the first keyboard and mouse sharing switch 31a is in an enabled state, it indicates that the smartphone supports establishing keyboard and mouse sharing with another electronic device in the trusted relationship.

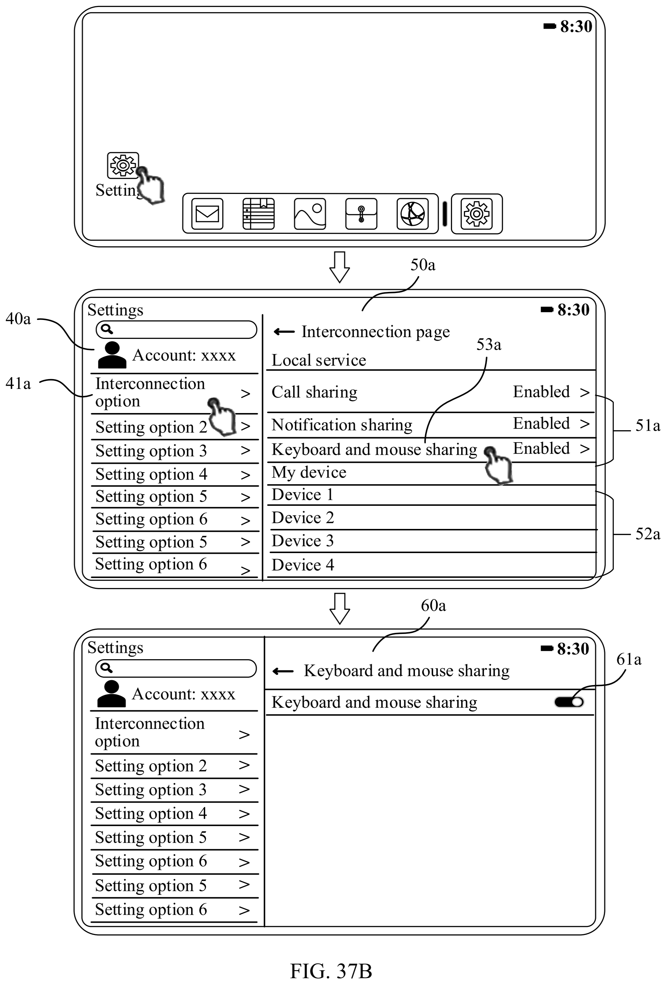

FIG. 37B is a schematic diagram of enabling a keyboard and mouse sharing function by a tablet computer according to an embodiment of this application.

As shown in FIG. 37B, in response to a click operation performed by the user on a second application icon on a screen interface of the tablet computer, the smartphone displays a second setting page 40a. The second application icon is, for example, an icon of a setting application. The second setting page 40a includes one or more options, including at least a second interconnecting option 41a. The tablet computer may enter a second interconnection page 50a in response to a click operation performed by the user on the second interconnecting option 41a. The second interconnection page 50a includes second collaboration service options 51a. Second collaboration services are, for example, call sharing, notification sharing, and keyboard and mouse sharing. Further, the second user page 50a may include a second device list 52a. When enabling a Bluetooth function, the tablet computer can automatically discover a near-field device that is located around the tablet computer, that also enables the Bluetooth function, and that is logged into with the same identity authentication account, and then automatically establish a Bluetooth connection to the near-field device, to complete self-networking and form a trusted relationship. The tablet computer may display, in the second device list 52a, a device name of the near-field device that has established the connection.

In response to a click operation performed by the user on a second keyboard and mouse sharing option 53a, the tablet computer displays a second keyboard and mouse sharing page 60a. The second keyboard and mouse sharing page 60a includes a second keyboard and mouse sharing switch 61a. In response to a click operation performed by the user on the second keyboard and mouse sharing switch 61a, the tablet computer may enable or disable a keyboard and mouse sharing service. When the second keyboard and mouse sharing switch 61a is in an enabled state, it indicates that the tablet computer supports establishing keyboard and mouse sharing with another electronic device in the trusted relationship.

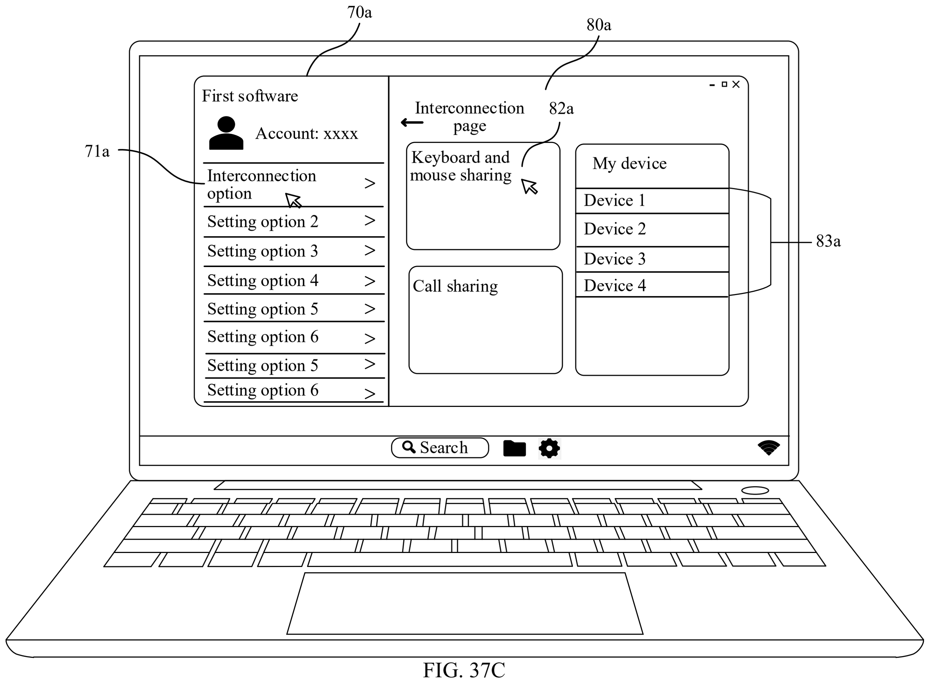

FIG. 37C is a schematic diagram of enabling a keyboard and mouse sharing function by a notebook computer according to an embodiment of this application.

As shown in FIG. 37C, in response to a double-click operation performed by the user on first software, the notebook computer opens a software page 70a. The first software is, for example, computer manager software. The double-click operation on the first software may be that the user moves a mouse cursor of the notebook computer by using a touchpad of the notebook or an input device (for example, a mouse) and controls the mouse cursor to double-click the first software in the notebook computer.

A first side of the software page 70a includes one or more options, including at least a third interconnecting option 71a, and a second side of the software page is used for displaying a user interface corresponding to a selected option. In response to a single click operation performed by the user on the third interconnecting option 71a, the notebook computer displays a third interconnection page 80a on the second side of the software page 70a. The third interconnection page 80a includes a plurality of function cards, and is used to introduce a third collaboration service that can be provided by the notebook computer to the user. The third collaboration service may be, for example, keyboard and mouse sharing or call sharing.

Further, the third interconnection page 80a may further include a third device list 83a. When enabling a Bluetooth function, the notebook computer can automatically discover a near-field device that is located around the notebook computer, that also enables the Bluetooth function, and that is logged into with the same identity authentication account, and then automatically establish a Bluetooth connection to the near-field device, to complete self-networking and form a trusted relationship. The notebook computer may display, in the third device list 83a, a device name of the near-field device that has established the connection.

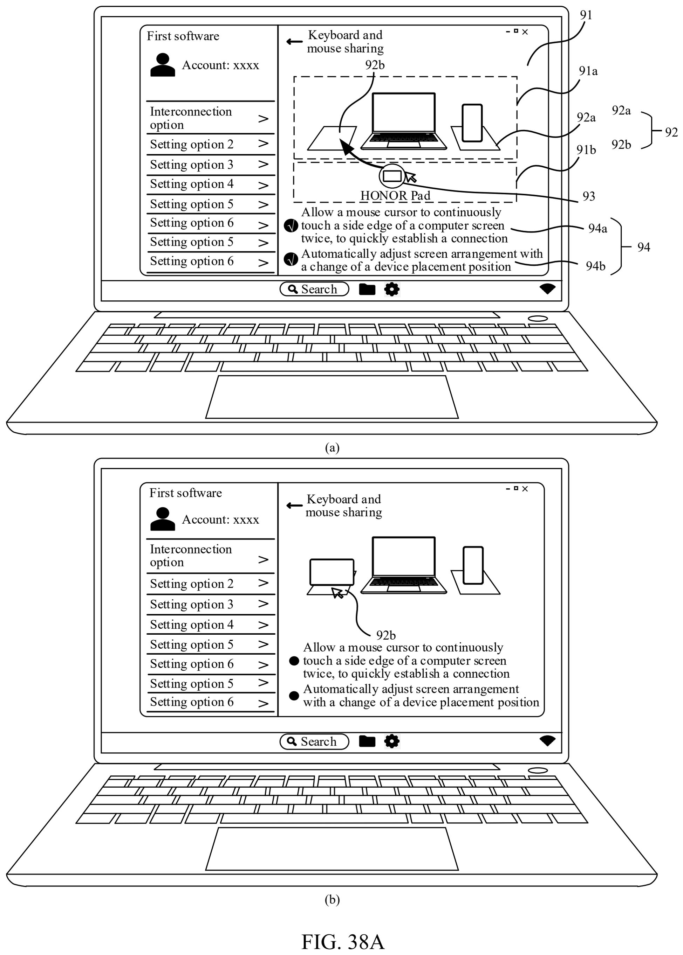

FIG. 38A is a first schematic diagram of establishing keyboard and mouse sharing according to an embodiment of this application.

As shown in FIG. 37C and FIG. 38A, specific steps of establishing keyboard and mouse sharing are as follows:
In response to a double-click operation performed by the user on a keyboard and mouse sharing card 82a, the notebook computer displays a third keyboard and mouse sharing page 91 on a second side. The third keyboard and mouse sharing page 91 includes a first device display region 91a and a second device display region 91b. The first device display region 91a includes a notebook computer schematic diagram at a middle position. The notebook computer schematic diagram is used for presenting to the user that a current device is the notebook computer. The first device display region 91a further includes a presentation platform 92 located on left and right sides of the notebook computer. The first device display region 91a further includes a smartphone schematic diagram suspended on a presentation platform 92a on one side, to present to the user that the smartphone has established keyboard and mouse sharing with the notebook computer. The second device display region 91b is located below the first device display region 91a, and includes at least a device identifier wrapped by a first bubble element 93, and there is a device name below a bubble. The first bubble element 93 is used for presenting, to the user, information about an electronic device that is in a trusted relationship and that does not establish keyboard and mouse sharing with the notebook computer. The first bubble element 93 shown in the figure is used for representing that the device is a tablet computer, whose device name is "HONOR Pad".

Further, when the tablet computer needs to be added to keyboard and mouse sharing initiated by the notebook computer, the user may move the mouse cursor onto the first bubble element 93 and press the mouse, then keep the mouse in a pressing state to move the first bubble element 93 to a presentation platform 92b on the other side in the first device display region 91a, and then release the mouse. The notebook computer may move the first bubble element 93 in response to a mouse pressing event. Then, the notebook computer may replace the first bubble element 93 with a tablet computer schematic diagram on the presentation platform 92b on the other side in response to a mouse lifting event, and establish keyboard and mouse sharing between the notebook computer and the tablet computer. In this way, the tablet computer whose device name is "HONOR Pad" may establish keyboard and mouse sharing with the notebook computer.

It can be learned that, keyboard and mouse sharing may be performed between different electronic devices located in a same trusted relationship.

Still referring to FIG. 38A, the third keyboard and mouse sharing page 91 further includes at least two optional items 94. In response to a click operation performed by the user on a tab 94a, the notebook computer may enable or disable a function of "allowing a mouse cursor to continuously touch a side edge of a computer screen twice, to quickly establish a connection". In response to a click operation performed by the user on a tab 94b, the notebook computer may enable or disable a function of "automatically adjusting screen arrangement with a change of a device placement position".

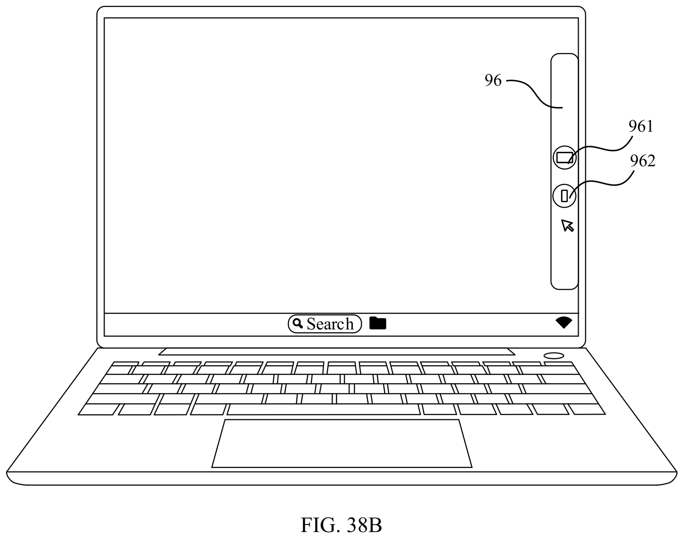

FIG. 38B is a second schematic diagram of establishing keyboard and mouse sharing according to an embodiment of this application.

In this embodiment of this application, keyboard and mouse sharing may also be enabled by using an input device having a pairing relationship with the notebook computer. The input device may be, for example, a wired mouse, a wireless mouse, a wired keyboard, and/or a wireless keyboard. As shown in FIG. 38B, the notebook computer may pop up a fourth keyboard and mouse sharing page 96 on a side edge of the screen in response to an event of allowing a mouse cursor to continuously touch a side edge of a computer screen twice. The fourth keyboard and mouse sharing page 96 includes a second bubble element 961 and a third bubble element 962. The second bubble element 961 is used for presenting, to the user, a tablet computer that is located in a same trusted relationship around the notebook computer and that does not establish keyboard and mouse sharing with the notebook computer. The third bubble element 962 is used for presenting, to the user, a smartphone that is located in a same trusted relationship around the notebook computer and that does not establish keyboard and mouse sharing with the notebook computer. In response to a click operation performed by the user on the second bubble element 961 and/or the third bubble element 962, the notebook computer may establish keyboard and mouse sharing with the tablet computer and/or the smartphone.

In this way, the notebook computer may establish keyboard and mouse sharing with the tablet computer and/or the smartphone.

It should be additionally noted that, in the solution provided in this embodiment of this application, when the function of "automatically adjusting screen arrangement with a change of a device placement position" is enabled, the notebook computer may automatically identify a physical position of the smartphone and/or tablet computer located around the notebook computer. In this way, when the smartphone is located on a side of the notebook computer, after the user moves the mouse cursor, it can be ensured that the mouse cursor can be displayed on the smartphone instead of being displayed on the tablet computer located on another side of the notebook computer.

It should be additionally noted that, the keyboard and mouse sharing not only may be initiated by the input device of the notebook computer, but also may be initiated by the input device of the tablet computer. This is not specifically limited in this embodiment of this application.

An embodiment of this application provides a multi-device collaboration system. The system includes at least an input device, a first device, and a second device. The first device may be equipped with a first operating system, the second device may be equipped with a second operating system, and the first operating system is different from the second operating system. For example, the first operating system may be any one of a Windows operating system, a Mac OS, a Linux operating system, a Unix operating system, a DOS operating system, a Honor operating system (Magic OS), an Android (Android) operating system, iOS, or a Harmony operating system (Harmony OS), and the second operating system may be any one of a Windows operating system, a Mac OS, a Linux operating system, a Unix operating system, a DOS operating system, a Honor operating system, an Android operating system, iOS, or a Harmony operating system that is different from the first operating system.

For example, the input device may be a mouse or a touchpad. The first device may be a tablet computer, a smartphone, a large-screen device (for example, a smart screen or a smart television), a wearable device (for example, a smart band or a smart watch), or the like. The second device may be, for example, a personal computer PC.

The input device may be an external device of the first device, or may be an external device of the second device. The first device and the second device may establish keyboard and mouse sharing. After the keyboard and mouse sharing is established, the input device may be configured to control both the first device and the second device.

In this embodiment of this application, the first device and the second device may be located in a same trusted relationship, and the first device and the second device may establish keyboard and mouse sharing based on the trusted relationship. The first device and the second device may also establish keyboard and mouse sharing in another manner. This is not specifically limited in this embodiment of this application.

The multi-device collaboration system provided in this embodiment of this application may be configured to perform a multi-device collaboration method. In this way, cross-system and cross-device dragging of an application window between the first device and the second device may be visually implemented. Specifically, an application window of the first device may be dragged to the second device by using the input device, so that the application window of the application of the first device is displayed on the screen interface of the second device. In this way, user experience can be improved. In addition, the multi-device collaboration system provided in this embodiment of this application may perform window dragging based on keyboard and mouse coordination. Before dragging, a device search and connection process between the first device and the second device does not need to be performed, which can improve operation efficiency.

In this embodiment of this application, an application window is a display form of an application user interface. The application window is equivalent to a container of the application user interface, and a user may click a user interface in the window, to perform human computer interaction with the application. In electronic devices having different operating systems, there may have different window display specifications for a same application. In a same electronic device, different types of application windows may have different window display specifications for a same application, and a same type of application window may have a same window display specification for different applications.

For example, for an electronic device configured with an Android operating system, types of application windows include at least a full-screen-state application window, a floating window, a split-screen-state application window, an intra-application split-screen window, and the like. The window display specifications are, for example, a style of a button and a display position of the button. For an electronic device configured with a windows operating system, types of application windows include at least a maximized window, a minimized window, a normal window, and the like. Window display specifications are, for example, display positions of a maximization button, a minimization button, and a close button.

In some implementations, after the first device establishes the keyboard and mouse sharing with the second device, the input device may be configured to control the first device and the second device. For example, when the input device is a mouse, the first device may display a first cursor on the display screen of the first device. As the user moves the mouse in a direction close to the second device, the mouse is switched from being connected to the first device to being connected to the second device. In this case, the first device hides the first cursor, and the second device may display the second cursor on the display screen of the second device. This process may also be referred to as mouse traversal.

The following describes the first embodiment of the multi-device collaboration method of the embodiments of this application with reference to the accompanying drawings. This embodiment may be applied to a multi-device collaboration system in which the first device is a tablet computer, the second device is a PC, and the input device is a mouse.

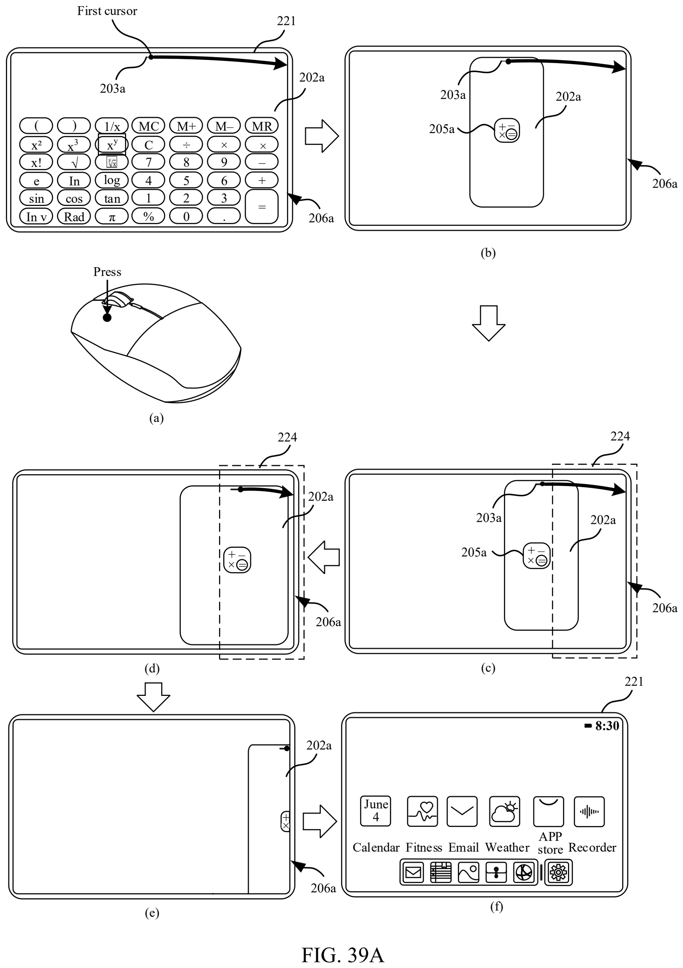

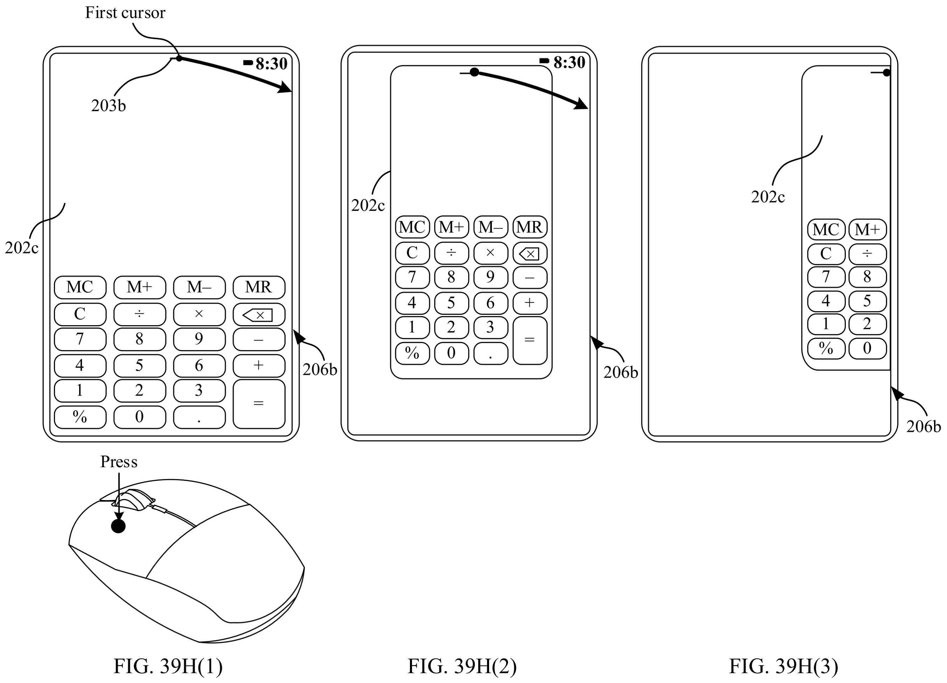

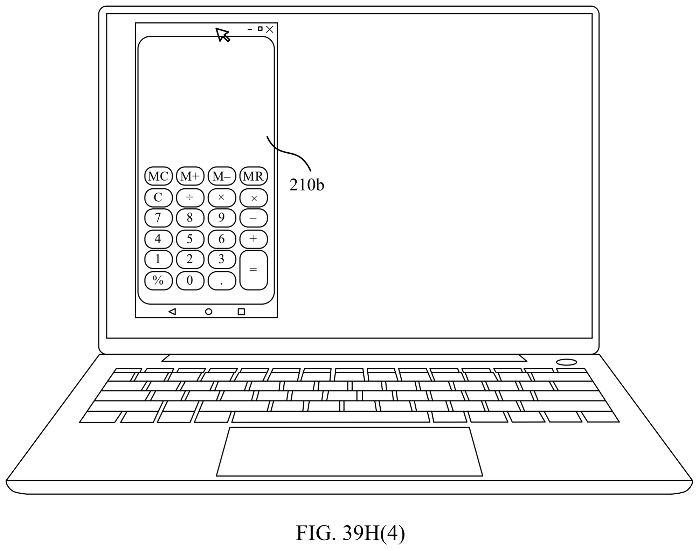

FIG. 39A to FIG. 39H(1), FIG. 39H(2), FIG. 39H(3), and FIG. 39H(4) are schematic diagrams of the first embodiment of the multi-device collaboration method according to the embodiments of this application.

As shown in (a) of FIG. 39A, a first display screen 221 may include a first window 202a displayed in a full-screen manner. The first display screen 221 may be a display screen of a tablet computer. The first window 202a may be a window matching a first operating system of the tablet computer, and conforms to a display specification of the first operating system for a full-screen display window. A second user interface of a first application is displayed in the first window 202a, and the first application may be any application already installed in the tablet computer. The full-screen display may mean that the first display screen 221 is fully paved with the first window 202a, and in this case, the tablet computer may be in a landscape state. The first window 202a shown in FIG. 39A is an application window of a calculator application when the tablet computer is in the landscape state. Herein, the first window 202a is merely described as an example.

A first floating button (bar) 203a may be included at a middle position at the top of the first window 202a. The first floating button 203a may be a button residing in the first window 202a. A shape of the first floating button 203a may be a strip, a circle, a dot, or the like. The first floating button 203a may be configured to implement a function such as moving the first window 202a.

In some implementations, the first floating button 203a may also be waked by a user operation. The user operation is, for example, clicking any position of the first window 202a, or the user operation is, for example, allowing the first cursor to stay at the top of the first window 202a for a preset time. In response to the user operation, the tablet computer may switch the first floating button 203a from a hidden state to a displayed state.

In some implementations, the user may perform an operation such as clicking or long-pressing on the first floating button 203a by using a mouse. For example, the user may press a mouse button, press and hold the first floating button 203a by using the mouse, and drag the first floating button 203a in any direction, and then release the mouse button. In this way, the tablet computer can switch the first window 202a from a full-screen display window to a floating window. The floating window is an application window type, and the floating window may movably float on a desktop of the tablet computer or another application interface.

In this embodiment of this application, still as shown in (a) of FIG. 39A, the user may control the first cursor by using the mouse, so that the first cursor drags the first window 202a to move toward a first screen edge 206a.

Specifically, the user may operate the mouse, move the first cursor to the first floating button 203a, and drag the first floating button 203a. For example, the user may move the mouse to move the first cursor. After moving the first cursor onto the first floating button 203a, the user may press a mouse button, and then keep the pressing action and drag, so that the first cursor drags the first floating button 203a.

It may be understood that, when the tablet computer and the PC establish the keyboard and mouse sharing, there is a relative position relationship between the tablet computer and the PC, and the first screen edge 206a may be determined by the relative position relationship. For example, if the tablet computer is in a landscape state and is located on the left side of the PC, the first screen edge 206a may be a right edge of the first display screen 221. Therefore, the user may operate the mouse to drag the first floating button 203a toward the right edge of the tablet computer. If the tablet computer is in a landscape state and is located on the right side of the PC, the first screen edge 206a may be a left edge of the first display screen 221. Therefore, the user may operate the mouse to drag the first floating button 203a toward the left edge of the tablet computer.

As shown in (b) of FIG. 39A, when a first cursor drags a first floating button 203a, the tablet computer may scale down a first window 202a, and the tablet computer may replace a second user interface in the first window 202a with a first icon 205a. The first icon 205a may be an icon of a first application. The scaling-out proportion may be determined by an actual situation. This is not specifically limited in this embodiment of this application.

In some implementations, the scaled-down first window 202a may float above a first page, and the first page may be a page formed after a masking effect is added to a wallpaper of the tablet computer.

Next, the user may operate the mouse to drag the first floating button 203a toward the first screen edge 206a.

As shown in (c) of FIG. 39A, when the first cursor does not reach a first screen region 224 and the scaled-down first window 202a does not reach the first screen edge 206a, the tablet computer may move the scaled-down first window 202a. The first screen region 224 may be a partial region that is in a screen region of the tablet computer and that uses the first screen edge 206a as an edge, or may be a partial region that is in a screen region of the tablet computer and that is close to the first screen edge 206a. For example, the first screen region 224 may be a partial rectangular region using the first screen edge 206a as an edge. A specific range of the first screen region 224 may be determined according to an actual situation. This is not specifically limited in this embodiment of this application.

As shown in (d) of FIG. 39A, when the first cursor moves to the first screen region 224, the tablet computer scales up the scaled-down first window 202a, where a size of the first window 202a after being scaled up is less than a size of the first window 202a before being scaled down.

In some implementations, if the user releases the mouse button after the first window 202a is scaled up, the tablet computer may switch the first window 202a to a split-screen display state.

Next, as shown in (e) of FIG. 39A, when the window edge of the first window 202a moves out of the first screen edge 206a and the first cursor does not reach the first screen edge 206a, the tablet computer may hide a part of the first window 202a located outside the first screen edge 206a.

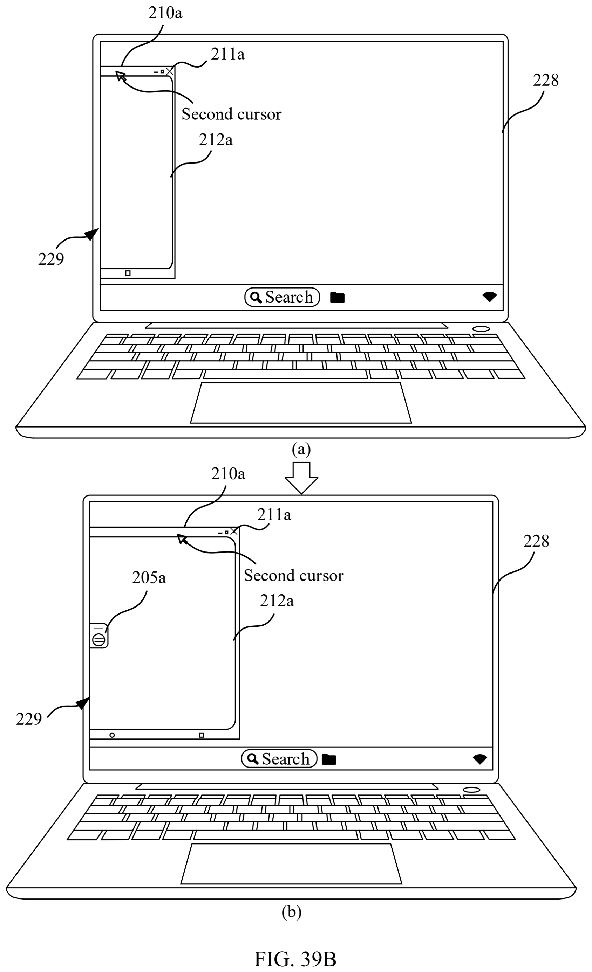

As shown in (f) of FIG. 39A and (a) of FIG. 39B, when the first cursor moves out from the first screen edge 206a to the second screen edge 229 of the PC, the tablet computer may hide the first window 202a and the first cursor. In addition, the PC may display, at the second screen edge 229, a part of the second window 210a and a second cursor located on the part of the second window 210a. The second cursor may be located at the top of the second window 210a.

When the first cursor moves out from the first screen edge 206a to the second screen edge 229 of the PC, the mouse is switched from being connected to the tablet computer to being connected to the PC, to complete mouse traversal. Specifically, the tablet computer may detect a position of the first cursor. When the tablet computer detects that the first cursor is located outside the first screen edge 206a, the tablet computer may send a first message to the PC, may disconnect from the mouse, and may hide the first cursor and the first window 202a. The PC may establish a connection to the mouse according to the first message, and display the second cursor and the second window 210a at the second screen edge 229.

In actual application, the step in which the tablet computer hides the first cursor and the first window 202a and the step in which the PC displays the second cursor and the second window 210a at the second screen edge 229 may be performed at the same time. Alternatively, the step in which the tablet computer hides the first cursor and the first window 202a is earlier than the step in which the PC displays the second cursor and the second window 210a at the second screen edge 229. This is not specifically limited in this embodiment of this application.

It may be understood that an orientation of the first screen edge 206a is opposite to an orientation of the second screen edge 229, and the second screen edge 229 is determined by a relative position relationship between the PC and the tablet computer. For example, if the PC is located at a right side of the tablet computer, the second screen edge 229 may be a left edge of the second display screen 228. If the PC is located at a left side of the tablet computer, the second screen edge 229 may be a right edge of the second display screen 228.

Still as shown in (a) of FIG. 39B, the second window 210a is a window matching a second operating system of the PC, and conforms to a display specification of the second operating system for a window. The top of the second window 210a may include a first title bar 211a, the first title bar 211a may include a minimization button, a maximization button, and a close button, and the minimization button, the maximization button, and the close button may be used for controlling a display state of the second window 210a. For example, the minimization button, the maximization button, and the close button may be arranged in sequence, and may be located on a side of the first title bar 211a.

The second window 210a may further include a first display region 212a. When the PC displays a part of the second window 210a at the second screen edge 229, the first display region 212a may include a first icon 205a, and the first icon 205a may be located outside the second screen edge 229. The first icon 205a may be displayed by the PC after being sent by the tablet computer to the PC.

Still as shown in (f) of FIG. 39A, after the tablet computer hides the first window 202a and the first cursor, or after the tablet computer hides the first window 202a and the first cursor, the tablet computer may switch from displaying a wallpaper to which a masking effect is added to displaying a desktop.

As shown in (b) of FIG. 39B, the user may control the second cursor by using the mouse, so that the second cursor drags the second window 210a to move in a direction away from the second screen edge 229. In this process, when a partial window of the second window 210a is moved into the second screen edge 229, the PC may display the partial window moved into the second screen edge 229.

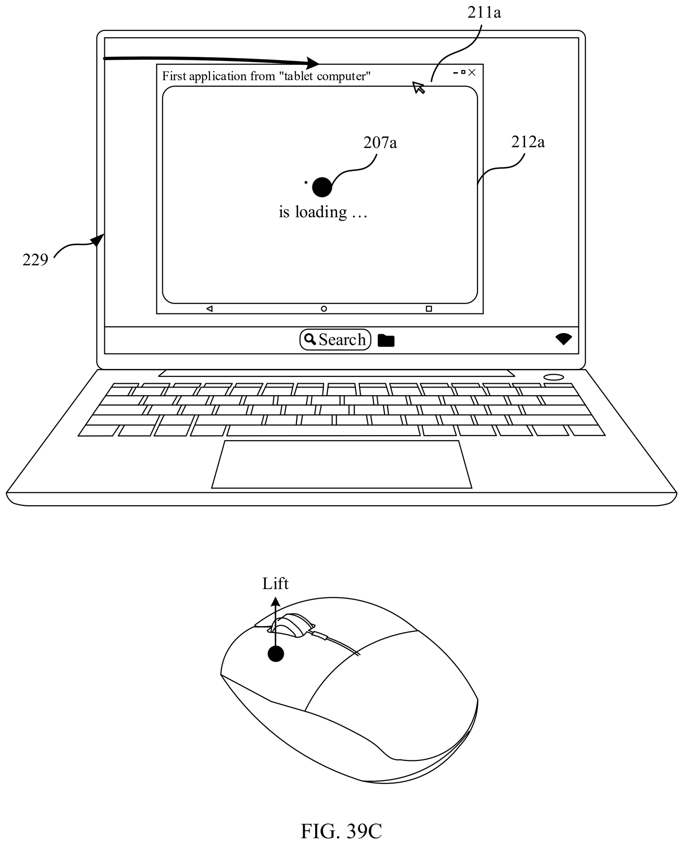

Next, as shown in FIG. 39C, the user may lift a finger to release the mouse button, so that the mouse releases the second window 210a. In this case, the mouse button is lifted.

When the second cursor releases the second window 210a, still as shown in FIG. 39C, the PC may load the first user interface corresponding to the first application, and replace the first icon 205a in the first display region 212a with the first element 207a. The first element 207a is used for indicating that the PC is loading the first user interface. For example, when the first user interface is not loaded successfully, the first element 207a may be two water-beaded elements that are continuously separated and fused.

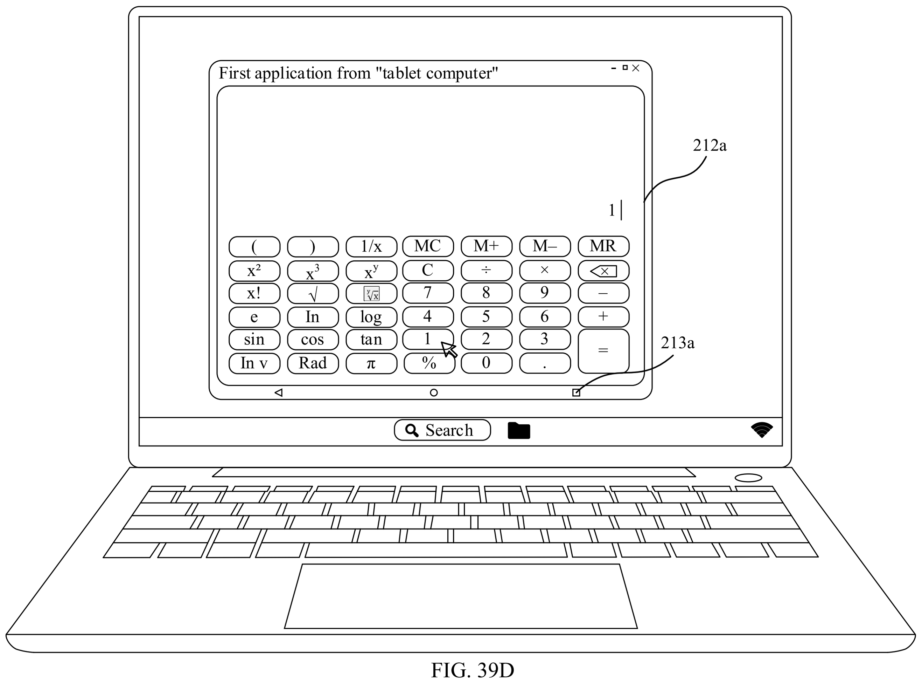

Specifically, the PC may send a first event to the tablet computer in response to an action of releasing the mouse button. The tablet computer may create a virtual display (display) in response to the first event, and draw a first user interface in the virtual display. In addition, content in the first user interface is the same as content in the second user interface. It may be understood that the virtual display is invisible to a user. Then, the tablet computer may send the first user interface to the PC. After the PC receives the first user interface, loading of the first user interface is completed. As shown in FIG. 39D, the PC may replace the first element 207a in the first display region 212a with the first user interface.

For example, still as shown in (a) of FIG. 39A, a user interface (a second user interface) of the calculator application in the first window 202a may be in a landscape state, and content displayed on the user interface is a scientific calculator. Then, as shown in FIG. 39D, the first user interface may also be in a landscape state, and content in the first user interface may also be a scientific calculator.

In this way, after the PC displays the second user interface in the first display region 212a, a window traverses between the tablet computer and the PC in terms of visual experience, and after the window traverses to the PC, the user may interact with the first application in the PC, which can improve user experience.

Still as shown in FIG. 39D, the first title bar 211a may further include a title, and the title is, for example, "First application from "tablet computer"". The bottom of the second window 210a may further include a first navigation bar 213a. The first navigation bar 213a may be, for example, a navigation bar of three-button navigation, and includes a functional button for controlling an application window. The first navigation bar 213a may specifically include a back button, a home screen button, and a multitasking button that are sequentially arranged. In actual application, a user may operate a mouse, to click a button in the first navigation bar 213a. The PC may change content displayed in the first display region 212a in response to the click operation. The foregoing process is described in detail below. Details are not described herein.

It should be additionally noted that, before releasing the mouse button, the user may operate the mouse to move the second cursor to a target position. The target position may be any position in the field of view of the second display screen 228. Because the second window 210a is in a state of moving with the second cursor, the PC may move the second window 210a to the target position in response to an operation of moving the second cursor to the target position by the user.

In some embodiments, the user may operate the mouse to interact with the user interface in the second window 210a. Still as shown in FIG. 39D, the user may operate the mouse to click the button "1" on the calculator user interface in the second window 210a, and the PC may display the numeral "1" in a display region of the calculator user interface.

Specifically, after the user operates the mouse to click the button "1", the PC may send a second event to the tablet computer. In response to the second event, the tablet computer may modify content displayed on the virtual display, so that the display region of the calculator user interface on the virtual display displays the numeral "1". Then, the tablet computer may send content in the virtual display to the PC. After receiving the content sent by the tablet computer, the PC may replace the content in the first display region 212a with the content sent by the tablet computer.

It may be understood that, in the multi-device collaboration method provided in this embodiment of this application, after window dragging, the second window 210a of the PC may display the first user interface of the first application. In this case, the tablet computer may display another interface other than the user interface of the first application, for example, a desktop. In this way, a cross-origin screen projection may be formed between the tablet computer and the PC.

Further, according to the multi-device collaboration method provided in this embodiment of this application, in response to a user operation, the cross-origin screen projection between the tablet computer and the PC may be switched to the same-origin screen projection. The same-origin screen projection means that the tablet computer completely sends content displayed in the first display screen 221 of the tablet computer to the PC, and after receiving the content sent by the tablet computer, the PC replaces the content in the first display region 212a with the received content.

Specifically, the user may click the back button in the first navigation bar 213a, and in this case, the PC may send a third event to the tablet computer. The tablet computer may modify the first user interface in the virtual display into a third user interface in response to the third event. The third user interface is a previous-level interface of the first user interface. For example, when the first application is an album application and the first user interface includes a scaled-up image, the third user interface is an interface including a thumbnail image.

Further, when the first user interface does not include a previous-level interface, the tablet computer may capture complete content currently displayed on the first display screen 221, to form a first interface, and send the first interface to the PC. After receiving the first interface, the PC may replace content in the first display region 212a with the first interface. In this case, the PC and the tablet computer may be switched from a cross-origin screen projection to a same-origin screen projection.

Further, the user may click the home screen button or multitasking button in the first navigation bar 213a, and in this case, the PC may send a fourth event to the tablet computer. The tablet computer may switch the content on the first display screen 221 to a home screen interface or a multitasking interface in response to the fourth event, and send a second interface to the PC. Content in the second interface is the same as content in the home screen interface or the multitasking interface, and the multitasking interface includes all background programs currently running on the tablet computer. After receiving the second interface, the PC may replace content in the first display region 212a with the second interface. In this case, the PC and the tablet computer may be switched from a cross-origin screen projection to a same-origin screen projection.

It can be learned that according to the multi-device collaboration method provided in this embodiment of this application, cross-system and cross-device dragging of an application window can be visually implemented. The application window may be, for example, a full-screen application window in the tablet computer. In addition, after the dragging succeeds, the user may control the application window in the PC, that is, the application may continue to provide a service for the user after device crossing, which can improve user experience. After the dragging succeeds, the tablet computer may present a desktop or an application window of another application other than the first application to the user, for the user to use, so as to implement cross-origin screen projection, thereby further improving user experience. In addition, according to the multi-device collaboration method provided in this embodiment of this application, a cross-origin screen projection can be switched to a same-origin screen projection, and user experience can also be improved.

In some embodiments, if the user no longer needs to drag the first window 202a, the user may operate the mouse before releasing the mouse button, so that the second cursor drags the second window 210a to move toward the second screen edge 229.

When a window edge of the second window 210a moves out of the second screen edge 229 and the second cursor does not reach the second screen edge 229, the PC may hide a part of the second window 210a located outside the second screen edge 229.

When the second cursor moves out from the second screen edge 229 to the first screen edge 206a, the PC may hide the second window 210a and the second cursor, and the tablet computer may display the first window 202a and a cursor located on the first window 202a.

When the second cursor moves out from the second screen edge 229 to the first screen edge 206a of the PC, the mouse is switched from being connected to the PC to being connected to the tablet computer, to complete mouse traversal. Specifically, the PC may detect a position of the second cursor. When the PC detects that the second cursor is located outside the second screen edge 229, the PC may send a second message to the tablet computer, disconnect from the mouse, and hide the second cursor and the second window 210a. The tablet computer may establish a connection to the mouse according to the second message, and display the second cursor and the first window 202a on the first display screen 221. In this case, a size of the first window 202a is less than a size of a window displayed in full screen, and the first window 202a may include a first icon 205a.

In actual application, the step in which the PC hides the second cursor and the second window 210a and the step in which the tablet computer displays the first cursor and the first window 202a may be performed at the same time. Alternatively, the step in which the PC hides the second cursor and the second window 210a is earlier than the step in which the tablet computer displays the first cursor and the first window 202a. This is not specifically limited in this embodiment of this application.

The user may lift a finger to release the mouse button after the first cursor and the first window 202a appear, so that the first cursor releases the first window 202a. In this case, the mouse button is lifted.

When the first cursor releases the first window 202a, the tablet computer may switch the first window 202a back to a full-screen display state, and display the second user interface in the first window 202a, to implement back-traversal of the first window 202a. In this way, the user may freely select whether to drag the first window 202a into the PC, which can improve user experience.

In some embodiments, the user may operate a mouse to click a button in the first title bar 211a. In response to operating the mouse by the user to click the button in the first title bar 211a, the PC may switch a display state of the second window 210a.

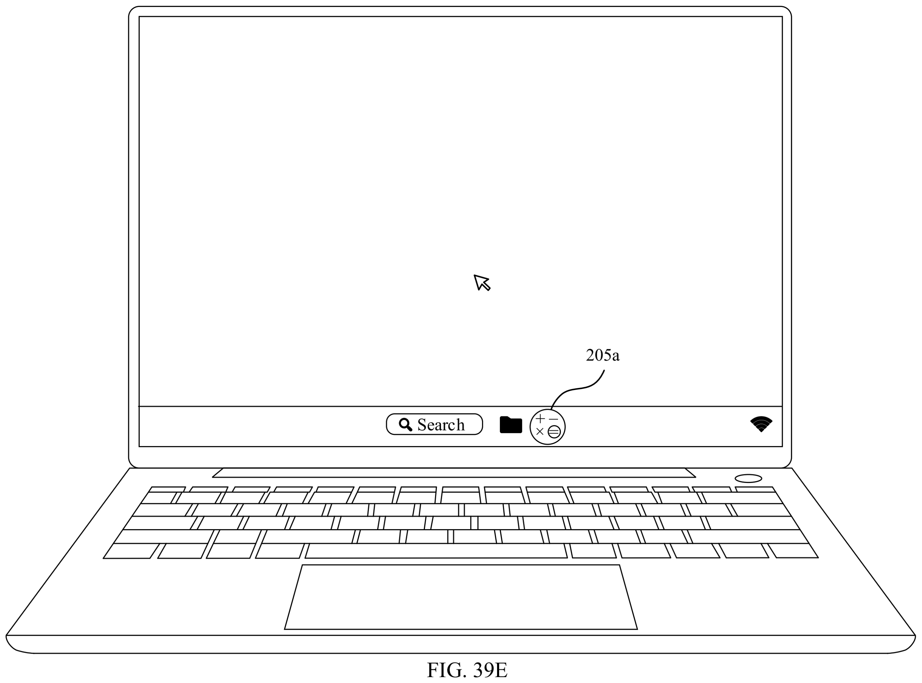

For example, the user may operate the mouse to click the minimization button in the first title bar 211a. As shown in FIG. 39E, the PC may minimally display the second window 210a in response to the operation. Minimally displaying may be specifically that the second window 210a is hidden, and a minimized window is displayed in a bottom status bar of the second display screen 228. The minimized window may include the first icon 205a.

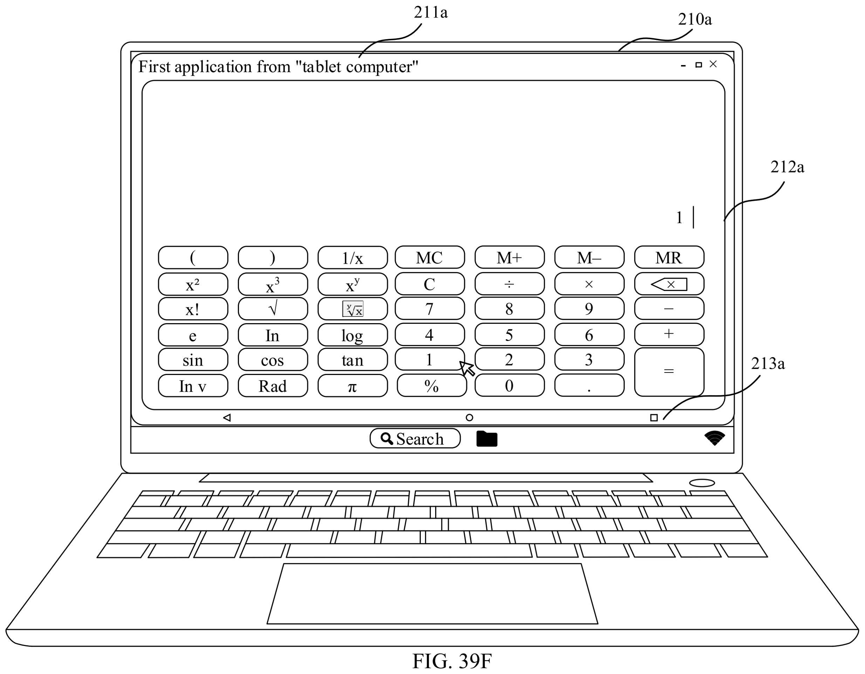

For another example, as shown in FIG. 39F, the user may operate the mouse to click the maximization button in the first title bar 211a, and the PC may fully pave the second window 210a with the second display screen 228 in response to the operation. It may be understood that because the second window 210a is an application window in a landscape state, the first display region 212a (the first user interface) in the second window 210a may be stretched with the second window 210a. In actual application, when the first display region 212a cannot be stretched with the second window 210a, the first display region 212a may be scaled up according to a proportion. A specific scaling up manner of the first display region 212a may be determined based on an actual situation. This is not specifically limited in this embodiment of this application.

For another example, the user may operate the mouse to click the close button in the first title bar 211a, and the PC may close the second window 210a in response to the operation. After the PC closes the second window 210a, the user may continue to interact with the first application in the tablet computer.

It can be known from the foregoing content that according to the multi-device collaboration method provided in this embodiment of this application, an application window in a full-screen state on the tablet computer can be dragged toward the PC, to visually implement window traversal. In addition, in a dragging process, the tablet computer may scale down the application window from the full-screen state. After the first cursor reaches a specified region (a first screen region), the tablet computer may scale up the scaled-down application window. If the user releases a mouse button after the application window is scaled up, the application window may be switched to a window in a split-screen state. If the user keeps the dragging action after the application window is scaled up, the application window may be dragged to the PC. In this way, a requirement of the user for split-screen display and a requirement of dragging the window may be both taken into consideration, thereby ensuring animation smoothness and improving user experience. In addition, after the dragging succeeds, the application window at the PC end may remain in a landscape state consistent with that of the application window in the tablet computer, so that continuity of use of the application window can be ensured, and user experience can also be improved.

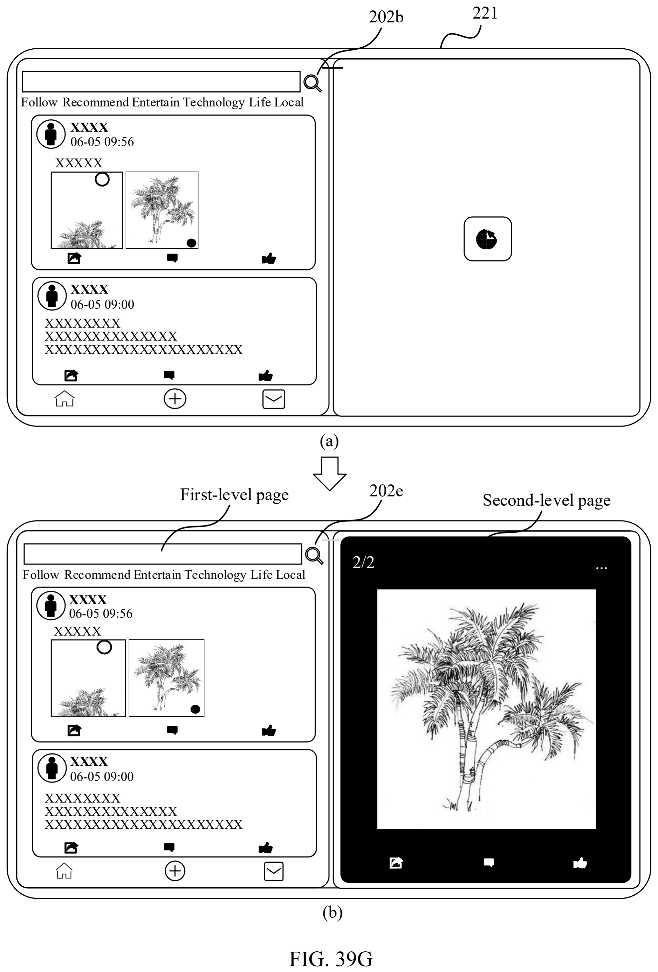

As shown in (a) and (b) of FIG. 39G, in this embodiment of this application, a first display screen 221 further includes a first window 202b displayed in a full-screen manner. The first window 202b may be a window matching a first operating system of the tablet computer, and conforms to a display specification of the first operating system for a full-screen display window. A second user interface of a first application is displayed in the first window 202b, and the first application may be any application already installed in the tablet computer. The first window 202b may be an intra-application split-screen window. The intra-application split-screen window is a special full-screen display window, and the window may also be referred to as a parallel view window. In this case, the tablet computer is in a landscape state. The intra-application split-screen window may include at least two task windows of a single application, the two task windows may be set in parallel, and a screen interface of the tablet computer may be fully paved with the two task windows.

In some embodiments, there may be a hierarchy relationship between the two task windows. For example, as shown in (a) of FIG. 39G, in response to an internal split-screen operation performed by the user on the first application, the tablet computer first displays a screen-on image, an initialization page, and/or a first-level page of the first application on a left task window of the first display screen 221, and displays an icon of the first application in a right task window of the first display screen 221. For example, the icon is located at a middle position of the right task window.

In response to an operation performed by the user on the first-level page, the tablet computer may display a second-level page of the first application in a right application window of the screen interface of the tablet computer. For example, as shown in (b) of FIG. 39G, a user touches, by using a hand, or clicks, by using a mouse, a thumbnail image on a first-level page on the left side, and a scaled-up image of the thumbnail image may be displayed on a second-level page on the right side.

Further, in the multi-device collaboration method provided in this embodiment of this application, the first window 202b in the tablet computer may be dragged to the PC and used. For a specific dragging step, refer to content corresponding to FIG. 39A to FIG. 39F in the foregoing embodiments. Details are not described herein again.

As shown in FIG. 39H(1), in this embodiment of this application, a first window 202c may be a full-screen display window when the tablet computer is in a portrait state. The first window 202c shown in FIG. 39H(1) is an application window of a calculator application when the tablet computer is in the portrait state. Herein, the first window 202c is merely described as an example.

A top middle position of the first window 202c may include a first floating button 203b. The first floating button 203b may be waked by a user operation. The user operation is, for example, moving a mouse to move a first cursor to a second screen region of the tablet computer. In this case, the tablet computer may switch the first floating button 203b from a hidden state to a displayed state.

In some implementations, the second screen region may correspond to the top of the first window 202c. Alternatively, the tablet computer may switch the first floating button 203b from the hidden state to the displayed state after the first cursor stays at the top of the first window 202c for a preset time. The preset time is, for example, 30 ms or 60 ms, which is not specifically limited in this embodiment of this application.

As shown in FIG. 39H(2), in this embodiment of this application, the first window 202c may be dragged toward the PC.

As shown in FIG. 39H(3), different from the step of dragging the first window 202a, in a process in which the tablet computer moves the scaled-down first window 202c, when a window edge of the scaled-down first window 202c moves out of the first screen edge 206b, the tablet computer may hide a part of the first window 202c that is located outside the first screen edge 206b. It can be learned that, in this case, the tablet computer does not scale up the scaled-down first window 202c.

As shown in FIG. 39H(4), the PC may display a second window 210b, and display a first user interface in the second window 210b. Different from the second window 210a, the first user interface in the second window 210b is in a portrait state.

The following describes the second embodiment of the multi-device collaboration method of the embodiments of this application with reference to the accompanying drawings. This embodiment may be applied to a multi-device collaboration system in which the first device is a tablet computer, the second device is a PC, and the input device is a mouse.

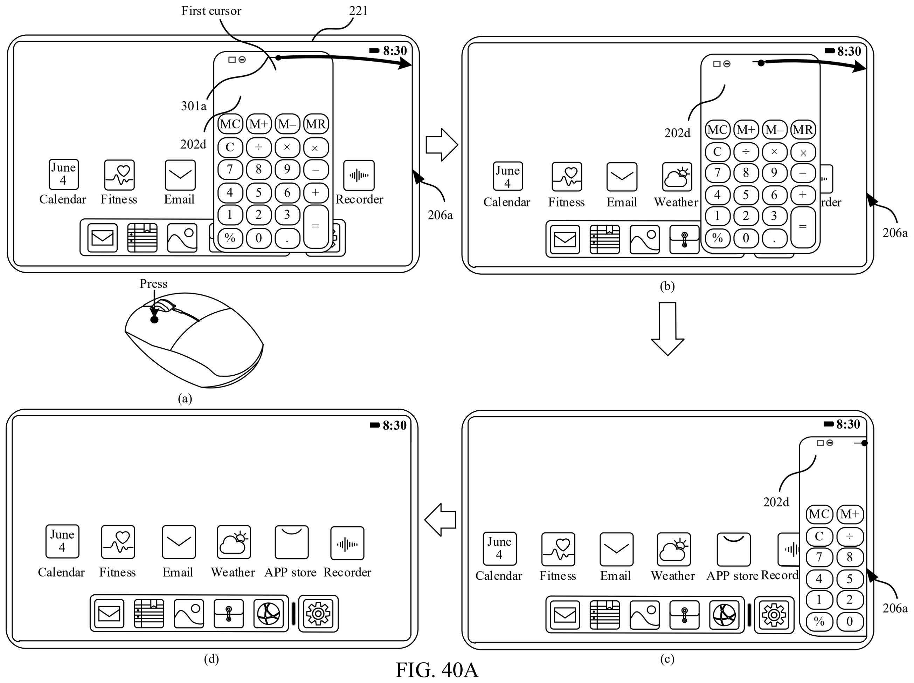

FIG. 40A to FIG. 40D are schematic diagrams of the second embodiment of the multi-device collaboration method according to the embodiments of this application.

As shown in (a) of FIG. 40A, a first display screen 221 may include a first window 202d. The first window 202d may be a floating window, and the first window 202d may be an application window of a first application. A second user interface of a first application is displayed in the first window 202d, and the first application may be any application already installed in the tablet computer. The tablet computer may be in a landscape state or a portrait state. The first window 202d shown in FIG. 40A is an application window corresponding to a calculator application when the tablet computer is in the landscape state, and is merely described as an example.

A second floating button 301a may be included at a middle position at the top of the first window 202d. The second floating button 301a may be a button residing in the first window 202d. A shape of the second floating button 301a may be a strip, a circle, a dot, or the like. The second floating button 301a may be configured to implement a function such as moving the first window 202d.

In this embodiment of this application, the user may drag the first window 202d by using a mouse. Specifically, the user may operate the mouse, move a first cursor to the second floating button 301a, and drag the second floating button 301a toward a first screen edge 206a of the first display screen 221.

For example, the user may move the mouse to move the first cursor. After moving the first cursor onto the second floating button 301a, the user may press a mouse button, and then keep the pressing action and drag, so that the first cursor drags the second floating button 301a.

As shown in (b) of FIG. 40A, in a process in which the first cursor drags the second floating button 301a, to move the first window 202d toward the first screen edge 206a, when the window edge of the first window 202d does not reach the first screen edge 206a, the tablet computer may move the first window 202d.

As shown in (c) of FIG. 40A, when the window edge of the first window 202d moves out of the first screen edge 206a and the first cursor does not reach the first screen edge 206a, the tablet computer may hide a part of the first window 202d located outside the first screen edge 206a.

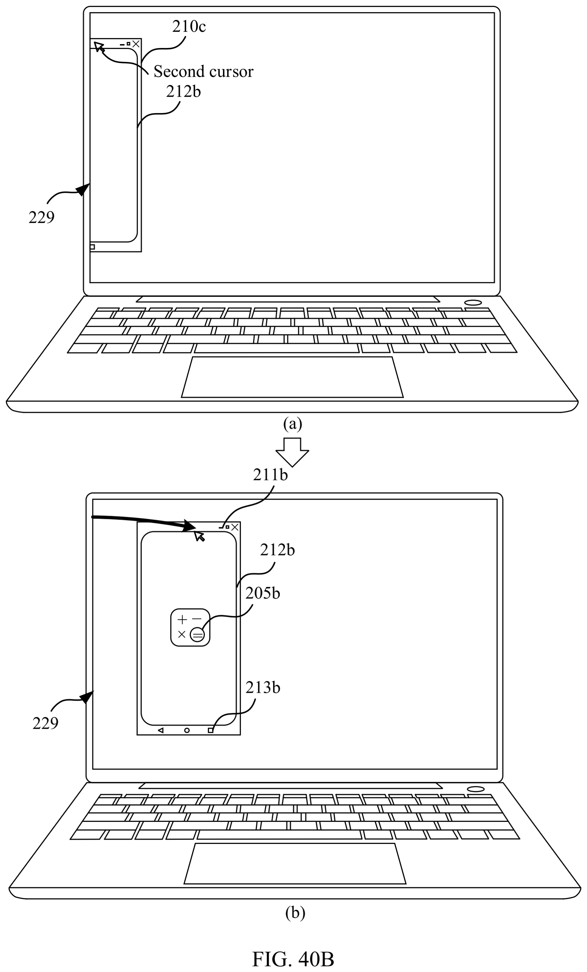

As shown in (d) of FIG. 40A and (a) of FIG. 40B, when the first cursor moves out from the first screen edge 206a to the second screen edge 229 of the PC, the tablet computer may hide the first window 202d and the first cursor. In addition, the PC may display, at the second screen edge 229, a part of the second window 210c and a second cursor located on the second window 210c.

The second window 210c is a window matching a second operating system, and conforms to a display specification of the second operating system for a window. Still as shown in (a) in FIG. 40B, the second window 210c may include a first display region 212b. When the PC displays a part of the second window 210c at the second screen edge 229, the first display region 212b includes a first icon 205b, and the first icon 205b may be located outside the second screen edge 229. The first icon 205b may be displayed by the PC after being sent by the tablet computer to the PC.

As shown in (b) of FIG. 40B, the user may control the second cursor by using the mouse, so that the second cursor drags the second window 210c to move in a direction away from the second screen edge 229. In this process, when a partial window of the second window 210c enters the second screen edge 229, the PC may display the partial window moved into the second screen edge 229.

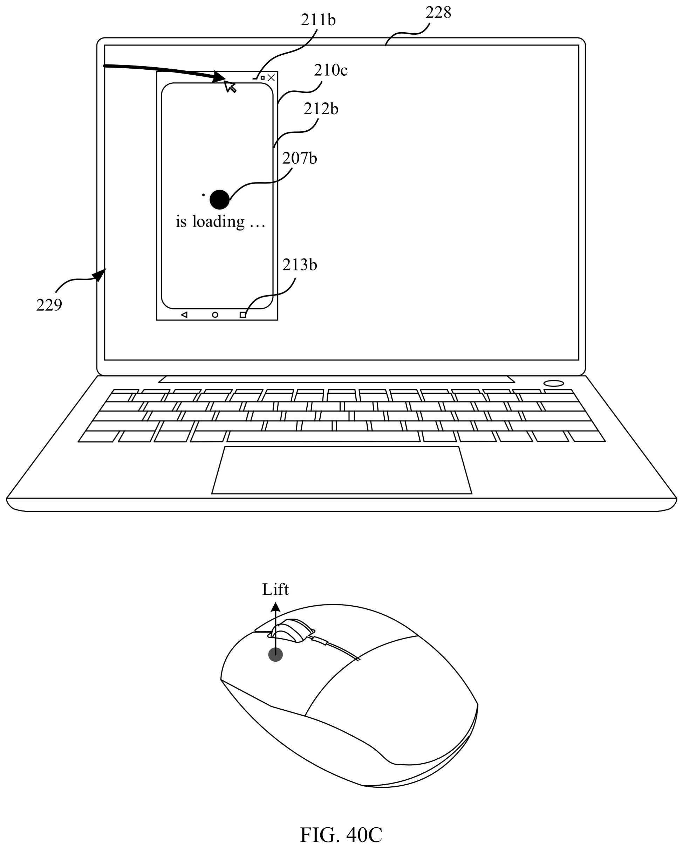

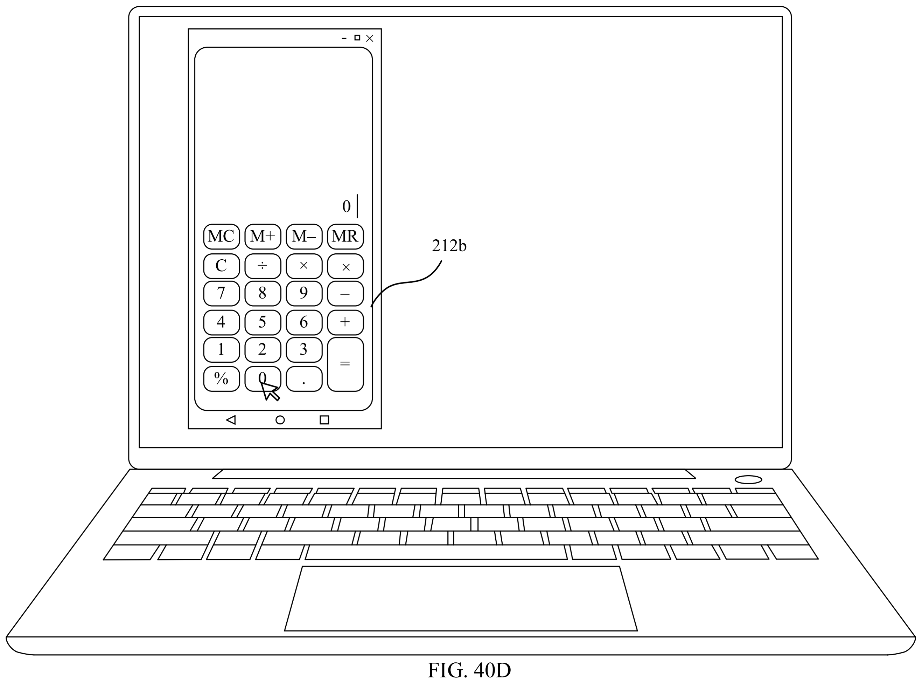

Still as shown in (b) of FIG. 40, the top of the second window 210c may include a first title bar 211b, and a side of the first title bar 211b may include a minimization button, a maximization button, and a close button that are arranged in sequence. The first title bar 211b may further include a title.

The bottom of the second window 210c may further include a first navigation bar 213b. The first navigation bar 213b may be, for example, a navigation bar of three-button navigation. The first navigation bar 213b may specifically include a back button, a home screen button, and a multitasking button that are sequentially arranged. In actual application, a user may operate a mouse, to click a button in the first navigation bar 213b. The PC may change content displayed in the first display region 212b in response to the click operation.

Next, as shown in FIG. 40C, the user may lift a finger to release the mouse button, so that the mouse releases the second window 210c. In this case, the mouse button is lifted. When the second cursor releases the second window 210c, still as shown in FIG. 40C, the PC may load the first user interface corresponding to the first application, and replace the first icon 205b in the first display region 212b with the first element 207b. The first element 207b is used for indicating that the PC is loading the first user interface. For example, when the first user interface is not loaded successfully, the first element 207b may be two water-beaded elements that are continuously separated and fused.

Specifically, the PC may send a fifth event to the tablet computer in response to an action of releasing the mouse button. The tablet computer may create a virtual display in response to the fifth event, and draw a first user interface in the virtual display. Content in the first user interface is the same as content in the second user interface. Then, the tablet computer may send the first user interface to the PC. After the PC the first user interface, loading of the first user interface is completed. As shown in FIG. 40D, the PC may replace the first element 207b in the first display region 212b with the first user interface.

It should be additionally noted that, before releasing the mouse button, the user may operate the mouse to move the second cursor to a target position. The target position may be any position in the field of view of the second display screen 228. Because the second window 210c is in a state of moving with the second cursor, the PC may move the second window 210b to the target position in response to an operation of moving the second cursor to the target position by the user.

In some embodiments, the user may operate the mouse to interact with the user interface in the second window 210c. For example, still as shown in FIG. 40D, the user may operate the mouse to click the button "0" on the calculator user interface in the second window 210b, and the PC may display the numeral "0" in a display region of the calculator user interface.

It may be understood that, in the multi-device collaboration method provided in this embodiment of this application, the second window 210c of the PC may display the first user interface of the first application. In this case, the tablet computer may display another application window other than the user interface of the first application. In this way, a cross-origin screen projection may be formed between the tablet computer and the PC.

Further, in this embodiment of this application, in response to a click operation performed by the user on a button in the first navigation bar 213b, the cross-origin screen projection between the tablet computer and the PC may be switched to the same-origin screen projection. For a specific switching step, refer to the foregoing content. Details are not described herein again.

It can be learned that according to the multi-device collaboration method provided in this embodiment of this application, cross-system and cross-device dragging of an application window can be visually implemented. The application window may be, for example, a floating window in the tablet computer. In addition, after the dragging succeeds, the user may control the application window in the PC, that is, the application may continue to provide a service for the user after device crossing, which can improve user experience. After the dragging succeeds, the tablet computer may present an application window of another application other than the second application to the user, for the user to use, so as to implement cross-origin screen projection, thereby further improving user experience. In addition, according to the multi-device collaboration method provided in this embodiment of this application, a cross-origin screen projection is switched to a same-origin screen projection, and user experience can also be improved.

In some embodiments, the user may operate the mouse to click the minimization button in the first title bar 211b. The PC may minimally display the second window 210b in response to the operation. Minimally displaying may be specifically that the second window 210b is hidden, and a minimized window is displayed in a bottom status bar of the second display screen 228. The minimized window may include the first icon 205b.

For another example, the user may operate the mouse to click the maximization button in the first title bar 211b, and the PC may fully pave the second window 210c with the second display screen 228 in response to the operation. It may be understood that because the second window 210c is an application window in a portrait state, the first display region 212b cannot be stretched with the second window 210c. In this case, the first display region 212b may be scaled up at a particular proportion. A specific scaling up manner of the first display region 212b may be determined based on an actual situation. This is not specifically limited in this embodiment of this application.

For another example, the user may operate the mouse to click the close button in the first title bar 211b, and the PC may close the second window 210c in response to the operation. After the PC closes the second window 210c, the user may continue to interact with the first application in the tablet computer.

It can be known from the foregoing content that according to the multi-device collaboration method provided in this embodiment of this application, a floating window on the tablet computer can be dragged toward the PC, to visually implement window traversal. In addition, after the dragging succeeds, the application window at the PC end may remain in a portrait state consistent with that of the first window 202d, so that continuity of use of the application window can be ensured, and user experience can be improved.

The following describes the third embodiment of the multi-device collaboration method of the embodiments of this application with reference to the accompanying drawings. This embodiment may be applied to a multi-device collaboration system in which the first device is a tablet computer, the second device is a PC, and the input device is a mouse.

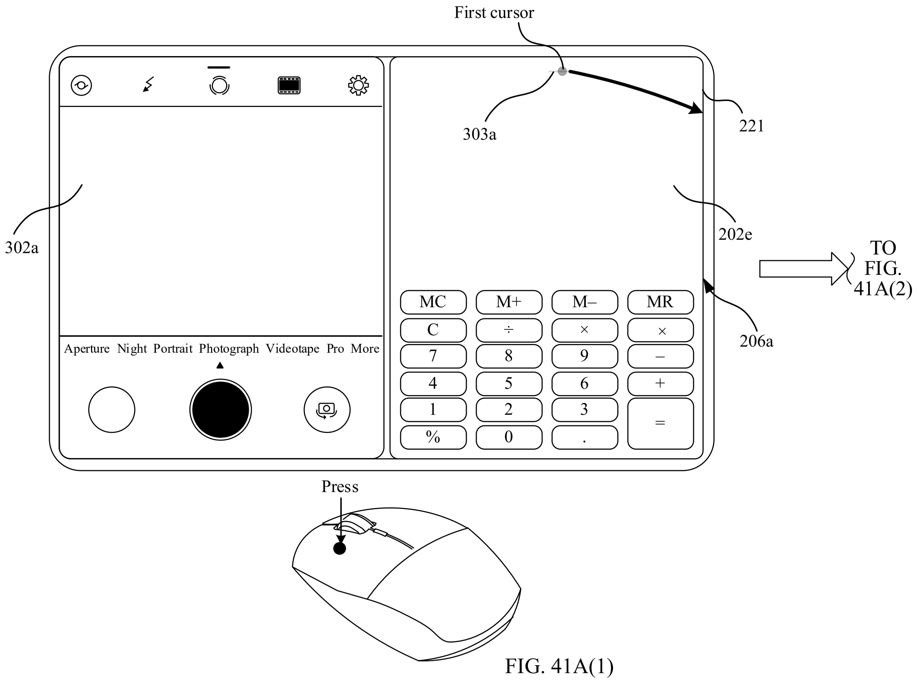

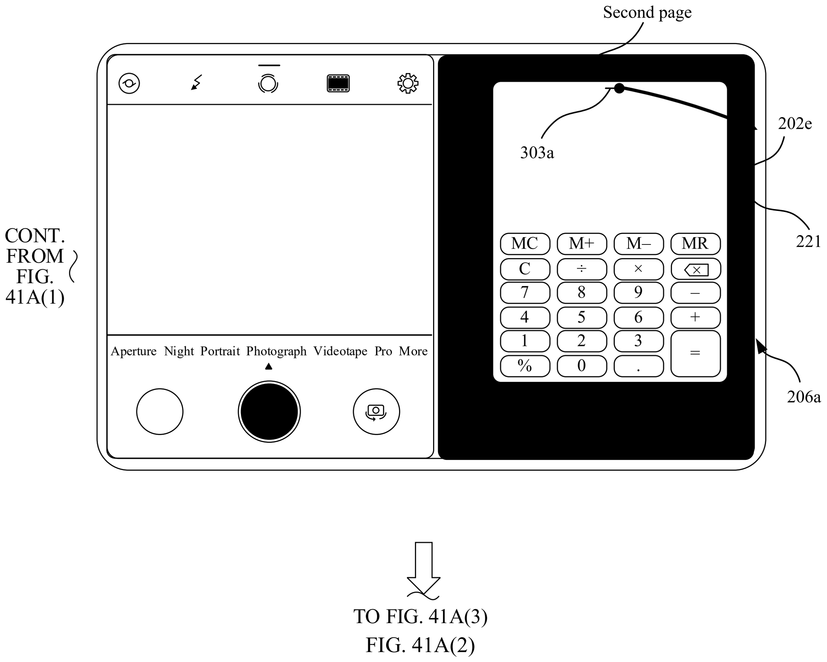

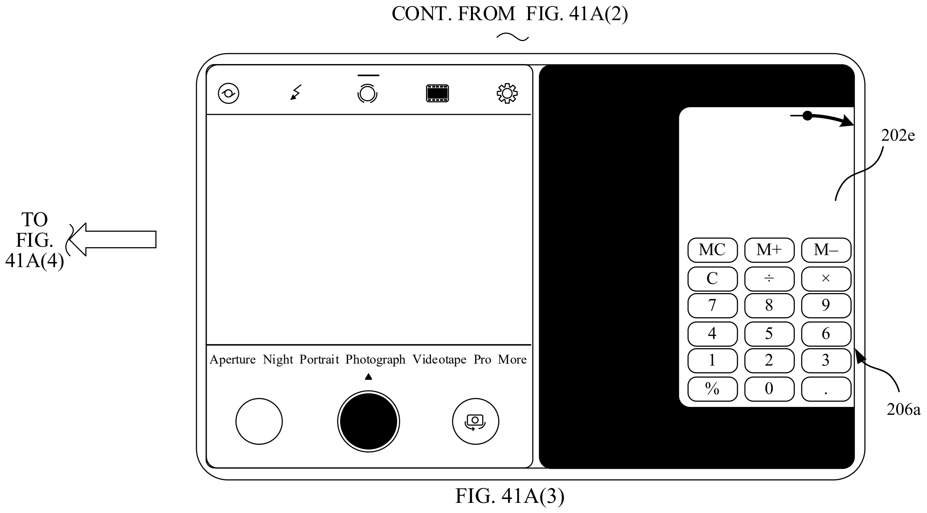

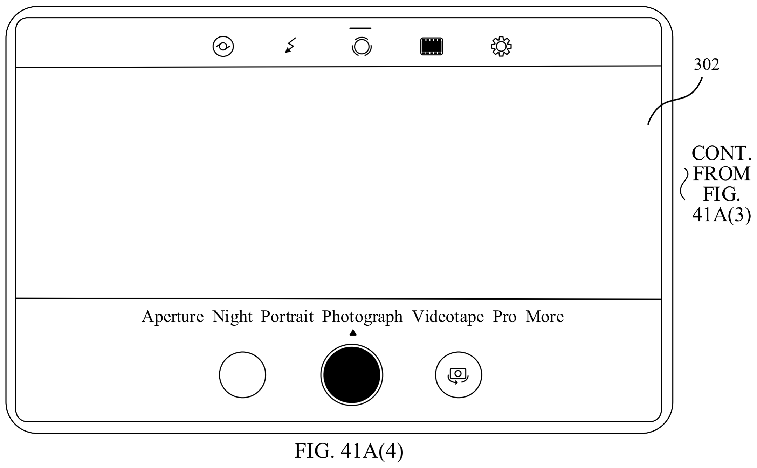

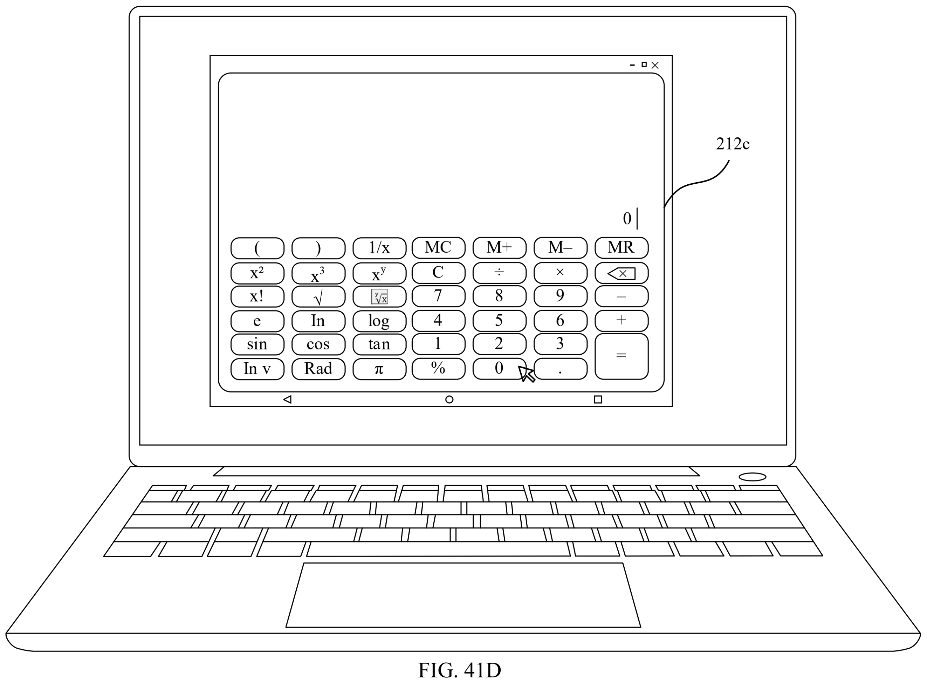

FIG. 41A(1), FIG. 41A(2), FIG. 41A(3), and FIG. 41A(4) to FIG. 41D are schematic diagrams of the third embodiment of the multi-device collaboration method according to the embodiments of this application.

As shown in FIG. 41A(1), a first display screen 221 may include a third window 302a and a first window 202e. The third window 302a may be an application window of a second application, the first window 202e may be an application window of a first application, and the third window 302a and the first window 202e may be distributed in a split-screen display form and disposed in parallel on the first display screen 221. The third window 302a and the first window 202e are windows matching a first operating system of the tablet computer, and conforms to a display specification of the first operating system for a split-screen display window. A user interface of the second application may be displayed in the third window 302a, and a second user interface of the first application may be displayed in the first window 202e. The first application and the second application may be applications already installed in the tablet computer. In this case, the tablet computer may be in a landscape state or a portrait state. The tablet computer shown in FIG. 41A(1), FIG. 41A(2), FIG. 41A(3), and FIG. 41A(4) is in a landscape state, the second application is a camera, and the first application is a calculator. This is merely exemplary description herein.

Split-screen display is an application window state relative to full-screen display. For example, the third window 302a may be distributed on a left side of the first display screen 221, and the first window 202e may be distributed on a right side of the first display screen 221. The third window 302a and the first window 202e may be distributed according to a ratio. The ratio is, for example, 1:1 or 7:3. This is not specifically limited in this embodiment of this application.

In some implementations, there are a plurality of manners of enabling the split-screen display, for example, dragging an application window displayed in full screen to the left side or the right side of the first display screen 221. This is not specifically limited in this embodiment of this application.

In some implementations, cross-application interaction may be implemented between two application windows displayed in a split-screen manner. For example, an image, a text, a document, or the like is dragged between the two application windows. This is not specifically limited in this embodiment of this application.

A third floating button 303a may be included at a middle position at the top of the first window 202e. The third floating button 303a may be a button residing in the first window 202e. A shape of the third floating button 303a may be a strip, a circle, a dot, or the like. The third floating button 303a may be configured to implement a function such as moving the first window 202e.

In some implementations, the third floating button 303a may also be waked by a user operation. The user operation is, for example, clicking any position of the first window 202e, or the user operation is, for example, allowing the first cursor to stay at the top of the first window 202e for a preset time.

In this embodiment of this application, still as shown in FIG. 41A(1), the user may control the first cursor by using the mouse, so that the first cursor drags the first window 202e to move toward a first screen edge 206a. Specifically, the user may operate the mouse, move the first cursor to the third floating button 303a, and drag the third floating button 303a.

For example, the user may move the mouse to move the first cursor. After moving the first cursor onto the third floating button 303a, the user may press a mouse button, and then keep the pressing action and drag, so that the first cursor drags the third floating button 303a.

As shown in FIG. 41A(2), when the first cursor drags the third floating button 303a, the tablet computer may scale down the first window 202e. In this case, the second user interface in the first window 202e may be scaled down as the first window 202e is scaled down.

After being scaled down, the first window 202e is in a split-screen adjustment state. Specifically, the split-screen adjustment state is a specific case in the split-screen display state. For example, when the scaled-down first window 202e is located at the right side of the first display screen 221, if the scaled-down first window 202e is dragged to the lower right corner of the first display screen 221, the tablet computer may hide the first window 202e. It may be understood that the foregoing content is merely an exemplary description of operations that can be implemented in the split-screen adjustment state, and is not specifically limited in this embodiment of this application.

In some embodiments, the scaled-down first window 202e may float above a second page, and the second page may be, for example, a black page.

Next, the user may operate the mouse to drag the third floating button 303a toward the first screen edge 206a.

When a window edge of the scaled-down first window 202e does not reach the first screen edge 206a, the tablet computer may move the scaled-down first window 202e.

As shown in FIG. 41A(3), when the window edge of the scaled-down first window 202e moves out of the first screen edge 206a, the tablet computer may hide a part of the first window 202e located outside the first screen edge 206a.

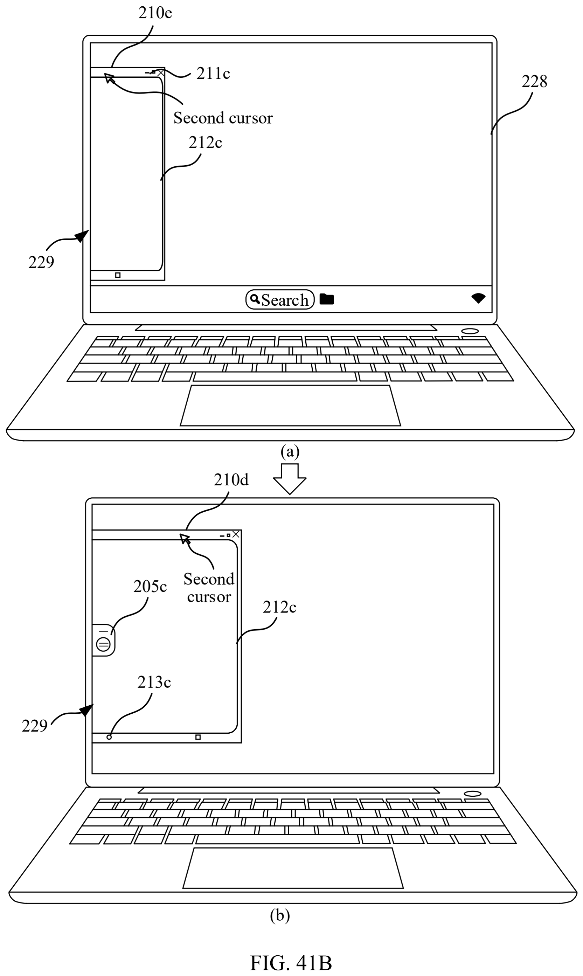

As shown in FIG. 41A(4) and (a) of FIG. 41B, when the first cursor moves out from the first screen edge 206a to the second screen edge 229 of the PC, the tablet computer may hide the first window 202e and the first cursor. In addition, the PC may display, at the second screen edge 229, a part of the second window 210d and a second cursor located on the part of the second window 210d. The second cursor may be located at the top of the second window 210d.

The second window 210d is a window matching a second operating system, and conforms to a display specification of the second operating system for a window. The top of the second window 210d may include a first title bar 211 c, the first title bar 211c may include a minimization button, a maximization button, and a close button, and the minimization button, the maximization button, and the close button may be used for controlling a display state of the second window 210d. For example, in response to that the second cursor clicks the minimization button, the PC may minimally display the second window 202e; in response to that the second cursor clicks the maximization button, the PC may maximally display the second window 202e; and in response to that the second cursor clicks the close button, the PC may close the second window 202e.

In some implementations, the minimization button, the maximization button, and the close button may be arranged in sequence, and may be located on a side of the first title bar 211c. Another side of the first title bar 211c may further include a title.

Still as shown in (a) of FIG. 41B, the second window 210d may further include a first display region 212c. When the PC displays a part of the second window 210e at the second screen edge 229, the first display region 212c may include a first icon 205c, and the first icon 205c may be located outside the second screen edge 229. The first icon 205c may be mapped from the tablet computer to the PC.

Still as shown in FIG. 41A(4), after the first window 202e and the first cursor are hidden, the tablet computer may scale up the third window 302a into a full-screen display window, to fully pave the first display screen 221.

As shown in (b) of FIG. 41B, the user may control the second cursor by using the mouse, so that the second cursor drags the second window 210d to move in a direction away from the second screen edge 229. In this process, when a partial window of the second window 210d is moved into the second screen edge 229, the PC may display the partial window moved into the second screen edge 229.

Still as shown in (b) of FIG. 41B, the bottom of the second window 210d may further include a first navigation bar 213c. The first navigation bar 213c may be, for example, a navigation bar of three-button navigation, and includes a functional button for controlling an application window. The first navigation bar 213c may specifically include a back button, a home screen button, and a multitasking button that are sequentially arranged. In actual application, a user may operate a mouse, to click a button in the first navigation bar 213c. The PC may change content displayed in the first display region 212c in response to the click operation.

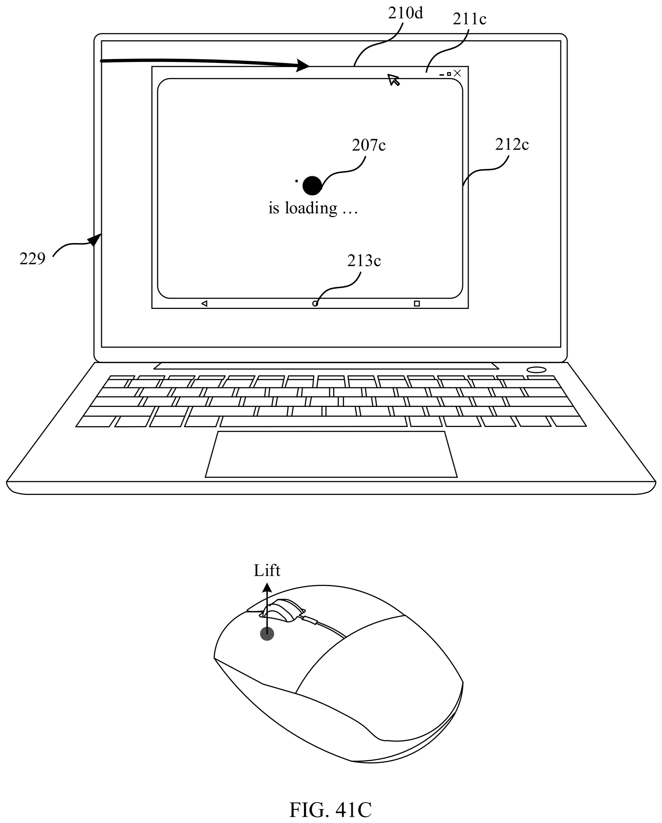

Next, as shown in FIG. 41C, the user may lift a finger to release the mouse button, so that the mouse releases the second window 210d. In this case, the mouse button is lifted.

When the second cursor releases the second window 210d, still as shown in FIG. 41C, the PC may load the first user interface corresponding to the first application, and replace the first icon 205c in the first display region 212c with the first element 207c. The first element 207c may be used for indicating that the PC is loading the first user interface. For example, when the first user interface is not loaded successfully, the first element 207c may be two water-beaded elements that are continuously separated and fused.

Specifically, the PC may send a sixth event to the tablet computer in response to an action of releasing the mouse button. The tablet computer may create a virtual display in response to the sixth event, and draw a first user interface in the virtual display. The first user interface may be an extended interface of the second user interface, or content in the first user interface and content in the second user interface may be the same. Then, the tablet computer may send the first user interface to the PC. After the PC receives the first user interface, loading of the first user interface is completed. As shown in FIG. 41D, the PC may replace the first element 207c in the first display region 212c with the first user interface.

In this way, a window traverses between the tablet computer and the PC in terms of visual experience, and after the window traverses to the PC, the user may further interact with the first application in the PC, which can improve user experience.

For example, the first user interface may be in the landscape state formed by extension of the portrait state of the second user interface, and specific displayed content may be adaptively adjusted based on user interfaces of different applications. For example, as shown in FIG. 41A(1), the first window 202e is in a split-screen state, and displayed content is a common calculator. Then, as shown in FIG. 41D, the second user interface may be in a landscape state, and displayed content may be a scientific calculator extended from a common calculator.

It should be additionally noted that, before releasing the mouse button, the user may operate the mouse to move the second cursor to a target position. The target position may be any position in the field of view of the second display screen 228. Because the second window 210d is in a state of moving with the second cursor, the PC may move the second window 210d to the target position in response to an operation of moving the second cursor to the target position by the user.

It may be understood that, in the multi-device collaboration method provided in this embodiment of this application, the second window 210d of the PC may display the first user interface of the first application. In this case, the tablet computer may display the user interface of the second application. In this way, a cross-origin screen projection may be formed between the tablet computer and the PC.

Further, in this embodiment of this application, in response to a click operation performed by the user on a button in the first navigation bar 213c, the cross-origin screen projection between the tablet computer and the PC may be switched to the same-origin screen projection. For a specific switching step, refer to the foregoing content. Details are not described herein again.

It can be learned that according to the multi-device collaboration method provided in this embodiment of this application, cross-system and cross-device dragging of an application window can be visually implemented. The application window may be, for example, a split-screen application window in the tablet computer. In addition, after the dragging succeeds, the user may control the application window in the PC, that is, the application may continue to provide a service for the user after device crossing, which can improve user experience. After the dragging succeeds, the tablet computer may display the application window of the second application in full screen, thereby implementing the cross-origin screen projection. In addition, according to the multi-device collaboration method provided in this embodiment of this application, a cross-origin screen projection is switched to a same-origin screen projection, and user experience can also be improved.

The following describes the fourth embodiment of the multi-device collaboration method of the embodiments of this application with reference to the accompanying drawings. This embodiment may be applied to a multi-device collaboration system in which the first device is a tablet computer, the second device is a PC, and the input device is a mouse.

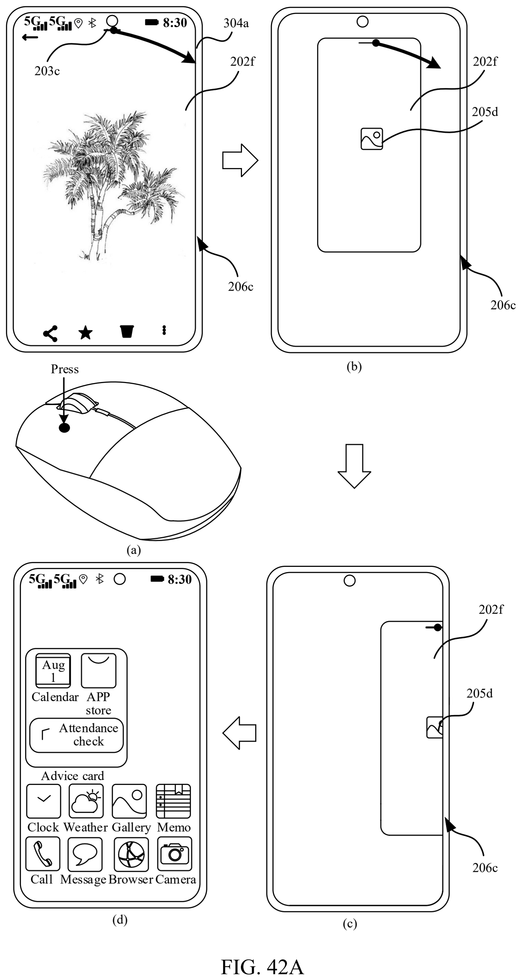

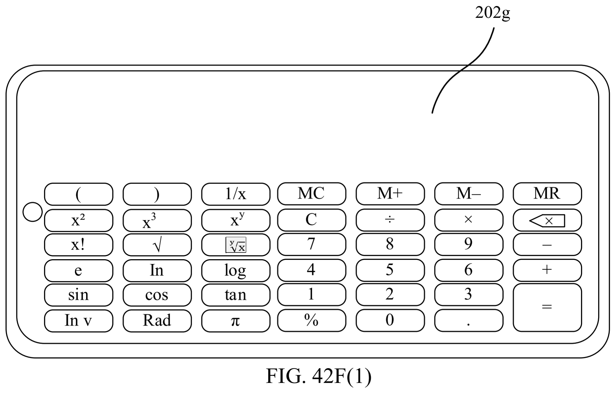

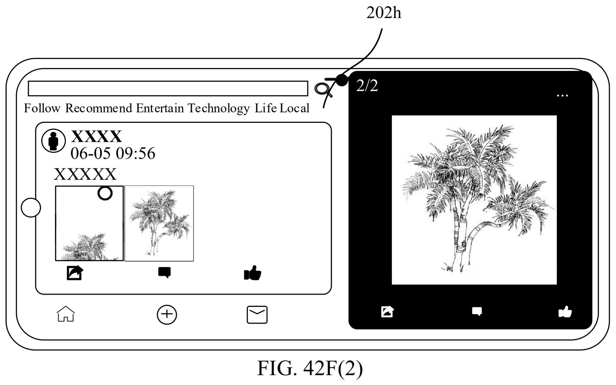

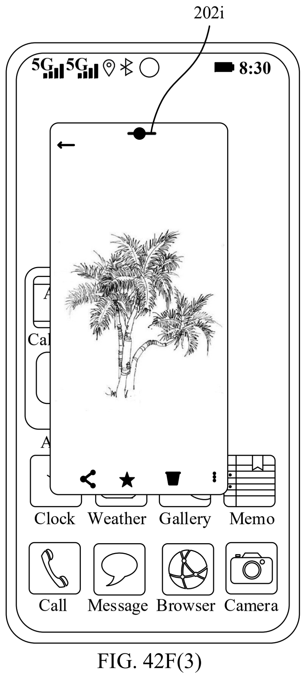

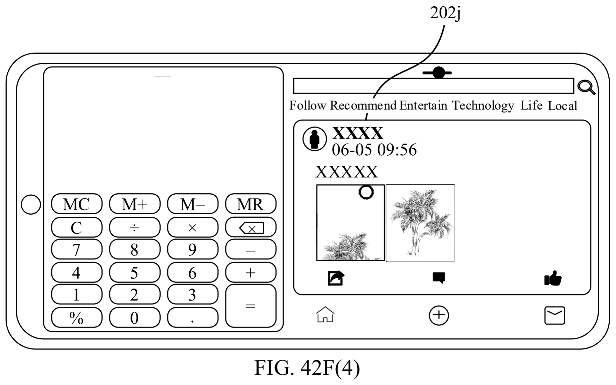

FIG. 42A to FIG. 42F(1), FIG. 42F(2), FIG. 42F(3), and FIG. 42F(4) are schematic diagrams of the fourth embodiment of the multi-device collaboration method according to the embodiments of this application.

The following describes the fourth embodiment of the multi-device collaboration method of the embodiments of this application with reference to the accompanying drawings. This embodiment may be applied to a multi-device collaboration system in which the first device is a non-foldable mobile phone, the second device is a PC, and the input device is a mouse.

As shown in (a) of FIG. 42A, a third display screen 304a may include a first window 202f displayed in full screen. The third display screen 304a may be a display screen of a non-foldable mobile phone. The non-foldable mobile phone herein is described relative to a foldable mobile phone. The first window 202f may be a window matching a first operating system of the non-foldable mobile phone, and conforms to a display specification of the first operating system for a full-screen display window. A second user interface of a first application is displayed in the first window 202f, and the first application may be any application already installed in the non-foldable mobile phone. The full-screen display may mean that the third display screen 304a is fully paved with the first window 202f. In this case, the non-foldable mobile phone may be in a portrait state. The first window 202f shown in (a) of FIG. 42A is an application window of an album application when the non-foldable mobile phone is in a portrait state, and is merely exemplary description herein.

A top middle position of the first window 202f may include a first floating button 203c. The first floating button 203c may be waked by a user operation. The user operation is, for example, moving a mouse cursor to move a first cursor to a second screen region of the non-foldable mobile phone. In this case, the non-foldable mobile phone may switch the first floating button 203c from a hidden state to a displayed state.

In some implementations, the second screen region may correspond to the top of the first window 202f. Alternatively, the tablet computer may switch the first floating button 203c from the hidden state to the displayed state after the first cursor stays at the top of the first window 202f for a preset time. In this embodiment of this application, still as shown in (a) of FIG. 42A, the user may control the first cursor by using the mouse, so that the first cursor drags the first window 202f to move toward a first screen edge 206c.

Specifically, the user may operate the mouse, move the first cursor to the first floating button 203c, and drag the first floating button 203c.

For example, the user may move the mouse to move the first cursor. After moving the first cursor onto the first floating button 203c, the user may press a mouse button, and then keep the pressing action and drag, so that the first cursor drags the first floating button 203c.

As shown in (b) of FIG. 42A, when the first cursor drags the first floating button 203c, the non-foldable mobile phone may scale down the first window 202f, and replace the second user interface in the first window 202f with the first icon 205d.

In some implementations, the scaled-down first window 202f may float above a first page, and the first page may be a page formed after a masking effect is added to a wallpaper of the non-foldable mobile phone.

Next, the user may operate the mouse to drag the first floating button 203c toward the first screen edge 206c.

As shown in (c) of FIG. 42A, when the window edge of the first window 202f moves out of the first screen edge 206c and the first cursor does not reach the first screen edge 206c, the non-foldable mobile phone may hide a part of the first window 202f located outside the first screen edge 206c.

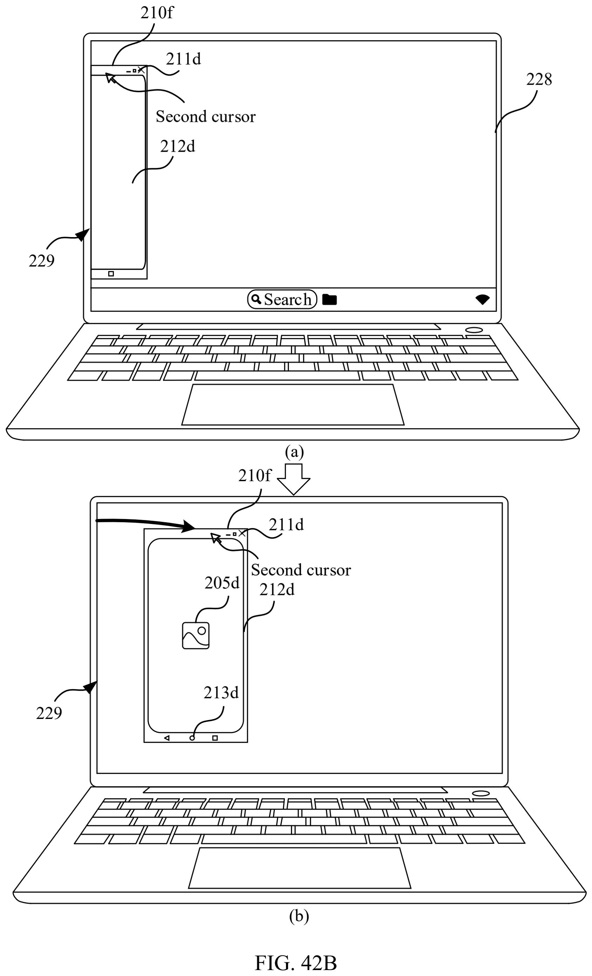

As shown in (d) of FIG. 42A and (a) of FIG. 42B, when the first cursor moves out from the first screen edge 206c to the second screen edge 229 of the PC, the non-foldable mobile phone may hide the first window 202f and the first cursor. In addition, the PC may display, at the second screen edge 229, a part of the second window 210e and a second cursor. The second cursor may be located at the top of the second window 210e.

The second window 210e is a window matching a second operating system, and conforms to a display specification of the second operating system for a window. The top of the second window 210e may include a first title bar 211d, the first title bar 211d may include a minimization button, a maximization button, and a close button, and the minimization button, the maximization button, and the close button may be used for controlling a display state of the second window 210e. For example, the minimization button, the maximization button, and the close button may be arranged in sequence, and may be located on a side of the first title bar 211e. Another side of the first title bar 211e may further include a window title.

Still as shown in (a) in FIG. 42B, the second window 210e may further include a first display region 212d. When the PC displays a part of the second window 210e at the second screen edge 229, the first display region 212d may include a first icon 205d, and the first icon 205d may be located outside the second screen edge 229. The first icon 205d may be displayed by the PC after being sent by the non-foldable mobile phone to the PC.

As shown in (b) of FIG. 42B, the user may control the second cursor by using the mouse, so that the second cursor drags the second window 210e to move in a direction away from the second screen edge 229. In this process, when a partial window of the second window 210e is moved into the second screen edge 229, the PC may display the partial window moved into the second screen edge 229.

Still as shown in (b) of FIG. 42B, the second window 210f may further include a first navigation bar 213d. The first navigation bar 213d may be, for example, a navigation bar of three-button navigation, and includes a functional button for controlling an application window. The first navigation bar 213d may specifically include a back button, a home screen button, and a multitasking button that are sequentially arranged. In actual application, a user may operate a mouse, to click a button in the first navigation bar 213d. The PC may change content displayed in the first display region 212d in response to the click operation. The foregoing process is described in detail below. Details are not described herein.

Still as shown in (d) of FIG. 42A, after the non-foldable mobile phone hides the first window 202f and the first cursor, or when the non-foldable mobile phone hides the first window 202f and the first cursor, the non-foldable mobile phone may switch from displaying a wallpaper to which a masking effect is added to displaying a desktop.

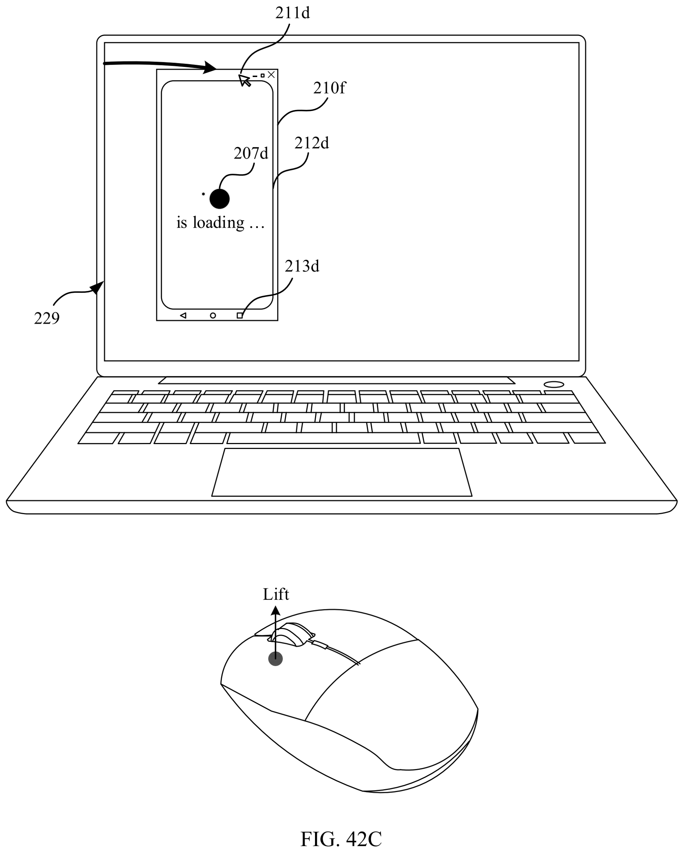

Next, as shown in FIG. 42C, the user may lift a finger to release the mouse button, so that the mouse releases the second window 210e. In this case, the mouse button is lifted.

When the second cursor releases the second window 210e, still as shown in FIG. 42C, the PC may load the first user interface corresponding to the first application, and replace the first icon 205d in the first display region 212d with the first element 207d. The first element 207d is used for indicating that the PC is loading the first user interface of the first application. For example, when the first user interface is not loaded successfully, the first element 207d may be two water-beaded elements that are continuously separated and fused.

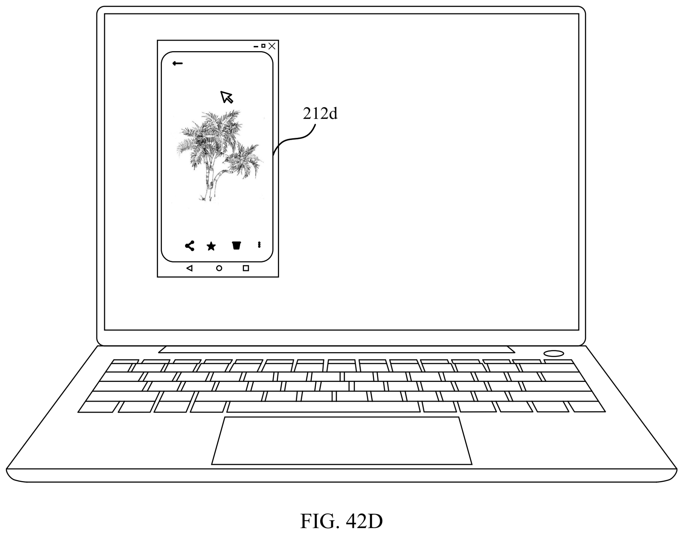

Specifically, the PC may send a seventh event to the non-foldable mobile phone in response to an action of releasing the mouse button. The non-foldable mobile phone may create a virtual display in response to the seventh event, and draw a first user interface in the virtual display. Content in the first user interface is the same as content in the second user interface. It may be understood that the virtual display is invisible to a user. Then, the non-foldable mobile phone may send the first user interface to the PC. After the PC receives the first user interface, loading of the first user interface is completed. As shown in FIG. 42D, the PC may replace the first element 207d in the first display region 212d with the first user interface. For example, if a user interface displayed in the first window 202f is in a portrait state, the second user interface is also in a portrait state.

It may be understood that, in the multi-device collaboration method provided in this embodiment of this application, the second window 210e of the PC may display the first user interface of the first application. In this case, the non-foldable mobile phone may display another interface other than the user interface of the first application, for example, a desktop. In this way, a cross-origin screen projection may be formed between the non-foldable mobile phone and the PC.

Further, according to the multi-device collaboration method provided in this embodiment of this application, in response to a user operation, the cross-origin screen projection between the non-foldable mobile phone and the PC may be switched to the same-origin screen projection. The same-origin screen projection means that the non-foldable mobile phone completely sends content displayed in the third display screen 304a of the non-foldable mobile phone to the PC, and after receiving the content sent by the non-foldable mobile phone, the PC replaces the content in the first display region 212d with the received content. A specific switching process is described in detail below. Details are not described herein.

It can be learned that according to the multi-device collaboration method provided in this embodiment of this application, cross-system and cross-device dragging of an application window can be visually implemented. The application window may be, for example, a full-screen application window in the non-foldable mobile phone. In addition, after the dragging succeeds, the user may control the application window in the PC, that is, the application may continue to provide a service for the user after device crossing, which can improve user experience. After the dragging succeeds, the non-foldable mobile phone may present a desktop or an application window of another application other than the first application to the user, for the user to use, so as to implement cross-origin screen projection, thereby further improving user experience. In addition, according to the multi-device collaboration method provided in this embodiment of this application, a cross-origin screen projection can be switched to a same-origin screen projection, and user experience can also be improved.

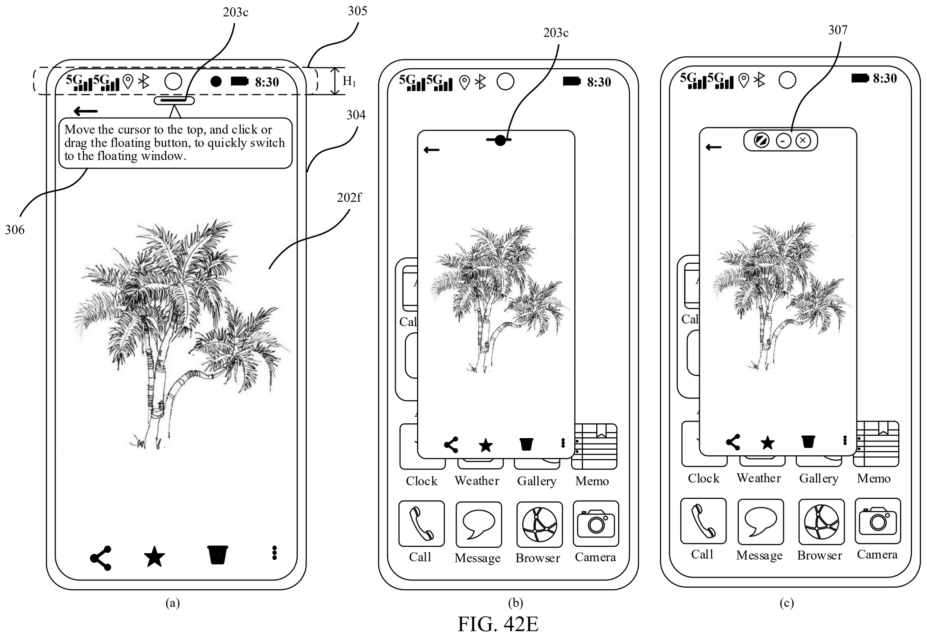

In some implementations, as shown in (a) of FIG. 42E, the second screen region 305 may correspond to the top of the first window 202f. The second screen region 305 may have a first preset height H₁ along a first direction, and the first direction may be pointing from the top of the third display screen 304a to the bottom of the third display screen 304a.

In some embodiments, the first preset height Hi may be, for example, equal to 0.5 cm, 0.75 cm, or 1 cm, and is not specifically limited in this embodiment of this application.

In some implementations, when the non-foldable mobile phone is in a portrait state, the second screen region 305 may coincide with a top status bar of the mobile phone, or may be greater than a range covered by the top status bar. This is not specifically limited in this embodiment of this application.

For example, when the non-foldable mobile phone is in a portrait state, the non-foldable mobile phone may display the first floating button 203c below the second screen region 305. In this way, the first floating button 203c can avoid a camera punch-hole, so that the technical solution for waking a floating button can be adapted to mobile phones of different models. For example, the method may be applied to a mobile phone having a central camera punch-hole, and is widely applied.

In some embodiments, when the non-foldable mobile phone is in a landscape state, the non-foldable mobile phone may display the first floating button 203c in the second screen region 305. This is not specifically limited in this embodiment of this application.

In some implementations, the user may operate the mouse, move the first cursor to the first floating button 203c, and click or drag the first floating button 203c.

As shown in (b) of FIG. 42E, the non-foldable mobile phone may switch the first window 202f to a floating window based on a user operation. Specifically, the user operation may use a mouse to cause the first cursor to click or drag the first floating button 203c.

Still as shown in (b) of FIG. 42E, the non-foldable mobile phone may display a first bubble 306 when the user locates the first cursor in the second screen region 305 for the first time, and the first bubble 306 may point to the first floating button 203c. The first bubble 306 includes text guide content. The text guide content is, for example, "Move your pointer to the floating bar, then clicking or dragging it can switch to floating window.", so as to introduce a purpose of the first floating button 203c to the user. It may be understood that the text guide content herein is merely an exemplary description.

In some implementations, when the first cursor leaves the third screen region, the non-foldable mobile phone may switch the first floating button 203c and the first bubble 306 from a displayed state to a hidden state. For example, the third screen region may cover the second screen region 305 and the first floating button 203c.

As shown in (c) of FIG. 42E, the user may operate the mouse, move the first cursor to the first floating button 203c, and click the first floating button 203c.

The non-foldable mobile phone may switch the first floating button 203c to a second pop-up window 307 in response to a user operation, and the second pop-up window 307 may include a maximization button, a minimization button, and a close button. When the user clicks the maximization button, the non-foldable mobile phone may switch the floating window back to the first window 202f in response to the operation. When the user clicks the minimization button, the non-foldable mobile phone may switch the floating window to a floating icon in response to the operation, and the floating icon floats at an edge of the third display screen 304a. When the user clicks the close button, the user may close the floating window in response to the operation.

As shown in FIG. 42F(1), in this embodiment of this application, a first window 202g may alternatively be a full-screen display window of the non-foldable mobile phone when being in a landscape state. As shown in FIG. 42F(2), the first window 202h may alternatively be an intra-application split-screen window of the non-foldable mobile phone when being in a landscape state. The intra-application split-screen window is a special full-screen display window, and the window may also be referred to as a parallel view window. In the multi-device collaboration method provided in this embodiment of this application, the first window 202g or the first window 202h may be dragged to the PC. For a specific dragging step, refer to content corresponding to FIG. 39A to FIG. 39F in the foregoing embodiments. Details are not described herein again.

In this embodiment of this application, as shown in FIG. 42F(3), the first window 202i may be a floating window in a non-foldable mobile phone. The non-foldable mobile phone may be in a landscape state or a portrait state. FIG. 42F(3) is a schematic diagram of a first window 202i of a non-foldable mobile phone when being in a portrait state. In the multi-device collaboration method provided in this embodiment of this application, the first window 202i may be dragged to the PC. For a specific dragging step, refer to content corresponding to FIG. 40A to FIG. 40D in the foregoing embodiments. Details are not described herein again.

In this embodiment of this application, as shown in FIG. 42F(4), the first window 202j may be a split-screen display window in a non-foldable mobile phone. The non-foldable mobile phone may be in a landscape state or a portrait state.FIG. 42F(4)is a schematic diagram of a first window 202j of a non-foldable mobile phone when being in a landscape state. In the multi-device collaboration method provided in this embodiment of this application, the first window 202j may be dragged to the PC. For a specific dragging step, refer to content corresponding to FIG. 41A(1), FIG. 41A(2), FIG. 41A(3), and FIG. 41A(4) to FIG. 41D in the foregoing embodiments. Details are not described herein again.

The following describes a fifth embodiment of the multi-device collaboration method of the embodiments of this application with reference to the accompanying drawings.

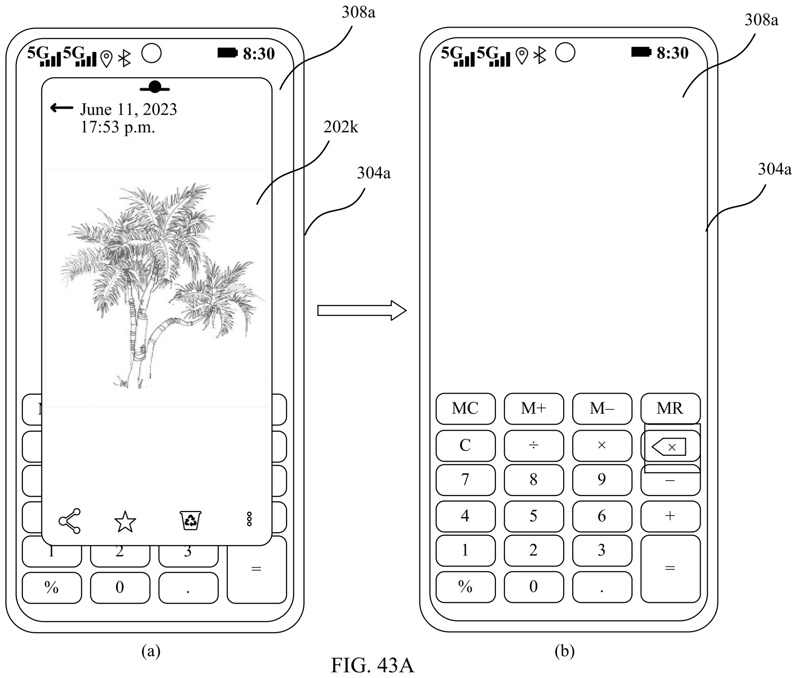

FIG. 43A to FIG. 43C are schematic diagrams of the fifth embodiment of the multi-device collaboration method according to the embodiments of this application.

The multi-device collaboration method provided in this embodiment of this application may include a step of switching, by using a navigation bar, a user interface displayed in an application window. As shown in (a) of FIG. 43A, a third display screen 304a may include a fourth window 308a displayed in full screen and a first window 202k. A user interface of a third application is displayed in the fourth window 308a, and a second user interface of a first application is displayed in the first window 202k. A floating window of a calculator application is displayed in the fourth window 308a shown in (a) of FIG. 43A, and the first window 202k is one of user interfaces of an album application. This is merely an exemplary description herein.

As shown in (b) of FIG. 43A, after dragging the first window 202k to the PC end, the mobile phone displays only the fourth window 308a on the third display screen 304a, and the first window 202k and the first cursor are hidden.

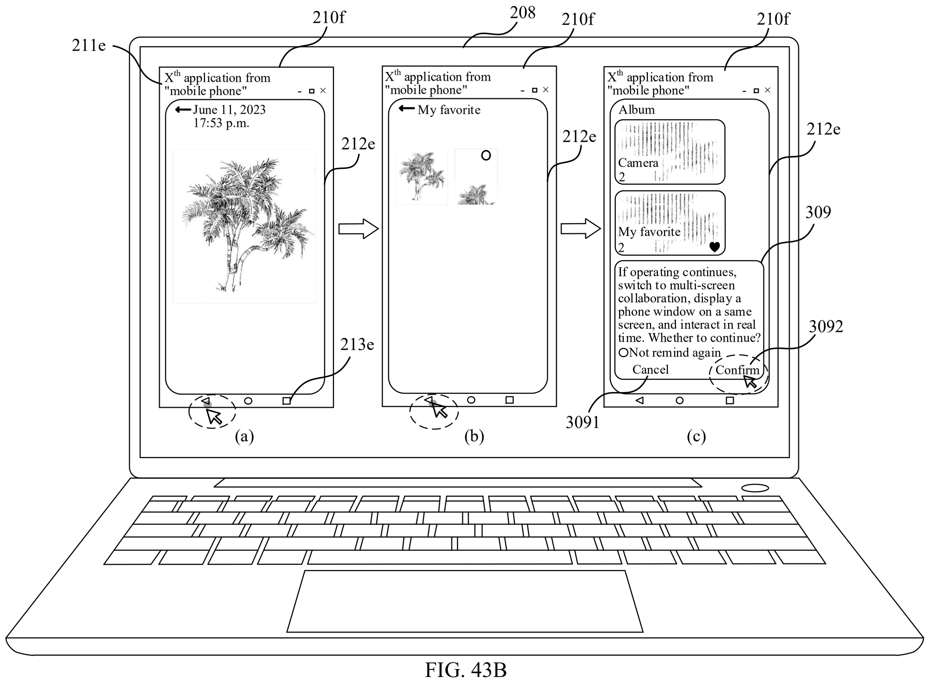

As shown in (a) in FIG. 43B, with the dragging, the PC displays a second window 210f on a second display screen 228. The second window 210f includes at least a first display region 212e, a first navigation bar 213e, and a first title bar 211e. The PC may display a first user interface of the first application in the first display region 212e, and content in the first user interface may be the same as content in the second user interface. The first navigation bar 213e may include a back button, a home screen button, and a multitasking button that are sequentially arranged.

In some embodiments, the user may operate the mouse, move the second cursor to the back button, and click the back button.

When the second cursor clicks the back button in the first title bar 211e, the PC may replace the first user interface in the first display region 212e with a third user interface. The third user interface is a previous-level interface of the first user interface. As shown in (b) of FIG. 43B, in response to clicking the back button, the album application in the first display region 212e returns from an image scaling-up state interface to an image thumbnail interface. This is merely exemplary presentation herein.

In some embodiments, when the second cursor clicks the back button in the first title bar 211e, if the first user interface does not include the third user interface, that is, the first user interface does not have a previous-level interface, the PC displays the first pop-up window 309 in the first display region 212e. The first pop-up window 309 may be located at the bottom of the first display region 212e, and the first pop-up window 309 includes at least a first control 3091 and a second control 3092. The first control 3091 is configured to close the first pop-up window 309. For example, the first control 3091 may be a "Cancel" button. The second control 3092 is configured to enable multi-screen collaboration between the PC and the mobile phone. For example, the second control 3092 may be an "Confirm" button. The multi-screen collaboration herein means that all content on the screen of the mobile phone is completely displayed in the first display region 212e, thereby implementing same-origin screen projection. That is, content displayed in the first display region 212e is the same as content displayed in the mobile phone, and changes as the content displayed in the mobile phone changes.

In some embodiments, the user may operate the mouse, move the second cursor to the first control 3091, and click the first control 3091.

For example, the user may move the mouse to move the second cursor. After moving the second cursor onto the first control 3091, the user may press a mouse button, so that the second cursor clicks the second control 3091.

In response to an operation that the user clicks the first control 3091 by using the mouse, the PC may close the first pop-up window 309.

In some embodiments, the user may operate the mouse, move the second cursor to the second control 3092, and click the second control 3092.

For example, the user may move the mouse to move the second cursor. After moving the second cursor onto the second control 3092, the user may press a mouse button, so that the second cursor clicks the second control 3092.

When the second cursor clicks the second control 3092, the PC may send an eighth event to the mobile phone. The mobile phone may generate a first interface in response to the eighth event and send the first interface to the PC, and the PC may load the first interface, switch content in the first display region 212e to the second element 310, and switch a title displayed in the first title bar 211e from "X^{th} application from "mobile phone"" to "multi-screen collaboration". The second element 310 is used for representing that the PC is loading multi-screen collaboration.

Specifically, the first interface is the same as content currently displayed on the third display screen 304a of the mobile phone, and is a mirroring picture of the third display screen 304a of the mobile phone. In response to the eighth event, the mobile phone may capture complete content currently displayed on the third display screen 304a, to form a first interface, and send the first interface to the PC. The step of loading the first interface may include that the PC receives the first interface. After the first interface is received, it indicates that the first interface is successfully loaded.

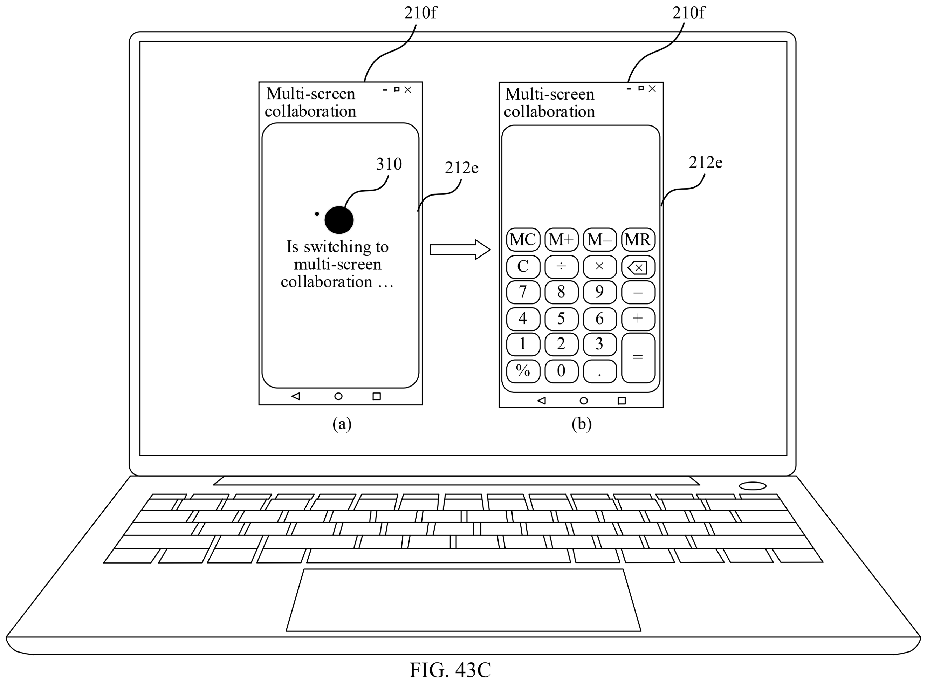

After the first interface is successfully loaded, as shown in (b) in FIG. 43C, the PC may switch the second element 310 in the first display region 212e to the first interface sent by the mobile phone. That is, content in the first display region 212e is the same as content displayed in the third display screen 304a. In this way, the mobile phone and the PC may be switched from a cross-origin screen projection to a same-origin screen projection.

It should be additionally noted that, the second windows 210f in (a), (b), and (c) in FIG. 43B, and (a) and (b) in FIG. 43C sequentially appear in time sequence. For ease of presentation, (a), (b), and (c) are tiled on the second display screen 228 in FIG. 43B, and (a) and (b) are tiled on the second display screen 228 in FIG. 43C. In actual application, if the user does not move the second window 210f, positions of the second windows 210f in (a), (b), and (c) in FIG. 43B and the second windows 210f in (a) and (b) in FIG. 10C on the second display screen 228 coincide with each other.

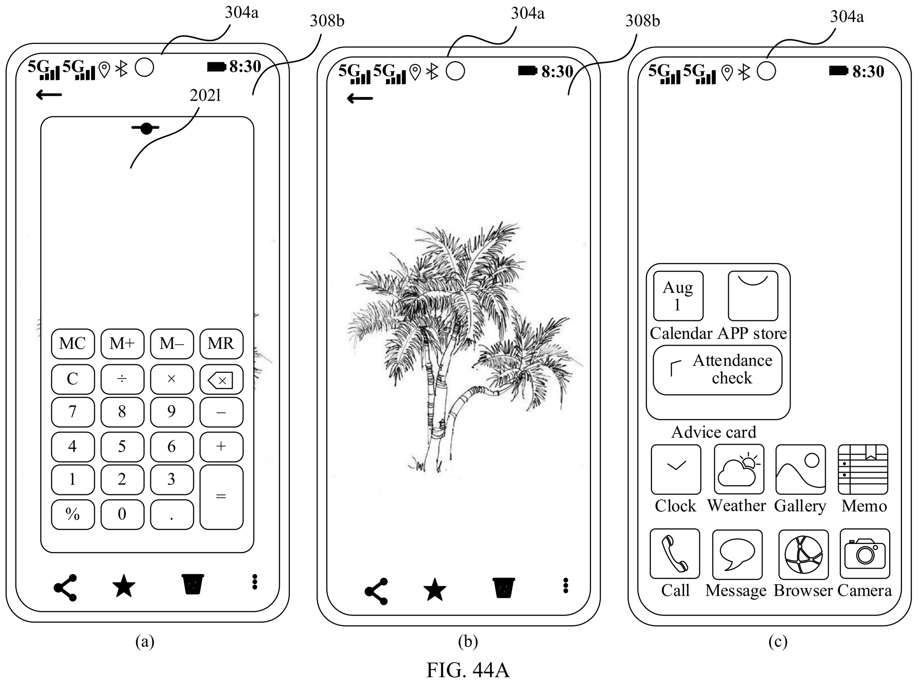

FIG. 44A to FIG. 44C are schematic diagrams of the fifth embodiment of the multi-device collaboration method according to the embodiments of this application.

As shown in (a) of FIG. 44A, a third display screen 304a includes a fourth window 308b displayed in full screen and a first window 2021. A user interface of a third application is displayed in the fourth window 308b, and a second user interface of a first application is displayed in the first window 2021. One of user interfaces of an album application is displayed in a fourth window 308b shown in (a) of FIG. 44A, and the first window 2021 is a floating window of a calculator application. This is merely an exemplary description herein.

As shown in (b) of FIG. 44A, after dragging the first window 2021 to the PC end, the mobile phone displays only the fourth window 308b on the third display screen 304a, and the first window 2021 and the first cursor are hidden.

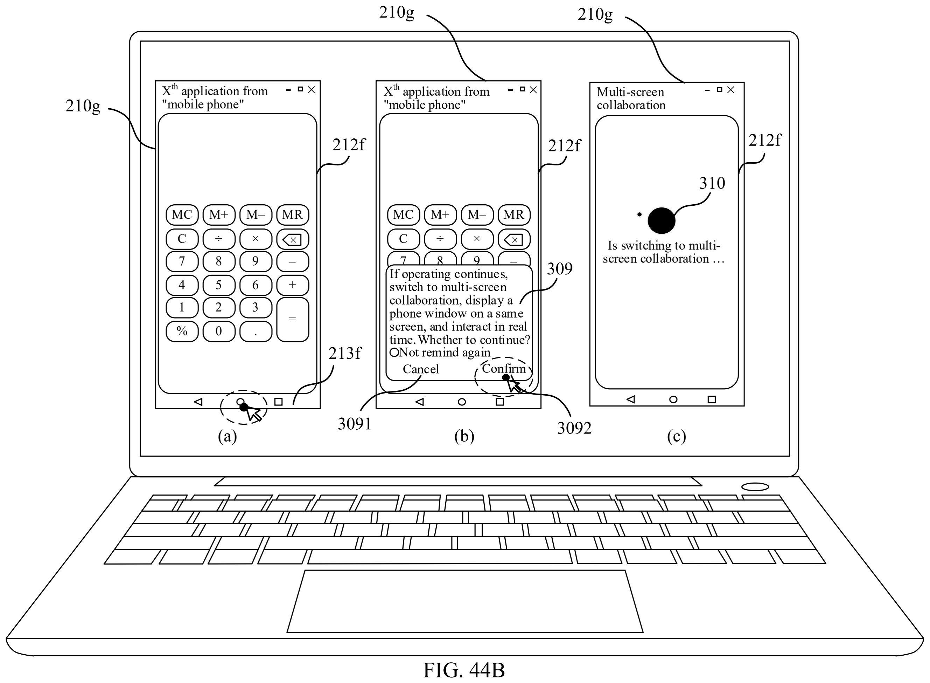

As shown in (a) in FIG. 44B, with the dragging, the PC displays a second window 210g on a second display screen 228. The second window 210g includes at least a first display region 212f and a first navigation bar 213f. The PC may display a first user interface of the first application in the first display region 212f, and content in the first user interface may be the same as content in the second user interface. The first navigation bar 213f may include a back button, a home screen button, and a multitasking button that are sequentially arranged.

In some embodiments, the user may operate the mouse, move the second cursor to the home screen button, and click the home screen button.

When the second cursor clicks the home screen button in the first navigation bar 213f, the PC may display a first pop-up window 309 in the first display region 212f. The first pop-up window 309 includes at least a first control 3091 and a second control 3092.

In some embodiments, as shown in (b) of FIG. 44B, the user may operate the mouse, move the second cursor to the second control 3092, and click the second control 3092.

For example, the user may move the mouse to move the second cursor. After moving the second cursor onto the second control 3092, the user may press a mouse button, so that the second cursor clicks the second control 3092.

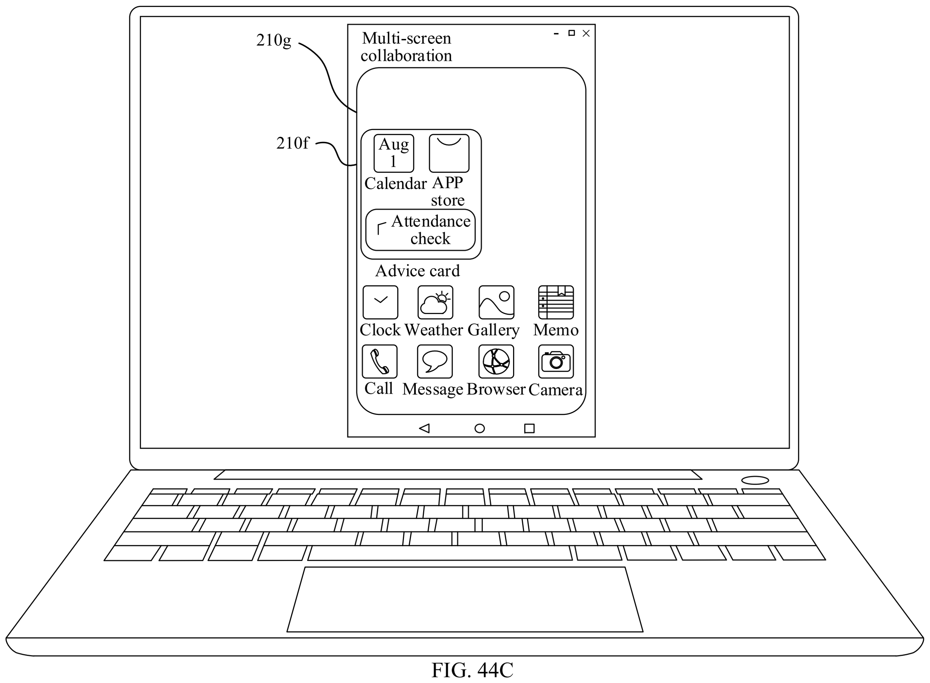

As shown in (c) of FIG. 44A and (c) of FIG. 44B, when the second cursor clicks the second control 3092, the PC may send a ninth event to the mobile phone. In response to the ninth event, the mobile phone may switch the third display screen 304a to display a home screen interface, and the mobile phone may generate a second interface and send the second interface to the PC. In addition, the PC may switch content in the first display region 212f to a second element 310. The second element 310 may be used for representing that the PC is loading multi-screen collaboration.

Specifically, content on the second interface is the same as content on a home screen interface on the third display screen 304a of the mobile phone, and the second interface is a mirroring picture of the third display screen 304a of the mobile phone. In response to the ninth event, the mobile phone may capture complete content currently displayed on the third display screen 304a, to form a second interface, and send the second interface to the PC. The step of loading the first interface may include that the PC receives the second interface. After the second interface is received, it indicates that the second interface is successfully loaded.

After the second interface is successfully loaded, as shown in FIG. 44C, the PC switches the second element 310 in the first display region 212f to display the second interface. That is, content in the first display region 212f and content displayed in the third display screen 304a are the same, and are both on the home screen interface. In this way, the mobile phone and the PC may be switched from a cross-origin screen projection to a same-origin screen projection.

It should be additionally noted that, the second windows 210g in (a), (b), and (c) in FIG. 44B and the second window 210g in FIG. 44C sequentially appear in time sequence. For ease of presentation, (a), (b), and (c) are tiled on the second display screen 228 in FIG. 44B, and the second display screen 228 in FIG. 44C also includes the second window 210g. In actual application, if the user does not move the second window 210g, positions of the second windows 210g in (a), (b), and (c) in FIG. 44B and the second windows 210g in FIG. 44C on the second display screen 228 coincide with each other.

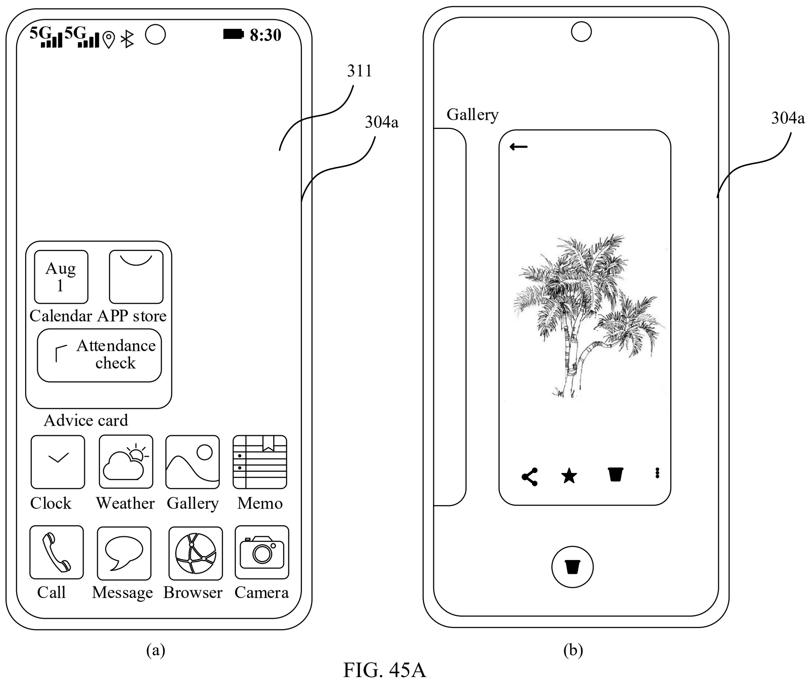

FIG. 45A to FIG. 45C are schematic diagrams of the fifth embodiment of the multi-device collaboration method according to the embodiments of this application.

As shown in (a) of FIG. 45A, a third display screen 304a may include a fifth window 311. The fifth window 311 may display any interface of a mobile phone, which is not specifically limited herein.

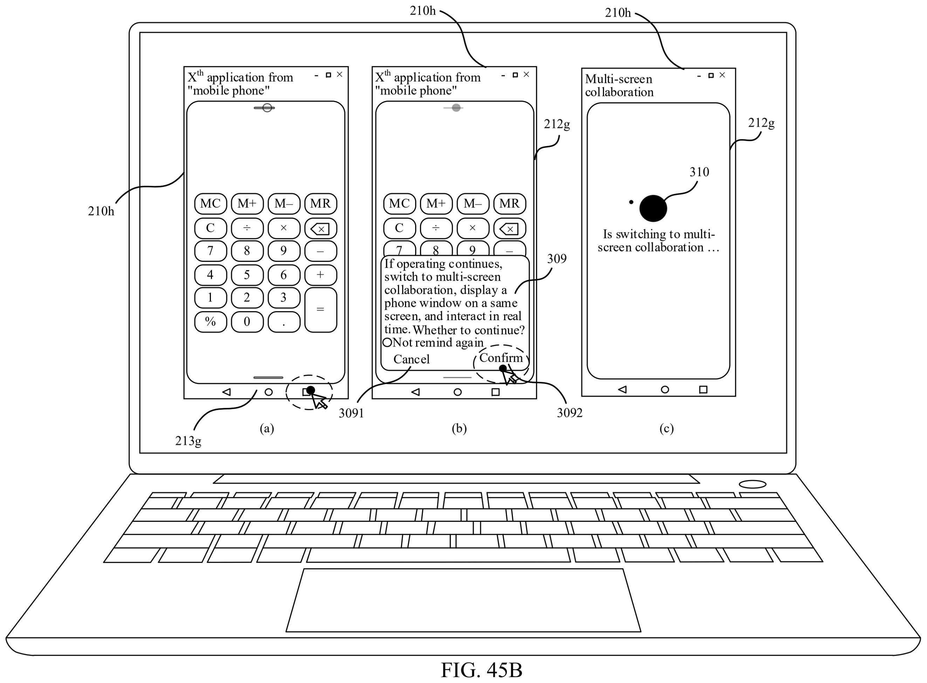

As shown in (a) in FIG. 45B, a second display screen 228 includes a second window 210h, and the second window 210h may be an application window of any application of the mobile phone at a PC end. The second window 210h includes at least a first display region 212g and a first navigation bar 213g. The first navigation bar 213g may include a back button, a home screen button, and a multitasking button that are sequentially arranged.

In some embodiments, the user may operate the mouse, move the second cursor to the multitasking button, and click the multitasking button.

When the second cursor clicks the multitasking button in the first navigation bar 213g, the PC may display a first pop-up window 309 in the first display region 212g. The first pop-up window 309 includes at least a first control 3091 and a second control 3092.

In some embodiments, as shown in (b) of FIG. 45B, the user may operate the mouse, move the second cursor to the second control 3092, and click the second control 3092.

For example, the user may move the mouse to move the second cursor. After moving the second cursor onto the second control 3092, the user may press a mouse button, to click the second control 3092.

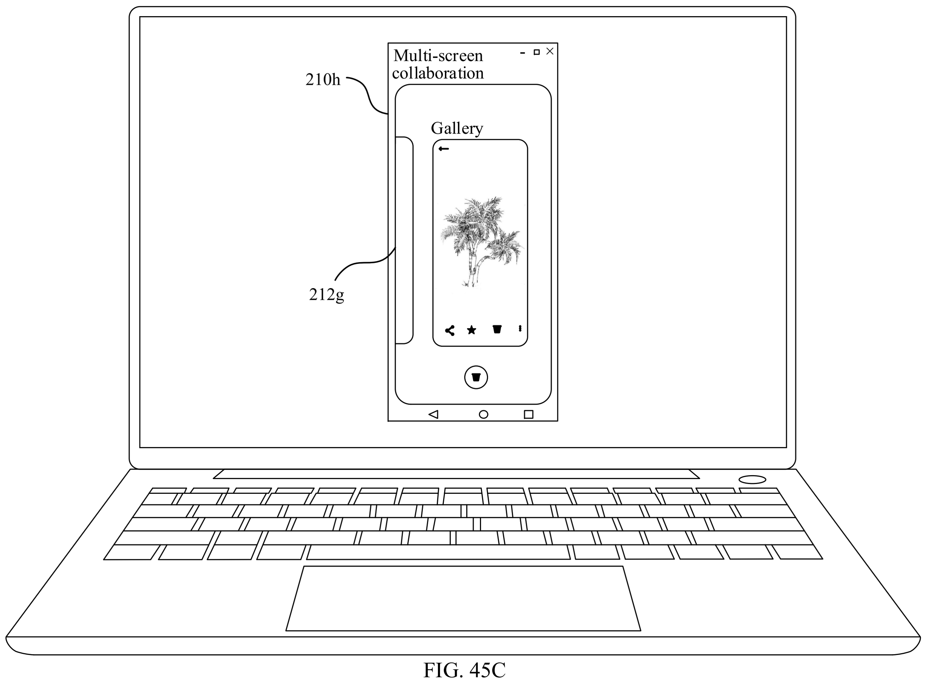

As shown in (b) of FIG. 45A and (c) of FIG. 45B, when the second cursor clicks the second control 3092, the PC may send a tenth event to the mobile phone. In response to the tenth event, the mobile phone may switch the third display screen 304a to display a multitasking interface, and the mobile phone may generate a second interface and send the second interface to the PC. In addition, the PC may display the second element 310 in the first display region 212g.

The multitasking interface shows all background programs currently running on the mobile phone. The second element 310 may be used for representing that the PC is loading multi-screen collaboration.

Specifically, the second interface has the same content as that on a multitasking interface on the third display screen 304a of the mobile phone, and is a mirroring picture of the third display screen 304a of the mobile phone. When the second cursor clicks the second control 3092, the mobile phone may capture complete content currently displayed on the third display screen 304a, to form a second interface, and send the second interface to the PC. The step of loading the first interface may include that the PC receives the second interface. After the second interface is received, it indicates that the second interface is successfully loaded.

After the second interface is successfully loaded, as shown in FIG. 45C, the PC switches the second element 310 in the first display region 212g to display the second interface. That is, content in the first display region 212g and content displayed in the third display screen 304a are the same, and are both on the multitasking interface. In this way, the mobile phone and the PC may be switched from a cross-origin screen projection to a same-origin screen projection.

It should be additionally noted that, the second windows 212h in (a), (b), and (c) in FIG. 45B and the second window 212h in FIG. 45C sequentially appear in time sequence. For ease of presentation, (a), (b), and (c) are tiled on the second display screen 228 in FIG. 45B, and the second display screen 228 in FIG. 45C also includes the second window 210h. In actual application, if the user does not move the second window 210h, positions of the second windows 212h in (a), (b), and (c) in FIG. 45B and the second windows 210h in FIG. 45C on the second display screen 228 coincide with each other.

It should be additionally noted that, when the first device is a tablet computer, content displayed in the display region may also be changed based on a button on the navigation bar. For a specific process, refer to the foregoing content. Details are not described again in this embodiment of this application.

The following describes a sixth embodiment of the multi-device collaboration method of the embodiments of this application with reference to the accompanying drawings. This embodiment may be applied to a multi-device collaboration system in which the first device is a foldable mobile phone, the second device is a PC, and the input device is a mouse.

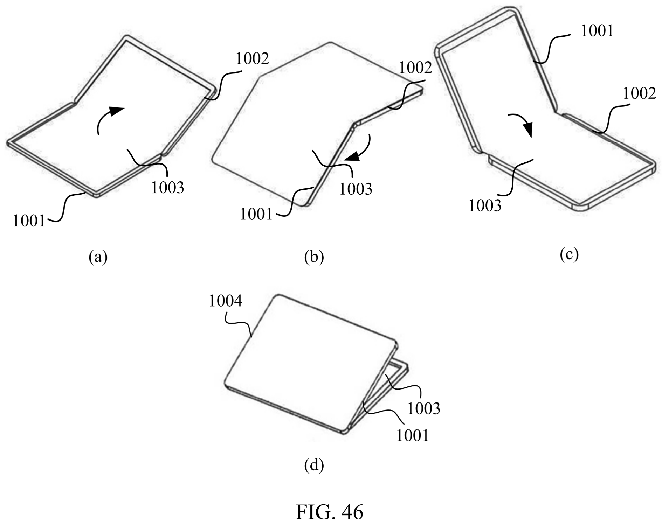

FIG. 46 is a schematic diagram of a foldable mobile phone according to an embodiment of this application.

As shown in FIG. 46, the foldable mobile phone is an electronic device whose display screen can be bent 360 degrees. The foldable mobile phone usually includes: a first body 1001, a second body 1002 connected to the first body 1001 through rotation of a rotating shaft, and a fourth display screen 1003 disposed on a side of the first body 1001 and the second body 1002. Based on the foregoing structure, the foldable mobile phone may be set to a folded-in foldable mobile phone shown in (a) in FIG. 46, a folded-out foldable mobile phone shown in (b) in FIG. 46, and a folded-up foldable mobile phone shown in (c) in FIG. 46. The folded-out foldable mobile phone may enable, through relative rotation between the first body 1001 and the second body 1002, the folded fourth display screen 1003 to face a user side. The folded-in foldable mobile phone and the folded-up foldable mobile phone may enable, through relative rotation between the first body 1001 and the second body 1002, the folded fourth display screen 1003 to face away from a user side.

As shown in (d) of FIG. 46, the folded-in foldable mobile phone further includes a fifth display screen 1004, the fifth display screen 1004 is located at a back surface of the fourth display screen 1003, and the fifth display screen 1004 is fixed to the first body 1001. After the first body 1001 and the second body 1002 are relatively rotated and folded, the fifth display screen 1004 faces a user side.

In the multi-device collaboration method provided in this embodiment of this application, for a folded-in foldable mobile phone, for the step of dragging the application window on the fourth display screen 1003, refer to the part of dragging a window in a landscape state of the tablet computer, and for the step of dragging the application window on the fifth display screen 1004, refer to the part of dragging a window in a landscape state or a portrait state of the non-foldable mobile phone. For a folded-out foldable mobile phone, for the step of dragging the application window on the fourth display screen 1003, refer to the part of dragging a window in a landscape state of the tablet computer. For a folded-up foldable mobile phone, for the step of dragging the application window on the fourth display screen 1003, refer to the part of dragging a window in a landscape state or a portrait state of the non-foldable mobile phone. Details are not described herein.

The multi-device collaboration system provided in this embodiment of this application may further include a third device. The first device, the second device, and the third device may establish keyboard and mouse sharing, and the input device is configured to control the first device, the second device, and the third device. The third device is, for example, a tablet computer or a smartphone. The multi-device collaboration system provided in this embodiment of this application may be configured to perform a multi-device collaboration method.

It may be understood that after keyboard and mouse sharing is established, the first device, the second device, and the third device have a relative position relationship. For example, the first device is located at a right side of the second device, and the third device is located at a left side of the second device.

In some implementations, after the first device, the second device, and the third device establish keyboard and mouse sharing, the input device may be configured to control the first device, the second device, and the third device. For example, when the input device is a mouse, the first device may display a first cursor on the display screen of the first device. As the user moves the mouse in a direction close to the second device, the mouse is switched from controlling the first device to controlling the second device. This process may also be referred to as mouse traversal. After the mouse traverses from the first device to the second device, the first device hides the first cursor, and the second device may display the second cursor on the display screen of the second device. As the user moves the mouse in a direction close to the third device, the mouse is switched from controlling the second device to controlling the third device. After the mouse traverses from the second device to the third device, the second device hides the second cursor, and the third device may display the third cursor on the display screen of the third device.

The following describes a seventh embodiment of the multi-device collaboration method of the embodiments of this application with reference to the accompanying drawings.

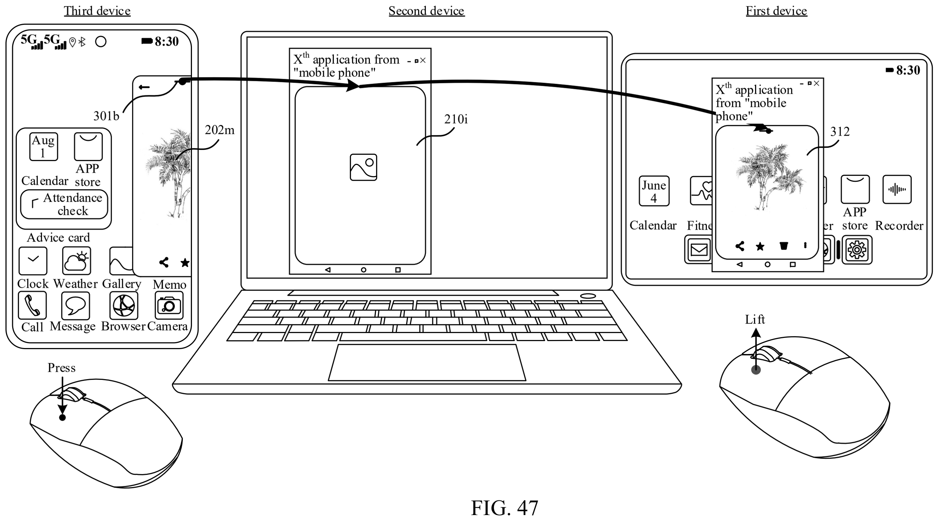

FIG. 47 is a schematic diagram of the seventh embodiment of the multi-device collaboration method according to the embodiments of this application. This embodiment may be applied to a multi-device collaboration system in which the first device is a tablet computer, the second device is a PC, the third device is a mobile phone, and the input device is a mouse.

As shown in FIG. 47, the display screen of the mobile phone includes a first window 202m, the first window 202m may be a floating window of a first application, and the first application may be any application already installed in the third device. A second floating button 301b may be included at a top middle position of the first window 202m. The second floating button 301b may be configured to implement a function such as moving the first window 202m.

In some embodiments, the user may operate the mouse, move the third cursor to the second floating button 301b, and drag the second floating button 301b along a third direction. The third direction is a direction close to the PC.

For example, the user may move the mouse to move the third cursor. After moving the third cursor onto the second floating button 301b, the user may press a mouse button, and then keep the pressing action to drag the second floating button 301b along the third direction.

In response to a user operation, the mobile phone may hide the first window 202m, and the PC may display a second window 210i. The second window 210i is an application window of the first application at the PC end.

Further, the user may operate the mouse to drag the second window 210i along the third direction.

For example, the user may keep a state of pressing the mouse button and drag the second window 210i along the third direction.

In response to a user operation, the PC may hide the second window 210i, and the tablet computer may display a sixth window 312. The sixth window 312 is an application window of the first application at a tablet computer end.

It can be learned that the multi-device collaboration method provided in this embodiment of this application may enable the application window in the third device to be dragged to the first device across the second device, which may provide convenient use experience for the user.

In the multi-device collaboration method provided in this embodiment of this application, the display screen of the second device may include a plurality of application windows, and the plurality of application windows may correspond to a plurality of applications of the first device and/or the second device. In this way, in terms of vision and use experience on a user side, it is equivalent to that the plurality of application windows are dragged to the second device, so that user experience can be improved.

In some implementations, the display screen of the second device may include a first application window, and the first application window is an application window of a fourth application, in the second device, that is in the first device or the third device. Further, when an application window of a fifth application in the first device or the third device is dragged to the second device, the second device may close the first application window. Further, the second device may create a second application window. The second application window is an application window of the fifth application in the second device. After the second device closes the first application window, the user may continue to use the fourth application in the first device or the third device. That is, the second device includes an application window of an application of only one other device.

In some implementations, for some applications supporting intra-application split-screen, after the applications are dragged to a PC end, if content displayed in an application window of the applications is in a portrait or landscape state, a user may switch the portrait or landscape state to an intra-application split-screen form. This is not specifically limited in this embodiment of this application.

The solutions of the multi-device collaboration method provided in this application are described in the foregoing embodiments provided in this application. It can be understood that to implement the above functions, the electronic device includes corresponding hardware structures and/or software modules for executing the functions. A person skilled in the art should be easily aware that, in combination with the units and algorithm steps of the examples described in the embodiments disclosed in this specification, this application can be implemented in a form of hardware or a combination of hardware and computer software. Whether a specific function is performed by hardware or hardware driven by computer software depends on a particular application and a design constraint of the technical solutions. A person skilled in the art may use different methods to implement the described functions for each particular application, but it shall not be considered that the implementation goes beyond the scope of this application.

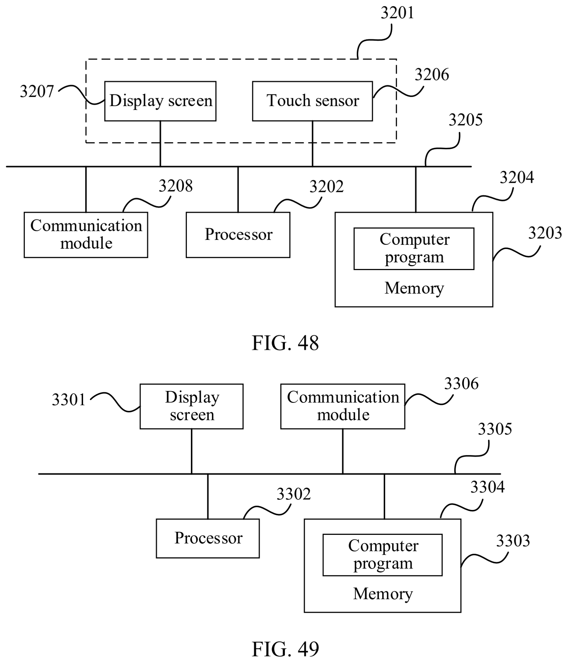

FIG. 48 is a schematic structural diagram of a first electronic device according to an embodiment of this application.

As shown in FIG. 48, an embodiment of this application discloses an electronic device. The electronic device is equipped with a first operating system, and is, for example, the foregoing tablet computer, a smartphone, a large-screen device (such as a smart screen or a smart television), or a wearable device (such as a smart band or a smart watch). The electronic device may specifically include: a touchscreen 3201, where the touchscreen 3201 includes a touch sensor 3206 and a display screen 3207; one or more processors 3202; a memory 3203; a communication module 3208; one or more applications (not shown); and one or more computer programs 3204. The foregoing devices may be connected by using one or more communication buses 3205. The one or more computer programs 3204 are stored in the memory 3203 and configured to be executed by the one or more processors 3202. The one or more computer programs 3204 include instructions, and the instructions may be used to execute related steps executed by the source device in the foregoing embodiment.

FIG. 49 is a schematic structural diagram of a second electronic device according to an embodiment of this application.

As shown in FIG. 49, an embodiment of this application discloses an electronic device. The electronic device is equipped with a second operating system, and is, for example, the foregoing personal computer PC. The electronic device may specifically include: a display screen 3301; one or more processors 3302; a memory 3303; a communication module 3306; one or more applications (not shown); and one or more computer programs 3304. The foregoing devices may be connected by using one or more communication buses 3305. The one or more computer programs 3304 are stored in the memory 3303 and configured to be executed by the one or more processors 3302. The one or more computer programs 3304 include instructions, and the instructions may be used to execute related steps executed by the destination device in the foregoing embodiment. What is described above is merely specific embodiments of this application, but the protection scope of this application is not limited to such embodiments. Any variation or replacement within the technical scope disclosed herein still fall within the protection scope of this application. Therefore, the protection scope of this application shall be subject to the protection scope of the claims.

## Claims

1. A multi-device collaboration method, comprising:
displaying, by a first electronic device, a first window, a first cursor, and a first taskbar on a first desktop, wherein the first electronic device is equipped with a first operating system, the first electronic device is connected to an input device, and the first window is a window matching the first operating system;
in a process in which the first cursor drags the first window to move toward a first screen edge of the first electronic device,
when a first window edge of the first window does not reach the first screen edge, the first window edge moves toward the first screen edge, and the first window edge is a window edge on a side of the first window close to the first screen edge; and
when the first window edge moves out of the first screen edge and the first cursor does not reach the first screen edge, the first electronic device moves the first window, to move a part of the first window out of the first screen edge;
hiding, by the first electronic device, the first cursor and the first window when the first cursor moves out from the first screen edge to a second screen edge of a second electronic device, and displaying, by the second electronic device, an extended window and a second cursor at the second screen edge and displaying a transient page in the extended window, wherein the second electronic device is equipped with a second operating system, the second electronic device is connected to the input device, and the extended window is a window matching the second operating system;
displaying, by the second electronic device in a process in which the second cursor drags the extended window to move in a direction away from the second screen edge, a part of the extended window moved into the second screen edge; and
displaying, by the second electronic device in response to a release operation performed by a user on the second cursor and the extended window, a second desktop in the extended window, and displaying a second taskbar and a maximally displayed second window on the second desktop, wherein the second desktop is obtained by projecting the first desktop, content of the second window is the same as that of the first window, and content of the second taskbar is the same as that of the first taskbar.

2. The multi-device collaboration method according to claim 1, wherein after the hiding, by the first electronic device, the first cursor and the first window when the first cursor moves out from the first screen edge to a second screen edge of a second electronic device, and displaying, by the second electronic device, an extended window and a second cursor at the second screen edge and displaying a transient page in the extended window, the multi-device collaboration method further comprises:
in a process in which the second cursor drags the extended window to move toward the second screen edge,
moving, by the second electronic device, the extended window when a second window edge of the extended window moves in a direction close to the second screen edge and the second cursor does not reach the second screen edge, to move a part of the extended window out of the second screen edge, wherein a direction of the second window edge is the same as that of the first window edge;
hiding, by the second electronic device, the second cursor and the extended window when the second cursor moves out from the second screen edge to the first screen edge of the first electronic device, and displaying, by the first electronic device, the first cursor and the first window at the first screen edge; and
displaying, by the first electronic device, the first window on the first desktop in response to a release operation performed by the user on the first cursor and the first window.

3. The multi-device collaboration method according to claim 1, wherein the displaying, by the second electronic device in response to a release operation performed by a user on the second cursor and the extended window, a second desktop in the extended window, and displaying a second taskbar and a maximally displayed second window on the second desktop comprises:
displaying, by the second electronic device in response to the release operation performed by the user on the second cursor and the extended window, a loading page in the extended window, displaying the second desktop after loading of the second desktop is completed, and displaying, on the second desktop, the second taskbar and the maximally displayed second window, wherein the loading page is used for indicating that the second electronic device is loading the second desktop.

4. The multi-device collaboration method according to claim 3, wherein after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
moving, by the second electronic device, the second window on the second desktop in response to a drag operation performed by the user on the second window in the extended window.

5. The multi-device collaboration method according to claim 1, wherein a top region of the extended window comprises a first floating button, and the first floating button is used for moving the extended window; and
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
moving, by the second electronic device, the extended window in response to a drag operation performed by the user on the first floating button.

6. The multi-device collaboration method according to claim 1, wherein a bottom region of the extended window comprises a second floating button, and the second floating button is used for maximally displaying the extended window or minimally displaying the extended window; and
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
minimally displaying, by the second electronic device, the extended window in response to a slide-up operation performed by the user on the second floating button;
or maximally displaying, by the second electronic device, the extended window in response to a slide-down operation performed by the user on the second floating button.

7. The multi-device collaboration method according to claim 1, wherein a top region of the extended window comprises a maximization button, a minimization button, and a close button; and
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
maximally displaying, by the second electronic device, the extended window in response to a click operation performed by the user on the maximization button;
or minimally displaying, by the second electronic device, the extended window in response to a click operation performed by the user on the minimization button;
or closing, by the second electronic device, the extended window in response to a click operation performed by the user on the close button.

8. The multi-device collaboration method according to claim 1, wherein
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
extending and displaying, by the second electronic device, the extended window in response to a stretching operation performed by the user on a window edge of the extended window;
or scaling and displaying, by the second electronic device, the extended window in response to a scaling operation performed by the user on a window edge of the extended window.

9. The multi-device collaboration method according to claim 1, wherein
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
displaying, by the first electronic device, a third window on the first desktop, wherein the third window is a window matching the first operating system;
in a process in which the first cursor drags the third window to move toward the first screen edge of the first electronic device,
when a third window edge of the third window does not reach the first screen edge, the third window edge moves toward the first screen edge, and the third window edge is a window edge on a side of the third window close to the first screen edge; and
when the third window edge moves out of the first screen edge and the first cursor does not reach the first screen edge, the first electronic device moves the third window, to move a part of the third window out of the first screen edge, wherein content of the third window is different from that of the first window;
hiding, by the first electronic device, the first cursor when the first cursor moves out from the first screen edge to a second screen edge of a second electronic device, and displaying, by the second electronic device, a second cursor at the second screen edge and displaying a fourth window in the extended window, wherein content of the fourth window is the same as content of a part of the third window moved out of the first screen edge; and
releasing, by the second electronic device, the fourth window in the extended window in response to a release operation performed by the user on the second cursor and the fourth window.

10. The multi-device collaboration method according to claim 9, wherein
after the hiding, by the first electronic device, the first cursor when the first cursor moves out from the first screen edge to a second screen edge of a second electronic device, and displaying, by the second electronic device, a second cursor at the second screen edge and displaying a fourth window in the extended window, the multi-device collaboration method further comprises:
in a process in which the second cursor drags the fourth window to move toward a fourth window edge of the extended window,
moving, by the second electronic device, the fourth window when a fifth window edge of the fourth window moves in a direction close to the fourth window edge and the second cursor does not reach the second screen edge, to move a part of the fourth window out of the second screen edge, wherein a direction of the fourth window edge is opposite to that of the first window edge, and a direction of the fifth window edge is the same as that of the first window edge; and
hiding, by the second electronic device, the second cursor and the extended window when the second cursor moves out from the second screen edge to the first screen edge of the first electronic device, and displaying, by the first electronic device, the first cursor and the third window at the first screen edge; and
displaying, by the first electronic device, the third window on the first desktop in response to a release operation performed by the user on the first cursor and the third window.

11. The multi-device collaboration method according to claim 6 or 7, wherein after the minimally displaying, by the second electronic device, the extended window, the multi-device collaboration method further comprises:
displaying, by the first electronic device, a third window on the first desktop, wherein the third window is a window matching the first operating system;
in a process in which the first cursor drags the third window to move toward the first screen edge of the first electronic device,
when a third window edge of the third window does not reach the first screen edge, the third window edge moves toward the first screen edge, and the third window edge is a window edge on a side of the third window close to the first screen edge; and
when the third window edge moves out of the first screen edge and the first cursor does not reach the first screen edge, the first electronic device moves the third window, to move a part of the third window out of the first screen edge, wherein content of the third window is different from that of the first window;
hiding, by the first electronic device, the first cursor when the first cursor moves out from the first screen edge to a second screen edge of a second electronic device, and displaying, by the second electronic device, a second cursor at the second screen edge, waking the extended window from a background, and displaying a fourth window in the extended window, wherein content of the fourth window is the same as content of a part of the third window moved out of the first screen edge; and
releasing, by the second electronic device, the fourth window in the extended window in response to a release operation performed by the user on the second cursor and the fourth window.

12. The multi-device collaboration method according to claim 1, wherein when the extended window is displayed in a floating window form, a window edge of the extended window comprises a first toolbar button; and
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
displaying, by the second electronic device, a first toolbar at the window edge of the extended window in response to a click operation performed by the user on the first toolbar button.

13. The multi-device collaboration method according to claim 6 or 7, wherein the maximally displaying, by the second electronic device, the extended window comprises:
displaying, by the second electronic device, a second toolbar at a window edge of the extended window.

14. The multi-device collaboration method according to claim 1, wherein the extended window comprises a toolbar, the toolbar comprises a mode switching button, and the mode switching button is used for switching from a screen extension mode to a screen mirroring mode or switching from a screen mirroring mode to a screen extension mode, wherein when the extended window displays the second desktop, and displays the second taskbar and the maximally displayed second window on the second desktop, the extended window is in the screen extension mode; and
after the displaying, by the second electronic device in response to a release operation performed by a user on the second cursor and the extended window, a second desktop in the extended window, and displaying a second taskbar and a maximally displayed second window on the second desktop, the multi-device collaboration method further comprises:
changing, by the second electronic device in the extended window in response to a first click operation performed by the user on the mode switching button, from displaying the second taskbar and the maximally displayed second window to displaying a current page of a display screen of the first electronic device, to cause the extended window to be in the screen mirroring mode.

15. The multi-device collaboration method according to claim 14, wherein after the changing, by the second electronic device in the extended window in response to a first click operation performed by the user on the mode switching button, from displaying the second taskbar and the maximally displayed second window to displaying a current page of a display screen of the first electronic device, the multi-device collaboration method further comprises:
changing, by the second electronic device in the extended window in response to a second click operation performed by the user on the mode switching button, from displaying the current page of the display screen of the first electronic device to displaying the second taskbar and the maximally displayed second window, to cause the extended window to be in the screen extension mode.

16. The multi-device collaboration method according to claim 6 or 7, wherein after the maximally displaying, by the second electronic device, the extended window, the multi-device collaboration method further comprises:
displaying, by the second electronic device, a third floating button in the top region of the extended window in response to an operation of moving the second cursor to the top region of the extended window by the user;
displaying, by the second electronic device, a floating window option control in the top region of the extended window in response to a click operation performed by the user on the third floating button, wherein the floating window option control comprises a first sub-button and a second sub-button, the first sub-button is used for displaying the extended window in a full-screen form, and the second sub-button is used for switching the extended window to be displayed in a floating window form;
highlighting, by the second electronic device, the first sub-button in response to that the second electronic device displays the floating window option control; and
changing, by the second electronic device in response to a click operation performed by the user on the second sub-button, from displaying the extended window in the full-screen form to displaying the extended window in the floating window form.

17. The multi-device collaboration method according to claim 6 or 7, wherein after the maximally displaying, by the second electronic device, the extended window, the multi-device collaboration method further comprises:
displaying, by the second electronic device, a third floating button in the top region of the extended window in response to an operation of moving the second cursor to the top region of the extended window by the user;
changing, by the second electronic device in response to a drag operation performed by the user on the third floating button, from displaying the extended window in the full-screen form to displaying the extended window in the floating window form.

18. A multi-device collaboration method, comprising:
displaying, by a first device, a first window of a first application and a first cursor that is located on the first window, the first device is equipped with a first operating system, and the first window is a window matching the first operating system;
in a process in which the first cursor drags the first window to move toward a first screen edge of the first device,
moving, by the first device, the first window when a window edge of the first window does not reach the first screen edge;
hiding, by the first device, a part of the first window located outside the first screen edge when the window edge of the first window moves out of the first screen edge and the first cursor does not reach the first screen edge; and
hiding, by the first device, the first cursor and the first window when the first cursor moves out from the first screen edge to a second screen edge of a second device, and displaying, by the second device at the second screen edge, a part of a second window and a second cursor located on the part of the second window, wherein the second device is equipped with a second operating system, the second window is a window matching the second operating system, and an orientation of the first screen edge is opposite to that of the second screen edge; and
in a process in which the second cursor drags the second window to move in a direction away from the second screen edge,
displaying, by the second device when a partial window of the second window moves into the second screen edge, the partial window moved into the second screen edge; and
loading, by the second device, a first user interface of the first application when the second cursor releases the second window, and displaying the first user interface in the second window.

19. The multi-device collaboration method according to claim 18, wherein after the hiding, by the first device, the first cursor and the first window when the first cursor moves out from the first screen edge to a second screen edge of a second device, and displaying, by the second device at the second screen edge, a part of a second window and a second cursor located on the part of the second window, the multi-device collaboration method further comprises:
in a process in which the second cursor drags the second window to move toward the second screen edge,
hiding, by the second device, a part of the second window located outside the second screen edge when a window edge of the second window moves out of the second screen edge and the second cursor does not reach the second screen edge;
hiding, by the second device, the second cursor and the second window when the second cursor moves out from the second screen edge to the first screen edge, and displaying, by the first device, the first window and the first cursor located on the first window; and
displaying, by the first device, a second user interface of the first application in the first window when the first cursor releases the first window.

20. The multi-device collaboration method according to claim 18, wherein
the second window comprises a first display region;
when the second device displays, at the second screen edge, the part of the second window and the second cursor located on the part of the second window, the first display region comprises a first icon, and the first icon is an icon of the first application; and the first icon is located outside the second screen edge.

21. The multi-device collaboration method according to claim 20, wherein the loading, by the second device, a first user interface of the first application when the second cursor releases the second window comprises:
loading, by the second device, the first user interface when the second cursor releases the second window, and replacing the first icon in the first display region with a first element, wherein the first element is used for indicating that the second device is loading the first user interface; and
replacing, by the second device, the first element in the first display region with the first user interface after the first user interface is successfully loaded.

22. The multi-device collaboration method according to claim 21, wherein the first device is in a landscape display state, the first window is a full-screen display window, the first window comprises a second user interface of the first application and a first floating button, content in the first user interface is the same as that in the second user interface, and the first floating button is used for moving the first window; and
the moving, by the first device in a process in which the first cursor drags the first window to move toward a first screen edge of the first device, the first window when a window edge of the first window does not reach the first screen edge comprises:
scaling out, by the first device, the first window when the first cursor drags the first floating button, and replacing the second user interface in the first window with the first icon; and
moving, by the first device, the scaled-down first window when the first cursor does not reach a first screen region and the scaled-down first window does not reach the first screen edge, wherein the first screen region is a partial region using the first screen edge as an edge.

23. The multi-device collaboration method according to claim 22, wherein after the moving, by the first device, the scaled-down first window when the first cursor does not reach a first screen region and the scaled-down first window does not reach the first screen edge, the multi-device collaboration method further comprises:
scaling up, by the first device, the scaled-down first window when the first cursor moves to the first screen region, wherein a size of the first window after being scaled up is less than a size of the first window before being scaled down.

24. The multi-device collaboration method according to claim 22, wherein before the scaling out, by the first device, the first window when the first cursor drags the first floating button, and replacing the second user interface in the first window with the first icon, the multi-device collaboration method further comprises:
switching, by the first device, the first floating button from a hidden state to a displayed state when the first cursor moves to a second screen region of the first device.

25. The multi-device collaboration method according to claim 21, wherein the first window is a floating window, the first window comprises a second user interface of the first application and a second floating button, content in the first user interface is the same as that in the second user interface, and the second floating button is used for moving the first window.

26. The multi-device collaboration method according to claim 21, wherein the first window and a third window are disposed in parallel in a display screen of the first device, the first window comprises a second user interface of the first application and a third floating button, the first user interface is an extended interface of the second user interface, or content of the first user interface is the same as that of the second user interface, and the third floating button is used for moving the first window; and
the moving, by the first device in a process in which the first cursor drags the first window to move toward a first screen edge of the first device, the first window when a window edge of the first window does not reach the first screen edge comprises:
scaling out, by the first device, the first window when the first cursor drags the third floating button; and
moving, by the first device, the scaled-down first window when a window edge of the scaled-down first window does not reach the first screen edge.

27. The multi-device collaboration method according to claim 26, wherein after the hiding, by the first device, the first cursor and the first window when the first cursor moves out from the first screen edge to a second screen edge of a second device, the multi-device collaboration method further comprises:
scaling up, by the first device, the third window into a full-screen display window.

28. The multi-device collaboration method according to claim 20, wherein the second window further comprises a first title bar and a first navigation bar, the first title bar comprises a minimization button, a maximization button, and a close button, and the first navigation bar comprises a back button, a home screen button, and/or a multitasking button.

29. The multi-device collaboration method according to claim 28, further comprising:
replacing, by the second device, the first user interface in the first display region with a third user interface when the second cursor clicks the back button in the first navigation bar, wherein the third user interface is a previous-level interface of the first user interface.

30. The multi-device collaboration method according to claim 29, further comprising:
displaying, by the second device when the second cursor clicks the back button in the first navigation bar, a first pop-up window in the first display region if the first user interface does not comprise the third user interface, wherein the first pop-up window comprises at least a first control and a second control;
closing, by the second device, the first pop-up window when the second cursor clicks the first control;
or loading, by the second device, a first interface when the second cursor clicks the second control, and switching content in the first display region to a second element, wherein the first interface is the same as content currently displayed by the first device, and the second element is used for indicating that the first interface is being loaded; and
replacing, by the second device, the second element in the first display region with the first interface after the first interface is successfully loaded.

31. The multi-device collaboration method according to claim 30, further comprising:
displaying, by the second device, the first pop-up window in the first display region when the second cursor clicks the home screen button or the multitasking button in the first navigation bar;
displaying, by the first device, a home screen interface or a multitasking interface when the second cursor clicks the second control, and loading, by the second device, a second interface and switching the content in the first display region to the second element, wherein the multitasking interface comprises all background programs currently running in the first device; and content in the second interface is the same as that in the home screen interface or the multitasking interface, and the second element is used for indicating that the second interface is being loaded; and
replacing, by the second device, the second element in the first display region with the second interface after the second interface is successfully loaded.

32. The multi-device collaboration method according to claim 18, wherein an input device is further comprised, and the input device is configured to connect to the first device and the second device;
the first device displays the first cursor when the input device is connected to the first device; and
the second device displays the second cursor when the input device is connected to the second device.

33. An electronic device, wherein the electronic device is equipped with a first operating system; and
the electronic device comprises: a display screen;
one or more processors;
a memory; and
a communication module, wherein
the memory stores one or more computer programs, the one or more computer programs comprises instructions, and when the instructions are executed by the electronic device, the electronic device is enabled to perform the multi-device collaboration method according to any one of claims 1 to 32.

34. An electronic device, wherein the electronic device is equipped with a second operating system; and
the electronic device comprises: a display screen;
one or more processors;
a memory; and
a communication module, wherein
the memory stores one or more computer programs, the one or more computer programs comprises instructions, and when the instructions are executed by the electronic device, the electronic device is enabled to perform the multi-device collaboration method according to any one of claims 1 to 32.

35. A multi-device collaboration system, comprising a first electronic device, a second electronic device, and an input device, wherein the first electronic device comprises the electronic device according to claim 33, and the second electronic device comprises the electronic device according to claim 34.
